# EUROPÄISCHE PATENTSCHRIFT

(11) **EP 4 095 314 B1**
(45) Veröffentlichungstag und Bekanntmachung des Hinweises auf die Patenterteilung: **27.12.2023**
(21) Anmeldenummer: 22170095.8
(22) Anmeldetag: 26.04.2022
(51) Int. Cl.: E01C 19/00, E01C 19/26, E01C 19/28, E01C 19/35

(54) **VERFAHREN ZUM STEUERN DES FAHRBETRIEBS EINER SELBSTFAHRENDEN BODENVERDICHTUNGSMASCHINE UND BODENVERDICHTUNGSMASCHINE**
METHOD FOR CONTROLLING THE DRIVING OPERATION OF A SELF-PROPELLED SOIL COMPACTION MACHINE AND SOIL COMPACTION MACHINE
PROCÉDÉ DE COMMANDE DU MODE DE FONCTIONNEMENT D'UNE MACHINE DE COMPACTAGE DU SOL AUTONOME ET MACHINE DE COMPACTAGE DU SOL

(30) Priorität: 26.05.2021 DE 102021002728
(43) Veröffentlichungstag der Anmeldung: 30.11.2022
(73) Patentinhaber: BOMAG GmbH, 56154 Boppard (DE)
(72) Erfinder: Decker, Peter, 56154 Boppard (DE); Löw, Timo, 56154 Boppard (DE)
(74) Vertreter: Zimmermann & Partner Patentanwälte mbB

(56) Entgegenhaltungen:
- WO-A1-2019/105583
- WO-A1-2020/088782
- KR-A- 20180 051 299
- US-B1- 9 267 245

## Beschreibung

Die Erfindung betrifft ein Verfahren zum Steuern des Fahrbetriebs einer selbstfahrenden Bodenverdichtungsmaschine sowie eine Bodenverdichtungsmaschine, insbesondere zur Durchführung des erfindungsgemäßen Verfahrens.

Bodenverdichtungsmaschinen haben grundsätzlich ein breites Anwendungsspektrum und werden bekanntermaßen im Rahmen von Baumaßnahmen zur Verdichtung des Bodenuntergrundes aufgrund ihres Eigengewichtes (statische Verdichtung) oder aufgrund zusätzlich wirkender Verdichtungseinrichtungen (dynamische, zum Beispiel Unwuchterreger) eingesetzt. Selbstfahrende Bodenverdichtungsmaschinen zeichnen sich dadurch aus, dass sie eine Antriebseinrichtung aufweisen, die die für den Betrieb der Bodenverdichtungsmaschine erforderliche Antriebsenergie zur Verfügung stellt. Die Bodenverdichtungsmaschine erzeugt in diesem Fall somit selbst die für Fahr- und Lenkbewegungen erforderliche Antriebsenergie, beispielsweise mithilfe eines Verbrennungs- und/oder Elektromotors. Die Antriebseinrichtung kann einen Fahrantrieb aufweisen, der eine Bewegung der Maschine in eine Fahrrichtung antreibt. Die Fahrrichtung bezeichnet dabei die aktuelle Bewegungsrichtung der Bodenverdichtungsmaschine. Diese kann in Vorwärts- und in Rückwärtsrichtung gerichtet sein. Die Vorwärtsrichtung kann definitionsmäßig festgelegt werden. Derartige Bodenverdichtungsmaschinen können ferner lenkbar sein. Von der Bodenverdichtungsmaschine selbst angetriebene Lenkbewegungen können entweder über den Fahrantrieb oder mithilfe eines Lenkantriebs erfolgen. Dazu sind im Stand der Technik verschiedene Lenkmöglichkeiten beschrieben, wie beispielsweise eine Knicklenkung, eine Panzerlenkung oder eine Lenkung aus der Bewegungskoordination von Unwuchterregern heraus. Wichtig ist dabei, dass vorliegend mit "lenkbar" eine von der Bodenverdichtungsmaschine selbst angetriebene Lenkbewegung bezeichnet wird und keine durch Krafteinwirkung eines Bedieners auf die Bodenverdichtungsmaschine erreichte Lenkbewegung. Bei der Fahrantriebseinrichtung kann es sich beispielsweise um einen Fahrantriebsmotor, insbesondere einen Hydraulik- oder Elektromotor, handeln, der eine Drehbewegung einer auf dem Bodenuntergrund abrollenden Fahreinrichtung, wie beispielsweise einem Rad oder einer Bandage, um eine horizontale Drehachse antreibt. Diese Maschinen umfassen üblicherweise ein oder mehrere im Wesentlichen trommelförmige und auf dem Bodenuntergrund abrollende Bandagen als Bodenkontakteinrichtung. Eine solche Maschine in Form einer sogenannten Grabenwalze ist beispielsweise in der DE102010014902A1 offenbart. Weitere Grabenwalzen, die zumindest teilweise autonom betrieben werden können, sind aus der US9267245B1 und der KR20180051299A bekannt. Die WO2019105583A1 beschreibt eine Grabenwalze mit einem Sicherheitssystem für umstehende Personen. Die WO2020088782A1 beschreibt allgemein ein kontinuierliches Verfolgen einer externen Markierung und eine automatische Steuerung einer Baumaschine aufgrund der entsprechenden Messung. Ergänzend oder alternativ kann der Antriebsmotor auch einen Unwuchterreger antreiben, wobei dann die generierten Zentrifugalkräfte auch eine Fortbewegungsbewegung in eine Fahrrichtung erzeugen können. Dieser Ansatz wird beispielsweise bei sogenannten Rüttel- bzw. Vibrationsplatten ausgenutzt, deren Bodenkontakteinrichtung üblicherweise eine auf dem Boden aufstehende Verdichtungsplatte ist. Eine derartige Bodenverdichtungsmaschine ist beispielsweise in der DE10201201 7777A1 beschrieben.

Es sind ferner sogenannte Aufsitzbodenverdichtungsmaschinen bekannt, deren wesentliches Merkmal darin besteht, dass der Bediener während des Betriebs auf der Maschine selbst sitzt, diese bedient und mit dieser mitfährt. Eine derartige Maschine ist beispielsweise ebenfalls in der DE10201201 7777A1 offenbart. Alternativ hierzu existieren handgeführte Bodenverdichtungsmaschinen, bei denen der Bediener im Betrieb der Maschine hinter der Bodenverdichtungsmaschine herläuft und diese beispielsweise über eine Deichsel oder einen Führungsbügel lenkt und/oder weitere Bedieneingaben vorgibt, wie unter anderem in der EP2947205A1 beschrieben. Im Stand der Technik sind auch bereits ferngesteuerte Bodenverdichtungsmaschinen bekannt, deren wesentliches Merkmal darin besteht, dass ein in der Nähe der Bodenverdichtungsmaschine befindlicher Bediener die Maschine über eine Fernsteuerung zumindest teilweise hinsichtlich Fahr- und Lenkvorgaben steuern kann. Dies ist beispielsweise ebenfalls bereits aus der DE102010014902A1 bekannt. Auch solche Maschinen werden gemeinhin der Gruppe der sogenannten handgeführten Bodenverdichtungsmaschinen zugeordnet.

Bodenverdichtungsarbeiten stellen den Bediener häufig vor erhöhte Anforderungen, insbesondere bei Arbeiten in räumlich beengten Verhältnissen und/oder über lange Wegstrecken hinweg. Eine Einsatzsituation, die diese beiden Herausforderungen besonders eklatant vereint, ist die Verdichtung des Bodenuntergrundes in Gräben, wie sie beispielsweise beim Bau von Pipelines, sonstigen Trassen, Kanälen etc. über lange Wegstrecken hinweg vorkommen. Gräben sind letztlich längserstreckte Bodenvertiefungen, die größtenteils entlang ihrer Längserstreckung in Vertikalrichtung vom Boden des Grabens mehr oder weniger gerade oder schräg aufragende Seitenwände aufweisen. Der horizontale Abstand der beiden Grabenwände zueinander definiert dabei die Grabenbreite. Die Tiefe des Grabens gibt den Abstand des Bodens des Grabens bzw. des Grabenbetts in Vertikalrichtung zum oberen Ende einer Seitenwand wieder. Ein Graben kann auch zumindest abschnittsweise in Vertikalrichtung nach oben hin von einer Grabendecke abgedeckt sein. Aus Sicherheitsgründen ist es vorteilhaft, wenn sich der Bediener nicht gleichzeitig mit der Bodenverdichtungsmaschine innerhalb das Grabens aufhält, um beispielsweise eine Kollision der Bodenverdichtungsmaschine mit dem Bediener in gleichzeitig räumlich beengten Verhältnissen zu verhindern. Darüber hinaus kann es bei der Nutzung von Verbrennungsmotoren zu Ansammlungen von Abgasen im Grabeninnenraum kommen. Eine typische Einsatzsituation sieht es daher vor, dass der Bediener von außerhalb des Grabens die im Graben befindliche Bodenverdichtungsmaschine per Fernbedienung bzw. Fernsteuerung bedient und sich über weite Strecken mit der Bodenverdichtungsmaschine mitbewegt. Dies kann vom jeweiligen Bediener als ermüdend empfunden werden, insbesondere bei langen Arbeitsstrecken.

Hiervon ausgehend ist es nun die Aufgabe der Erfindung, eine Möglichkeit anzugeben, den Betrieb einer Bodenverdichtungsmaschine insbesondere bei Verdichtungsarbeiten innerhalb von Gräben zu verbessern.

Die Lösung der Aufgabe gelingt mit einem Verfahren zum Steuern des Fahrbetriebs einer selbstfahrenden Bodenverdichtungsmaschine sowie einer Bodenverdichtungsmaschine gemäß den unabhängigen Ansprüchen. Bevorzugte Weiterbildungen sind in den abhängigen Ansprüchen angegeben.

Ein Aspekt der Erfindung betrifft ein Verfahren zum Steuern des Fahrbetriebs einer selbstfahrenden Bodenverdichtungsmaschine mithilfe einer Steuereinheit, die Fahrsteuersignale an ein Fahrantriebssystem der Bodenverdichtungsmaschine vorgibt. Das erfindungsgemäße Verfahren eignet sich dabei insbesondere zum Steuern des Fahrbetriebs einer selbstfahrenden Grabenwalze oder einer selbstfahrenden Rüttelplatte.

Eine Bodenverdichtungsmaschine der vorliegend relevanten Art umfasst eine Bodenkontakteinrichtung, über die der zu verdichtende Bodenuntergrund kontaktiert und verdichtet wird. Ferner ist eine Fahrantriebseinrichtung vorhanden, die die Fahrbewegung der Bodenverdichtungsvorrichtung aus eigener Kraft antreibt. Hierzu kann beispielsweise auf wenigstens einen Elektro- oder Hydraulikmotor oder ein Antriebsgetriebe hin zu einem Primärantriebsaggregat zurückgegriffen werden. Die für den selbstfahrenden Betrieb der Bodenverdichtungsmaschine erforderliche Antriebsenergie kann über ein Primärantriebsaggregat, wie beispielsweise einen Verbrennungsmotor, einen Elektromotor, eine Brennstoffzelle etc., im Betrieb der Bodenverdichtungsmaschine an dieser erzeugt werden oder mithilfe eines Energiespeichers, beispielsweise einer Speichereinrichtung für elektrische Energie, mitgeführt werden. Es versteht sich, dass je nach Bauart auf zwischengeschaltete Übertragungseinrichtungen, wie beispielsweise Getriebe etc., zurückgegriffen werden kann. Auch hybride Primärantriebsaggregate können genutzt werden.

Von diesem grundsätzlichen Aufbau einer gattungsgemäßen Bodenverdichtungsmaschine ausgehend zeichnet sich speziell eine Grabenwalze dadurch aus, dass sie wenigstens zwei jeweils um eine horizontale und quer zur Arbeitsrichtung verlaufende Rotationsachse rotierbare und in Arbeitsrichtung hintereinander angeordnete Bodenverdichtungsbandagen umfasst, deren Außenmantelfläche glatt oder beispielsweise mit sogenannten Schaffüßen ausgebildet sein kann. Eine oder beide der Bandagen umfassen einen Fahrantriebsmotor, insbesondere einen Hydraulik- oder Elektromotor, der die Drehbewegung der jeweiligen Bandage um die Rotationsachse antreibt. Es können auch mehr als eine Bandage auf Höhe einer der Rotationsachsen nebeneinander angeordnet sein. Bekannte Grabenwalzen können einen einstückigen Maschinenrahmen aufweisen oder einen mehrteiligen Maschinenrahmen, beispielsweise umfassend einen Vorderrahmen und einen Hinterrahmen, die über ein Knickgelenk miteinander verbunden sind. Die Antriebsenergie einer solchen Grabenwalze wird häufig über einen Verbrennungsmotor bereitgestellt, der nachgeschaltet eine oder mehrere Hydraulikpumpen und/oder einen Generator zur Erzeugung hydraulischer und/oder elektrischer Energie antreibt. Auch ein elektromotorischer Betrieb ist denkbar, bei dem die Grabenwalze beispielsweise einen Speicher für elektrische Energie mitführt. Auch eine Brennstoffzelle könnte von der Grabenwalze zur Erzeugung elektrischer Energie mit umfasst sein. Es können Unwuchterreger in den Bandagen vorhanden sein. Die Bodenkontakteinrichtung ist in diesem Fall in Form von trommelförmigen Bandagen ausgebildet.

Eine Rüttelplatte umfasst dagegen keine sich auf dem Bodenuntergrund abrollenden Verdichtungsbandagen, sondern ein üblicherweise im Wesentlichen plattenförmig ausgebildetes Bodenkontaktelement als Bodenkontakteinrichtung. Die Vortriebsbewegung in eine Fahrrichtung wird bei solchen Maschinen durch eine entsprechende Einstellung der vorhandenen Unwuchterreger in an sich bekannter Weise erzeugt. Der Antrieb der vorhandenen Unwuchterreger kann beispielsweise über hydraulische und/oder elektrische Antriebsmotoren erfolgen und/oder mittels eines mit einem Primärantriebsaggregat in Antriebsverbindung stehenden Antriebsgetriebes. Zur Energieversorgung dieser Antriebsmotoren und/oder zum Antrieb der Unwuchterreger kann als Primärantriebsaggregat ebenfalls ein Verbrennungsmotor, zum Antrieb beispielsweise eines Generators und/oder einer Hydraulikpumpe oder zum Direktantrieb, oder eine Speichereinrichtung für elektrische Energie vorgesehen sein. Auch Brennstoffzellen oder ähnliches sind möglich.

Eine gattungsgemäße Bodenverdichtungsmaschine umfasst ferner eine Steuereinheit, mit deren Hilfe empfangene Betriebseingaben, wie beispielsweise Fahrtrichtungs-, Geschwindigkeits- und/oder Lenkbefehle, in konkrete Fahrsteuersignale umgesetzt werden, über die Komponenten des Antriebssystems, wie beispielsweise ein Lenkaktor, ein Antriebsmotor eines Unwuchterregers und/oder eines Fahrmotors etc., von der Steuereinheit gesteuert werden. Fahrsteuersignale bezeichnen somit von der Steuereinheit erzeugte Steuersignale, über die der Betrieb von angetriebenen Komponenten der Bodenverdichtungsmaschine gesteuert wird. Fahrsteuersignale fassen dabei diejenigen Steuersignale der Steuereinheit zusammen, die den Fahrbetrieb der Bodenverdichtungsmaschine steuern. Dies sind beispielsweise Steuersignale, die Änderungen der Fahrrichtung (beispielsweise vorwärts, rückwärts, Kurvenfahrt etc.) und/oder der Fahrgeschwindigkeit (beispielsweise Beschleunigen, Abbremsen, Stoppen etc.) betreffen.

Erfindungsgemäß kann es nun vorgesehen sein, dass die Bodenverdichtungsmaschine einen eher konventionellen Betriebsmodus zulässt, in dem der Betrieb der Bodenverdichtungsmaschine, insbesondere hinsichtlich Fahrvorgaben, wie beispielsweise Fahrtrichtungs- und/oder Geschwindigkeits- und/oder Lenkbefehle, über manuell von einem Bediener vorgegebene Eingaben über eine geeignete Eingabeeinrichtung erfolgt. In diesem nachfolgend als "Bedienermodus" bezeichneten Betriebsmodus werden von einem Bediener über eine manuell betätigbare Eingabeeinrichtung vorgegebene Fahrvorgaben an die Steuereinheit der Bodenverdichtungsmaschine übermittelt und von dieser in Form von Fahrsteuersignalen an das Antriebssystem der Bodenverdichtungsmaschine zur tatsächlichen Steuerung der Maschine an sich weitergeleitet. Die Eingabe erfolgt hierzu insbesondere entweder über direkt an der Bodenverdichtungsmaschine verbaute Bedienelemente der Eingabeeinrichtung und/oder mithilfe eines Fernsteuerungssystems, umfassend eine vom Bediener zu tragende Fernbedienung als Eingabeeinrichtung, die über eine, bevorzugt kabellose, Signalübertragungsverbindung in Signalverbindung mit der Bodenverdichtungsmaschine an sich steht. Eins solches Fernsteuerungssystem ist beispielsweise in der DE102010014902A1 offenbart.

Die Besonderheit des erfindungsgemäßen Verfahrens und auch der erfindungsgemäßen Bodenverdichtungsmaschine besteht nun darin, dass, insbesondere neben dem vorstehend beschriebenen und an sich bekannten Bedienermodus, die Maschinensteuerung, insbesondere auch, einen sogenannten Autonomiemodus ermöglicht. Der Betriebsmodus "Autonomiemodus" zeichnet sich dadurch aus, dass die Steuereinheit der Maschine Fahrvorgaben unabhängig von Eingaben über die manuell betätigbare Eingabeeinrichtung bzw. ohne derartige manuell vorgegebenen Fahrbefehle selbst erzeugt und diese in Form von Fahrsteuersignalen an das Antriebssystem der Bodenverdichtungsmaschine übermittelt. Im Autonomiemodus nimmt die Bodenverdichtungsmaschine somit eine Fortbewegung hinsichtlich Fahrgeschwindigkeit und insbesondere auch hinsichtlich Fahrrichtung auf und/oder setzt diese fort und/oder ändert diese, ohne dass dazu Eingaben des Bedieners erforderlich sind. Mit anderen Worten: Im Autonomiemodus trifft die Steuereinheit somit von sich aus Entscheidungen hinsichtlich der Fahrrichtung und der Fahrgeschwindigkeit, ohne dass dazu eine vorhergehende manuelle Befehlseingabe durch einen Bediener erfolgt ist. Wesentlich ist nun, dass die Steuereinheit die Möglichkeit zum Betrieb der Bodenverdichtungsmaschine im Autonomiemodus an die Bedingung knüpft, dass wenigstens eine Seitenwand neben der Bodenverdichtungsmaschine vorhanden ist. Damit soll gewährleistet werden, dass der Autonomiemodus idealerweise nur dann von der Steuereinheit freigegeben und zugelassen wird, wenn sich die Bodenverdichtungsmaschine in einer Bodenvertiefung, insbesondere in einem Graben befindet. Es ist somit vorgesehen, dass ein Betrieb der Bodenverdichtungsmaschine im Autonomiemodus von der Steuereinheit nur dann freigegeben wird, wenn und/oder solange eine Seitenwanddetektionsvorrichtung der Bodenverdichtungsmaschine das Vorhandensein einer gegenüber der Aufstandfläche der Bodenverdichtungsmaschine aufragenden Seitenwand in einem Bereich in Horizontalrichtung quer zu einer Vorwärtsfahrrichtung der Bodenverdichtungsmaschine erfasst. Dies kann bedeuten, dass die Seitenwand von der Aufstandsfläche unmittelbar aufragt. Die Möglichkeit zum Betrieb der Bodenverdichtungsmaschine im Autonomiemodus ist somit an einen extrinsischen Faktor geknüpft, konkret das Detektieren des Vorhandenseins wenigstens einer Seitenwand neben der Bodenverdichtungsmaschine. Erst das Detektieren wenigstens einer in Fahrrichtung gesehen neben der Maschine vorhandenen Seitenwand gibt somit einen Betrieb der Maschine im Autonomiemodus frei. Für den Betrieb der Bodenverdichtungsmaschine im Autonomiemodus wird das Arbeitsumfeld eines Grabens bzw. des Grabeninnenraums als vergleichsweise sicher angesehen, da es einerseits geographisch klar abgegrenzt und durch wenigstens eine, idealerweise zwei einander gegenüberliegenden Seitenwände räumlich klar begrenzt ist und andererseits Kollisionsrisiken minimal sind. Ein Grabeninnenraum kann zudem, wie nachstehend noch näher beschrieben, vergleichsweise zuverlässig überwacht werden. Mit Hilfe der Seitenwanddetektionsvorrichtung wird somit gewährleistet, dass der Autonomiemodus von der Steuereinheit nur in diesem Arbeitsumfeld zugelassen wird. Die Seitenwanddetektionsvorrichtung und die Steuereinheit kommunizieren dazu miteinander. Dabei kann es vorgesehen sein, dass die Seitenwanddetektionsvorrichtung einen oder mehrere Messwerte selbst auswertet und der Steuereinheit das Vorhandensein oder Nichtvorhandensein wenigstens einer Seitenwand signalisiert. Alternativ oder ergänzend kann es jedoch auch vorgesehen sein, dass diese Auswertung von der Steuereinheit selbst vorgenommen wird und/oder die Seitenwanddetektionsvorrichtung Teil der Steuereinheit ist.

Grundsätzlich ist es möglich, dass mithilfe der Seitenwanddetektionsvorrichtung das Vorhandensein einer Seitenwand auf zumindest wenigstens einer der beiden Seiten der Bodenverdichtungsmaschine erfolgt. "Seite" bezeichnet vorliegend die bezüglich der aktuellen Vorwärtsfahrrichtung "rechte" oder "linke" Seite der Bodenverdichtungsmaschine. Ein klassischer Graben zeichnet sich allerdings üblicherweise dadurch aus, dass er zwei, in der Regel zudem in Längsrichtung im Wesentlichen parallel zueinander verlaufende, längserstreckte, vom Grabenboden in Vertikalrichtung aufragende Seitenwände aufweist. Es ist daher auch bevorzugt, wenn das Freigeben des Autonomiemodus nur dann erfolgt, wenn die Seitenwanddetektionsvorrichtung in einem Bereich in Horizontalrichtung quer zu einer Vorwärtsfahrrichtung der Bodenverdichtungsmaschine das Vorhandensein jeweils einer von der Aufstandfläche der Bodenverdichtungsmaschine aufragenden Seitenwand gleichzeitig auf beiden Seiten der Bodenverdichtungsmaschine erfasst. Insbesondere ist die Steuereinheit bevorzugt dann derart ausgebildet, dass sie nur dann einen Fahrbetrieb im Autonomiemodus zulässt, wenn die Seitenwanddetektionsvorrichtung das Vorhandensein einer Seitenwand gleichzeitig auf beiden Seiten detektiert. Durch eine gleichzeitige Erfassung von Seitenwänden auf den beiden einander gegenüberliegenden Seiten der Bodenverdichtungsmaschine (d.h. "rechts" und "links") erfolgt eine noch präzisere Identifikation des Arbeitsumfeldes "Graben", so dass der Autonomiemodus von der Steuereinheit zuverlässiger tatsächlich nur dann zugelassen wird, wenn sich die Bodenverdichtungsmaschine auch tatsächlich in einem Graben befindet.

Im tatsächlichen Betrieb der Bodenverdichtungsmaschine im Autonomiemodus kann es nun vorkommen, dass bei fortgesetzter Fahrbewegung in eine Fahrrichtung von der Seitenwanddetektionsvorrichtung ein- oder beidseitig plötzlich das Fehlen der Seitenwand festgestellt wird bzw. kein Vorhandensein der Seitenwand mehr detektiert wird. Es ist dann bevorzugt vorgesehen, dass bei im Autonomiemodus befindlicher Bodenverdichtungsmaschine ein Stoppen des Fahrbetriebs durch die Steuereinheit erfolgt, wenn die Seitenwanddetektionsvorrichtung das Vorhandensein der von der Aufstandfläche der Bodenverdichtungsmaschine aufragenden Seitenwand nicht mehr detektiert. Damit ist beispielsweise sichergestellt, dass die aus einem Graben über eine Rampe herausfahrende Bodenverdichtungsmaschine ihre Bewegung nicht außerhalb des Grabens im Autonomiemodus weiter fortsetzt, sondern dann beispielsweise stehenbleibt (und dann beispielsweise nur wieder im Bedienermodus weiter bewegt werden kann).

Es sind im praktischen Betrieb der Bodenverdichtungsmaschine im Autonomiemodus allerdings auch Konstellationen denkbar, in denen auch innerhalb des Grabens Unterbrechungen der Seitenwand auftreten, ohne dass der Graben endet, sondern sich weiter fortsetzt. Dies kann beispielsweise bei Abzweigungen innerhalb des Grabens der Fall sein. Auch gegebenenfalls vorhandenen Aussparungen in einer Seitenwand, wie beispielsweise abgehende Kanalleitungen etc., können zu übergangsweisen Unterbrechungen in der Grabenseitenwandoberfläche führen. Es ist nun erstrebenswert, dass die im Autonomiemodus befindliche Bodenverdichtungsmaschine bei derartigen Unterbrechungen in der Fläche einer Seitenwand im Autonomiemodus nicht jedes Mal stoppt und somit an solchen Stellen "hängen" bleibt. Um dieses Problem zu umgehen, kann es vorgesehen sein, dass die Steuereinheit eine Kompensationsfunktion aufweist, mit deren Hilfe eine Fortsetzung des Betriebs der Bodenverdichtungsmaschine im Autonomiemodus auch bei kurzen und übergangsweisen Unterbrechungen des Vorhandenseins einer Seitenwand durch die Seitenwanddetektionsvorrichtung möglich ist. Hierzu ist es erfindungsgemäß vorgesehen, dass beim Fahrbetrieb im Autonomiemodus beim sprunghaften Verlust der Erfassung des Vorhandenseins einer Seitenwand durch die Seitenwanddetektionsvorrichtung die Steuereinheit zeit- und/oder wegabhängig den Fahrbetriebs im Autonomiemodus fortsetzt. Dies bedeutet, dass zunächst ein sprunghafter Verlust der Erfassung des Vorhandenseins einer Seitenwand erfolgen muss. Sprunghaft bezeichnet somit den Verlust der Erfassung von jetzt auf gleich. Wenn beispielsweise ein ermittelter seitlicher Abstand zu einer Seitenwand in Fahrrichtung langsam größer wird bis zu einem Punkt, an dem keine Seitenwand mehr von der Seitenwanddetektionsvorrichtung erfasst wird, weil beispielsweise die Seitenwand immer flacher zur Seite hin abfällt oder der Abstand der Seitenwand hin zum verwendeten Sensor aus dessen Erfassungsbereich austritt, wird die Kompensationsfunktion nicht ausgelöst, da ein solcher Verlust nicht sprunghaft auftreten würde. Sprunghaft ist in Bezug auf die Wegstrecke somit im Sinne von "innerhalb weniger Zentimeter" zu verstehen. Eine zeit- und/oder wegstreckenabhängige Fortsetzung des Fahrbetriebs bedeutet, dass nach dem sprunghaften Verlust der Detektion des Vorhandenseins einer Seitenwand die Bodenverdichtungsmaschine für ein vorgegebenes Zeit- und/oder Wegstreckenintervall (Toleranzintervall), welches ab Werk vorgegeben und/oder vom Bediener einstellbar sein kann, den Fahrbetrieb weiter fortsetzt. Detektiert die Seitenwanddetektionsvorrichtung innerhalb dieses Toleranzintervalls wieder das Vorhandensein einer Seitenwand, beispielsweise nach der Passage einer Grabenabzweigung, verbleibt die Bodenverdichtungsmaschine im Autonomiemodus und setzt ihren Betrieb weiter fort. Läuft das Toleranzintervall dagegen ohne erneute Detektion des Vorhandenseins einer Seitenwand (insbesondere durch den jeweiligen Sensor, der vorher eine Unterbrechung der Seitenwand detektiert hat) ab, beendet die Steuereinheit den Autonomiemodus und die Maschine bleibt beispielsweise selbstständig stehen oder wird gar automatisch abgeschaltet.
Weiter ergänzend kann es auch vorgesehen sein, dass die Steuereinheit die Fortsetzung des Fahrbetriebs im Autonomiemodus für den Fall, dass das Vorhandensein einer Seitenwand von der Seitenwanddetektionsvorrichtung sprunghaft nicht mehr detektiert wird, dann fortsetzt, wenn, und insbesondere auch solange, das Vorhandensein einer Seitenwand durch die Seitenwanddetektionsvorrichtung an anderer Stelle detektiert wird. Ganz konkret kann dies bedeuteten, dass beispielsweise der Autonomiebetrieb der Bodenverdichtungsmaschine bei sprunghaftem Verlust der Detektion des Vorhandenseins einer Seitenwand auf einer Seite der Bodenverdichtungsmaschine, beispielsweise rechts, dann fortgesetzt wird, wenn die Seitenwanddetektionsvorrichtung nach wie vor das Vorhandensein einer Seitenwand auf der anderen Seite, im vorliegenden Beispiel somit auf der linken Seite der Bodenverdichtungsmaschine, feststellt. Auch dies kann bevorzugt weg- und/oder zeitabhängig mit einem Toleranzintervall begrenzt werden und somit die erneute Detektion einer Seitenwand auf beiden Seiten der Bodenverdichtungsmaschine innerhalb eines festgelegten Zeitintervalls und/oder einer festgelegten Wegstrecke erfordern, um einen Stopp der Bodenverdichtungsmaschine im Autonomiemodus zu vermeiden. Ergänzend oder alternativ kann es zu der Variante einer Ermittlung des Vorhandenseins einer Seitenwand auf beiden Seiten der Bodenverdichtungsmaschine auch vorgesehen sein, dass die Seitenwanddetektionsvorrichtung das Vorhandensein einer Seitenwand auf wenigstens einer Seite an mehreren in Fahrrichtung hintereinander und/oder übereinander liegenden Stellen detektiert. Auch in diesem Fall kann die Kompensationsfunktion mit den vorstehend beschriebenen Prinzipien Anwendung finden. Weiter ergänzend oder alternativ kann es auch vorgesehen sein, dass rechnerisch von der Steuereinheit auf Grundlage der ermittelten Sensordaten und/oder durch externe Vorgabe von entsprechenden Daten ein virtuelles Modell der Wand und/oder des Wandverlaufes erzeugt wird. Unter Rückgriff auf dieses virtuelle Modell ist es dann möglich, abzuleiten, ob eine Wandunterbrechung im Bereich einer "kleinen" bzw. ignorierbaren Wandunterbrechung, wie beispielsweise einer Abzweigung, handelt oder nicht.

Die Kompensationsfunktion kann allerdings auch durch Anpassung des von der Seitenwanddetektionsvorrichtung erfassten Seitenwandbereiches in Fahrrichtung nach vorn und/oder in Vertikalrichtung ermöglicht werden, beispielsweise auch durch eine geeignete Auslegung des Erfassungswinkels der Seitenwanddetektionsvorrichtung. So kann es beispielsweise vorgesehen sein, dass die Seitenwanddetektionsvorrichtung nicht nur den in der Horizontalebene orthogonal zur Fahrrichtung der Bodenverdichtungsmaschine und damit auf Höhe der Maschine befindlichen Seitenwandbereich erfasst, sondern beispielsweise auch in Fahrrichtung vorausschauend teilweise einen noch vor der Bodenverdichtungsmaschine liegenden Seitenwandbereich erfasst. Dies kann beispielsweise durch eine entsprechende Schrägausrichtung des Erfassungsbereiches eines oder mehrere Sensoren derart erfolgen, dass der/diese einen von der Bodenverdichtungsmaschine ausgehenden in Richtung zur Seitenwand und in Fahrrichtung nach vorn und damit nach vorn und schräg nach außen verlaufenden Erfassungsbereich aufweist/-en. Auch hier kann ein virtuelles Wandmodell berechnet und als Entscheidungsgrundlage genutzt werden.

Es sind verschiedene Szenarien möglich und bevorzugt, in denen ein von der Steuereinheit selbsttätig ausgelöstes Stoppen der im Autonomiemodus befindlichen (und fahrenden) Bodenverdichtungsmaschine vorgesehen sein kann. So kann das Stoppen des Fahrbetriebs im Autonomiemodus beispielsweise dann erfolgen, wenn die Seitenwanddetektionsvorrichtung detektiert, dass die vertikale Höhe der detektierten Seitenwand einen vorgegebenen Grenzwert, insbesondere vom Boden aus ermittelt, unterschreitet. Eine besonders bevorzugte Wandhöhe, die zur Aufrechterhaltung des Autonomiemodus nicht unterschritten werden sollte, beträgt wenigstens 30cm, insbesondere wenigstens 50cm. Es kann auch vorgesehen sein, dass ein solcher Grenzwert parametrierbar und damit von einem Benutzer manuell vorgebbar ist. _Bei dieser Funktionalität prüft die Seitenwanddetektionsvorrichtung somit nicht nur das grundsätzliche Vorhandensein einer Seitenwand neben der Bodenverdichtungsmaschine, sondern prüft gleichzeitig auch, ob eine vorgegebene Mindesthöhe des detektierten Seitenwandbereiches besteht. Auf diese Weise kann beispielsweise sichergestellt werden, dass die Bodenverdichtungsmaschine bei einem Herausfahren aus einem Graben über eine Rampe noch innerhalb des Grabens automatisch stehen bleibt. Ergänzend oder alternativ kann ein automatisches Stoppen der im Autonomiemodus befindlichen Bodenverdichtungsmaschine dann vorgesehen sein, wenn der horizontale Abstand der detektierten Seitenwand zur Bodenverdichtungsmaschine in Horizontalrichtung quer zu einer Vorwärtsfahrrichtung der Bodenverdichtungsmaschine einen vorgegebenen Grenzwert überschreitet._Ein solcher Fall kann beispielsweise dann auftreten, wenn die Bodenverdichtungsmaschine aus einem Graben herausfährt und/oder aus einem Graben in eine große Baugrube einfährt. Beide Szenarien zeichnen sich dadurch aus, dass sich die Grabenwalze aus dem eher homogenen und räumlich begrenzten Umfeld eines Grabeninneren in ein anderes Umfeld bewegt. Hier ist es jeweils bevorzugt, wenn die Steuereinheit der Bodenverdichtungsmaschine dann den Betrieb im Autonomiemodus abbricht, so dass eine Fortbewegung der Bodenverdichtungsmaschine dann bevorzugt nur im Bedienermodus möglich ist, oder alternativ im Autonomiemodus reversiert und die Bodenverdichtungsmaschine in Gegenrichtung weiterfährt. Schließlich kann es ergänzend oder alternativ vorgesehen sein, dass ein Stoppen der im Autonomiemodus befindlichen Bodenverdichtungsmaschine dann ausgelöst wird, wenn der horizontale Abstand der detektierten Seitenwand in Horizontalrichtung quer zu einer Vorwärtsfahrrichtung der Bodenverdichtungsmaschine einen vorgegebenen Grenzwert unterschreitet. Auch dieser kann parametrierbar und damit von einem Bediener manuell vorgebbar sein. Mit dieser Funktion kann somit insbesondere vermieden werden, dass die Bodenverdichtungsmaschine im Autonomiemodus mit der Seitenwand kollidiert bzw. ermöglicht werden, dass zur Seitenwand stets ein Mindest- bzw. Sicherheitsabstand eingehalten wird.

Ergänzend zu den erfindungsgemäß vorhandenen Mindestvoraussetzungen zur Freigabe eines Betriebs, insbesondere Fahrbetriebs, der Bodenverdichtungsmaschine im Autonomiemodus durch die Steuereinheit können weitere Faktoren von der Steuereinheit abgefragt werden, um einen Betrieb im Autonomiemodus überhaupt erst zu erlauben. So ist es beispielsweise bevorzugt, wenn das Freigeben des Fahrbetriebs im Autonomiemodus durch die Steuereinheit erst dann erfolgt, wenn die Seitenwanddetektionsvorrichtung ermittelt, dass die vertikale Höhe der detektierten Seitenwand einen vorgegebenen Grenzwert (insbesondere vom Boden aus ermittelt) überschreitet. Eine besonders bevorzugte Wandhöhe, die wenigstens vorliegen sollte, beträgt wenigstens 30cm, insbesondere wenigstens 50cm. Es kann auch vorgesehen sein, dass ein solcher Grenzwert parametrierbar und damit von einem Benutzer manuell vorgebbar ist. Hier wird somit sichergestellt, dass die aktuell neben der Bodenverdichtungsmaschine von der Seitenwanddetektionsvorrichtung ermittelte Seitenwand eine Mindesthöhe aufweist. Die Mindesthöhe kann beispielsweise bevorzugt derart definiert werden, dass sie, abhängig von der konkreten Maschine, wenigstens so hoch ist, dass die Seitenwand von der Bodenverdichtungsmaschine selbst nicht überwunden werden kann. Auf diese Weise wird sichergestellt, dass die Bodenverdichtungsmaschine zu den Seiten hin im Autonomiemodus aus dem Grabeninneren nicht ausbrechen kann. Ergänzend oder alternativ kann es auch vorgesehen sein, dass das Freigeben des Fahrbetriebs im Autonomiemodus durch die Steuereinheit erst dann erfolgt, wenn die Seitenwanddetektionsvorrichtung ermittelt, dass der horizontale Abstand der detektierten Seitenwand in Horizontalrichtung quer zu einer Vorwärtsfahrrichtung der Bodenverdichtungsmaschine einen vorgegebenen Grenzwert bzw. einen vorgegebenen Maximalabstand unterschreitet. Auch dieser kann ab Werk fest definiert sein oder bevorzugt manuell einstellbar sein._Mithilfe dieser zusätzlichen Begrenzung wird somit ein Betrieb im Autonomiemodus auf bestimmte maximale Grabenbreiten begrenzt, wodurch letztlich auch hier sichergestellt wird, dass der Autonomiemodus auch tatsächlich von der Steuereinheit nur dann freigegeben wird, wenn die Bodenverdichtungsmaschine in einem Graben positioniert ist. Auch eine ergänzende oder alternative Begrenzung des Betriebs im Autonomiemodus in Bezug auf eine Mindestgrabenbreite ist möglich. So kann beispielsweise gefordert werden, dass ein Autonomiebetriebsmodus nur dann möglich ist, wenn die minimale Grabenbreite der maximalen Maschinenbreite zzgl. 10% entspricht.

Bewegt sich die Bodenverdichtungsmaschine im Autonomiemodus, sollten idealerweise Maßnahmen ergriffen werden, mit denen einer Kollision der Maschine im Autonomiemodus entgegengewirkt werden kann. Hierzu kann es beispielsweise vorgesehen sein, dass ein Detektieren von in und/oder entgegen der aktuellen Fahrrichtung der Bodenverdichtungsmaschine liegenden Hindernissen erfolgt, insbesondere von Hindernissen, die vom Bodenuntergrund aufragen und/oder in der vertikalen Höhe und/oder horizontalen Breite der Maschine in Fahrrichtung liegen. Dieses Detektieren kann mithilfe einer Hinderniserkennungsvorrichtung erfolgen, beispielsweise umfassend einen Abstandssensor, einen Scanner, eine Kamera mit geeigneter Bildverarbeitungssoftware etc. Es ist nun vorgesehen, dass die Steuereinheit den Fahrbetrieb im Autonomiemodus insbesondere dann stoppt, wenn von der Hinderniserkennungsvorrichtung ein in und/oder entgegen der Fahrrichtung bestehendes Hindernis erkannt wird. Unabhängig vom Autonomiemodus kann es auch vorgesehen sein, dass die Hinderniserkennungsvorrichtung auch im Bedienermodus, zumindest dann, wenn die Bodenverdichtungsmaschine im Fahrbetrieb ist, aktiv ist und beispielsweise beim Erkennen eines im Fahrweg liegenden Hindernisses den Fahrbetrieb der Bodenverdichtungsmaschine auch im Bedienermodus unterbricht.

Bodenverdichtungsarbeiten erfordern je nach gewünschter Bodensteifigkeit und abhängig vom Bodenmaterial mehrere Überfahrten durch die Bodenverdichtungsmaschine, um einen gewünschten Verdichtungsgrad zu erreichen. Es ist daher üblich, dass Bodenverdichtungsmaschinen häufig reversierend betrieben werden bzw. entlang einer Wegstrecke mehrfach vor und zurück fahren, mit und/oder ohne seitlichen Versatz der einzelnen Überfahrspuren. Das erfindungsgemäße Verfahren kann aus diesem Grund auch dahingehend bevorzugt weitergebildet sein, dass bei im Autonomiemodus sich in einer Fahrrichtung bewegender Bodenverdichtungsmaschine von der Steuereinheit ein Reversierbefehl, durch den die Fahrrichtung in die entgegengesetzte Fahrrichtung umgeschaltet wird, selbstständig erzeugt und gesteuert wird. Es kann beispielsweise vorgesehen sein, dass ein Reversiervorgang durch die Steuereinheit dann eingeleitet wird, wenn ein in Fahrrichtung liegendes reales Hindernis detektiert wird und bevorzugt gleichzeitig entgegen der aktuellen Fahrrichtung kein Hindernis detektiert wird. Ein solches Szenario tritt beispielsweise dann auf, wenn die Bodenverdichtungsmaschine auf eine Grabenwand zusteuert, beispielsweise am Ende eines Grabens. Ergänzend oder alternativ kann die Bodenverdichtungsmaschine auch auf ein virtuelles Hindernis treffen. Ein virtuelles Hindernis bezeichnet dabei eine extern oder intern vorgegebene Wegbegrenzung, wie sie beispielsweise durch sogenannte Geo-Fencing-Anwendungen vorgegeben werden können. Es versteht sich, dass die Bodenverdichtungsmaschine in diesem Fall eine geeignete Erfassungseinrichtung zur Erkennung und Auswertung entsprechender Vorgaben umfasst. Im Falle einer Geo-Fencing-Anwendung bedeutet dies beispielsweise, dass eine Ortsbestimmung der Bodenverdichtungsmaschine über ein Satellitennavigationssystem und/oder über ein Mobilfunksystem und/oder ein lokales Positionsbestimmungssystem erfolgt und diese Positionsermittlung gegenüber einem vorgegebenen zulässigen Bewegungsareal abgeglichen wird. Ergänzend oder alternativ kann ein Reversierbefehl auch dann von der Steuereinheit eingeleitet werden, wenn das Ende einer manuell vorgegebenen Fahrstrecke erreicht worden ist.

Weiter ergänzend oder alternativ kann es auch vorgesehen sein, dass beispielsweise ein Reversiervorgang und/oder andere Maschinenfunktionen/-reaktionen von der Steuereinheit dann im Autonomiemodus eingeleitet werden, wenn ein von der Bodenverdichtungsmaschine mittels einer Detektionseinrichtung detektierbares externes Markierungselement erkannt wird. Bei dieser Verfahrensweiterbildung ist es somit vorgesehen, dass im Gelände wenigstens eine von der Bodenverdichtungsmaschine detektierbare und auswertbare Markierung positioniert wird, die verschiedene Funktionen und/oder Befehle und/oder Gegebenheiten in von der Bodenverdichtungsmaschine decodierbarer Form repräsentiert. Wesentlich ist dabei zunächst, dass die Bodenverdichtungsmaschine eine Erkennungseinrichtung umfasst, mittels derer sie die wenigstens eine im Gelände positionierte Markierung beim Fahren erkennen und dekodieren kann. Dieses System aus Erkennungseinrichtung und durch diese erfassbare Markierung ist idealerweise derart ausgebildet, dass damit eine automatische und berührungslose Identifikation einer oder mehrerer Markierungen im laufenden Arbeitsbetrieb der Bodenverdichtungsmaschine möglich ist. Die wenigstens eine Markierung und die Erkennungseinrichtung bilden ein zueinander kompatibles Wirkungspaar. Die Markierung kann beispielsweise eine optisch erfassbare Markierung, wie beispielsweise ein Schild mit einer Zahlen und/oder Farbkodierung, eine, auch auf den Boden oder die Wand aufgesprühte, Farbmarkierung, ein optoelektronisch lesbarer Code, wie beispielsweise ein QR-oder Balkencode, oder ähnliches sein. In diesem Fall umfasst die Bodenverdichtungsmaschine wenigstens eine geeignete Erfassungseinrichtung, wie beispielsweise eine Kamera mit geeigneter Bildverarbeitungssoftware und/oder einen Scanner etc. Die Markierung kann auch ein nicht optisches Erfassungsprinzip umfassen, beispielsweise unter Rückgriff auf die RFID-Technologie. Die wenigstens eine Markierung ist dann bevorzugt ein RFID-Transponder und die maschinenseitige Erfassungseinrichtung eine geeignete Sende- und Empfangseinheit. Das verwendete externe Markierungselement kann dabei insbesondere in Bezug auf die Fahrstrecke eine punktuelle Markierung darstellen, wie beispielsweise ein im geländeplatzierter RFID-Transponder und/oder ein Markierungsschild, oder eine entlang der Fahrstrecke verlaufende erstreckte Markierung.

Es ist daher auch bevorzugt, wenn ein Reversiervorgang oder ein Stopp der Fahrbewegung der Bodenverdichtungsmaschine dann von der Steuereinheit eingeleitet wird, wenn die Detektion eines von der Bodenverdichtungsmaschine mittels einer Detektionseinrichtung detektierbaren externen Markierungselementes unterbrochen wird. Bei dieser Ausführungsvariante gibt somit eine entweder kontinuierliche oder innerhalb festgelegter Zeit- und/oder Wegstreckenabschnitte erfolgte Erfassung einer Markierung vor, dass die Bodenverdichtungsmaschine ihren Fahrbetrieb weiter fortsetzt. Wird diese Erfassung unterbrochen oder zumindest hinsichtlich der festgelegten Zeit- und/oder Wegstreckenabschnitte nicht rechtzeitig weiter fortgesetzt, ist es entsprechend bevorzugt vorgesehen, dass die Maschine dann entweder stoppt oder sogar einen Reversiervorgang einleitet.

Hinsichtlich des konkreten Steuerungsablaufes beim Einleiten eines Reversiervorgangs der Bodenverdichtungsmaschine im Autonomiemodus sind grundsätzlich ebenfalls verschiedene Vorgehensalternativen möglich. Ein Reversiervorgang kann beispielsweise gradlinig insoweit eingeleitet werden, als dass sich die Bodenverdichtungsmaschine beim eingeleiteten Reversiervorgang auf der identischen Fahrstrecke in entgegengesetzter Fahrrichtung zurück bewegt. Alternativ kann es auch vorgesehen sein, dass die Bodenverdichtungsmaschine mit der Einleitung des Reversiervorganges einen Spurversatz einleitet derart, dass die Bewegungsspur der Bodenverdichtungsmaschine in Rückwärtsrichtung horizontal und senkrecht zur Fahrrichtung um einen, beispielsweise vorab vorgegebenen, Betrag seitlich versetzt zur Bewegungsspur der Bodenverdichtungsmaschine in Vorwärtsrichtung fortsetzt. In diesem Fall umfasst der Reversiervorgang somit gleichzeitig auch eine von der Steuerungseinrichtung gesteuerte Lenkbewegung der Bodenverdichtungsmaschine.

Es kann ergänzend oder alternativ auch vorgesehen sein, dass Fahrspuren und/oder ein oder mehrere mit der Bodensteifigkeit korrelierenden Messwerte aufgenommen, dokumentiert und/oder angezeigt werden, beispielsweise an einer Zentralstation, einer Fernbedienung, über ein Webinterface, auf einem Smartphone und/oder Tablet etc. Auch eine Anzeige an der Maschine selbst kann vorgesehen sein.

Für das erfindungsgemäße Verfahren ist es nun besonders bevorzugt vorgesehen, dass für autonom von der Bodenverdichtungsmaschine eingeleitete und/oder durchgeführte Funktionen bzw. für die im Autonomiemodus befindliche Bodenverdichtungsmaschine es stets vorgesehen ist, dass eine von der Bodenverdichtungsmaschine bzw. letztlich der Steuereinheit empfangene manuelle Bedieneingabe gegenüber sämtlichen Autonomiefunktionen hierarchisch priorisiert ist. Auf diese Weise wird mithilfe der manuell betätigbaren Eingabeeinrichtung somit ein genereller Override zur Verfügung gestellt, der sicherstellt, dass in letzter Konsequenz der Bediener den Autonomiemodus stets überstimmen kann. Für den Fall, dass sich die Bodenverdichtungsmaschine aktuell im Autonomiemodus befindet, sind nun verschiedene Varianten denkbar, wie eine während dieses Betriebszustandes empfangene manuelle Eingabe von der Steuereinrichtung zur Steuerung der Bodenverdichtungsmaschine verarbeitet wird. So ist es beispielsweise möglich, dass die Steuerungseinrichtung die tatsächliche konkrete manuelle Bedieneingabe umsetzt. Gibt der Bediener beispielsweise während des Betriebs der Bodenverdichtungsmaschine im Autonomiemodus über die manuell betätigbare Eingabeeinrichtung eine Lenkbewegung nach links vor, setzt die Steuerungseinrichtung diesen Befehl um und leitet eine Lenkbewegung der Bodenverdichtungsmaschine nach links ein. Andererseits kann zumindest dann, solange die Bodenverdichtungsmaschine im Autonomiemodus betrieben wird, jegliche über die manuelle Eingabeeinrichtung vorgenommene Eingabe von der maschinenseitigen Steuerungseinrichtung als externer Stoppbefehl, beispielsweise hinsichtlich der reinen Fahrbewegung oder auch mit gleichzeitigem Abschalten des Antriebsmotors, interpretiert und entsprechend eingeleitet werden. Es kann auch vorgesehen sein, dass der Bediener "high-level"-Anweisungen gibt, wenn sich die Bodenverdichtungsmaschine im Autonomiemodus befindet. Ganz konkret kann dies beispielsweise bedeuten, dass der Bediener einen Spurwechsel, bei dem die Bodenverdichtungsmaschine in definierter Art und Weise, beispielsweise mit exakt nebeneinander liegenden Fahrspuren oder mit einer definierten Überlappungsbreite überlappenden Fahrspuren, initiiert, der dann von der Bodenverdichtungsmaschine autonom umgesetzt wird. Ergänzend oder alternativ kann es auch vorgesehen sein, dass über eine solche "high-level"-Anweisung das seitliche Einbiegen in einen von einem ersten Grabenverlauf abzweigenden zweiten Grabenverlauf bzw. einen von einem Graben abzweigenden anderen Graben erfolgt. Unabhängig davon kann es insbesondere auch vorgesehen sein, dass die Bodenverdichtungsmaschine während des Betriebs im Autonomiemodus nicht immer in Signalverbindung mit einer manuell betätigbaren Eingabeeinrichtung, beispielsweise einer Fernbedienung, stehen muss. Vorteilhafterweise führt eine Unterbrechung einer Signalverbindung mit einer Fernbedienung vorliegend somit nicht zur Unterbrechung des Betriebs der Bodenverdichtungsmaschine, wenn diese im Autonomiemodus ist. Für den Bedienermodus ist es dagegen vorteilhaft, wenn bei einer Unterbrechung der Signalverbindung zu einer Fernbedienung die im Fahrbetrieb befindliche Bodenerdichtungsmaschine sicherheitshalber selbsttätig stoppt.

Für den Bediener der Bodenverdichtungsmaschine kann es vorteilhaft sein, wenn er insbesondere bei im Autonomiemodus befindlicher Bodenverdichtungsmaschine in der Lage ist, sich, idealerweise im Wesentlichen ortsunabhängig, ein Bild über den aktuellen Betriebszustand der Bodenverdichtungsmaschine zu verschaffen. Es ist daher auch bevorzugt, wenn die Steuereinheit zumindest während des Betriebs im Autonomiemodus und bevorzugt auch bereits dann, wenn die Steuereinheit im Bedienermodus das Vorliegen der äußeren Voraussetzungen zur Freigabe des Autonomiemodus bejaht, eine Anzeigeeinrichtung steuert, die derart ausgebildet ist, dass sie dem Bediener Betriebsinformationen der Bodenverdichtungsmaschine anzeigt. Idealerweise handelt es sich dabei zumindest teilweise um Ist-Wertinformationen bzw. Echtzeitinformationen. Selbstverständlich kann die Steuereinheit somit auch die Anzeige dieser Betriebsinformationen über den vollständigen Betrieb der Bodenverdichtungsmaschine, d.h. umfassend den Autonomiemodus und den Bedienermodus, an die Anzeigeeinrichtung übermitteln. Die Anzeige der Betriebsinformationen selbst kann unmittelbar an einer Anzeigeeinrichtung an der Bodenverdichtungsmaschine selbst geschehen und/oder durch Übermittlung entsprechender Informationen durch die Steuereinheit und einer geeigneten Übertragungseinrichtung (bevorzugt kabellos, beispielsweise per Funkverbindung) an eine extern zur Bodenverdichtungsmaschine positionierte Anzeigeeinrichtung, wie beispielsweise im Rahmen einer zentralen Leitstelle und/oder einer mobilen Fernbedienung, erfolgen. Relevante Informationen, die hier angezeigt werden können, betreffen bevorzugt beispielsweise eine dahingehende Anzeige, ob Freigabevoraussetzungen für den Betrieb im Autonomiemodus erfüllt werden und/oder das Freigabevoraussetzungen für den Betrieb im Autonomiemodus nicht mehr erfüllt werden. Mithilfe einer solchen Anzeige kann der Bediener somit beispielsweise feststellen, ob er überhaupt aus dem Bedienermodus in den Autonomiemodus wechseln kann, und/oder feststellen, dass die Maschine beispielsweise aufgrund des Umstandes, dass die Freigabevoraussetzungen nicht mehr erfüllt werden, die ursprünglich im Autonomiemodus befindliche Bodenverdichtungsmaschine gestoppt hat, beispielsweise weil keine Seitenwand mehr detektiert wird. Ergänzend oder alternativ kann die Steuereinheit die Anzeigeeinrichtung dahingehend steuern, dass diese anzeigt, ob die Bodenverdichtungsmaschine gerade im Autonomiemodus und/oder Bedienermodus betrieben wird. Weiter ergänzend oder alternativ kann mithilfe der Anzeigeeinrichtung durch die Steuereinheit angezeigt werden, ob eine aktive Signalübertragungsverbindung zu einer Fernbedienung besteht und/oder nicht mehr besteht. Auch die Anzeige aktueller Betriebsparameter ist möglich. Dies betrifft beispielsweise die Anzeige der aktuellen Fahrrichtung, Fahrgeschwindigkeit, eines Tankfüllzustandes, eines Aktivierungszustandes einer Erregereinheit etc. Weiter ergänzend oder alternativ können auch mithilfe der Seitenwanddetektionsvorrichtung und/oder der Hinderniserkennungsvorrichtung ermittelte Daten und Auswerteergebnisse von der Steuereinheit an die Anzeigeeinrichtung übermittelt werden, wie beispielsweise ein aktuelles Kamerabild, Abstandsdaten, insbesondere in horizontaler Richtung quer zur Fahrrichtung der Bodenverdichtungsmaschine etc. Schließlich ist es weiter ergänzend oder alternativ auch möglich, die aktuelle Position der Bodenverdichtungsmaschine anzuzeigen, beispielsweise relativ zu einer üblicherweise vom Bediener getragenen Fernbedienung und/oder in einem Kartensystem, beispielsweise GPS-basiert.

Hinsichtlich der konkreten Art und Weise der Anzeige von Betriebsinformationen kann je nach Art der Informationen auf verschiedene Anzeigemöglichkeiten, auch in Kombination, zurückgegriffen werden. Bewährt haben sich hier insbesondere optische Anzeigen, beispielsweise unter Rückgriff auf entsprechende Signalleuchten und/oder Anzeigedisplays, beispielsweise Touchscreens. Es ist aber ergänzend oder alternativ auch eine Nutzung akustischer Anzeigemöglichkeiten mit umfasst, insbesondere beim Auftreten unerwarteter Ereignisse, insbesondere solcher Ereignisse, die den laufenden Autonomiemodus unterbrechen oder zumindest die Fahrbewegung der im Autonomiemodus befindlichen Bodenverdichtungsmaschine stoppen (beispielsweise beim Auftreffen auf ein Hindernis). Weiter ergänzend oder alternativ kann insbesondere bei der Nutzung einer Fernbedienung durch den Bediener auch auf taktile wahrnehmbare Anzeigen, wie beispielsweise mithilfe einer in einer Fernbedienung angeordneten taktil wahrnehmbaren Signaleinrichtung, wie eine Vibrationseinrichtung, zurückgegriffen werden.

Es ist auch möglich, dass die Steuereinheit eine Prognosefunktion aufweist. Die Prognosefunktion zeichnet sich dadurch aus, dass sie im Autonomiemodus das wahrscheinliche zukünftige Betriebsverhalten der Bodenverdichtungsmaschine weg- und/oder zeitabhängig vorhersagt. Dies kann insbesondere auf Grundlage der aktuell verfügbaren Betriebsinformationen, insbesondere hinsichtlich der über die Seitenwanddetektionsvorrichtung ermittelten Informationen und/oder in Fahrrichtung nach vorn und/oder nach hinten erfassender Sensoren, die Abstands- und/oder weitere Umfeldinformationen in und/oder entgegen der Fahrtrichtung zur Verfügung stellen und/oder auf Grundlage eines virtuellen Wand- oder sogar Umgebungsmodells, geschehen. Eine solche Prognosefunktion ermöglicht somit beispielsweise die Vorhersage des Verhaltens der im Autonomiemodus befindlichen Bodenverdichtungsmaschine und die entsprechende frühzeitige Information des Bedieners. Er kann auf diese Weise beispielsweise weg- und/oder zeitabhängig vor dem tatsächlichen Erreichen eines im Fahrweg befindlichen Hindernisses informiert werden und seine entsprechende Reaktion vorbereiten. Ergänzend und/oder alternativ ermöglicht diese Prognosefunktion auch beispielsweise die Anzeige des zukünftigen Fahrweges der Bodenverdichtungsmaschine, insbesondere überlagert in ein aktuell von der Bodenverdichtungsmaschine aufgenommenes Kamerabild. Insgesamt kann mithilfe der Prognosefunktion beispielsweise der potentielle Anteil an Unterbrechungen im Autonomiemodus gesenkt werden.

Das erfindungsgemäße Verfahren kann ferner einen Planungsschritt umfassen, in dem ein auf das zu verdichtende Bodenareal von der Steuereinheit ermittelter Fahrplan festgelegt wird. Dieser abzufahrende Bewegungsplan kann einen effizienten und zielgerichteten Arbeitsprozess ermöglichen. Hier können weitere Kriterien, wie beispielsweise Überlappungsbahnen, zu erreichende Bodensteifigkeiten etc. festgelegt werden. Das zu verdichtende Bodenareal kann von extern, beispielsweise von einem Bediener anhand von Positionsdaten, vorgegeben oder von der Bodenverdichtungsmaschine selbst ermittelt werden.

Die Erfindung betrifft ferner eine selbstfahrende Bodenverdichtungsmaschine, umfassend eine Antriebseinheit, über die wenigstens die für einen Fahrbetrieb der Bodenverdichtungsmaschine erforderliche Antriebsenergie bereitgestellt wird. Die Antriebseinheit bezeichnet vorliegend somit das Primärantriebsaggregat der Bodenverdichtungsmaschine. Hierbei kann es sich beispielsweise um einen Verbrennungsmotor oder einen Elektromotor, handeln. Zur Energieversorgung des Primärantriebsaggregates kann die Bodenverdichtungsmaschine einen Treibstofftank und/oder eine Speichereinheit für elektrische Energie mit sich führen. Die konkrete Verdichtung des Bodenuntergrundes erfolgt mithilfe einer Bodenkontaktvorrichtung, beispielsweise mit einer auf dem Bodenuntergrund ab rollenden Bandage oder einer Bodenkontaktplatte. Die erfindungsgemäße Bodenverdichtungsmaschine umfasst ferner eine Steuereinheit, die den Fahrbetrieb der Bodenverdichtungsmaschine steuert. Die Steuereinheit bezeichnet somit eine Einrichtung, die entsprechende Steuerbefehle an die einzelnen zu steuernden Aggregate der Bodenverdichtungsmaschine, wie beispielsweise einen Fahrmotor, einer Erregereinrichtung, einen Lenkaktoren etc., übermittelt. Derartige Bodenverdichtungsmaschinen sind aus den eingangs genannten Schriften bekannt. Bevorzugt handelt es sich bei der Bodenverdichtungsmaschine um eine Rüttelplatte oder eine Grabenwalze.

Die erfindungsgemäße Bodenverdichtungsmaschine weist ferner eine Seitenwanddetektionsvorrichtung auf. Diese ist derart ausgebildet, dass sie in einem Bereich in Horizontalrichtung quer zu einer Vorwärtsfahrrichtung der Bodenverdichtungsmaschine das Vorhandensein einer gegenüber der Aufstandsfläche der Bodenverdichtungsmaschine in Vertikalrichtung aufragenden, insbesondere vom Boden aus in vertikaler Richtung aufragenden, Seitenwand erfassen kann. Mit "Seite" der Bodenverdichtungsmaschine wird vorliegend somit die bezüglich der Fahrrichtung horizontal gesehene rechte und linke Seite der Bodenverdichtungsmaschine bezeichnet. Entsprechend handelt es sich bei einer "Seitenwand" um einen Wand, die sich auf der rechten oder der linken Seite der Bodenverdichtungsmaschine befindet, so dass die Bodenverdichtungsmaschine in Fahrrichtung an dieser Seitenwand entlang fährt. Mithilfe der Seitenwanddetektionsvorrichtung kann die Bodenverdichtungsmaschine bzw. die Steuereinheit prüfen, ob sich in der aktuellen Position der Bodenverdichtungsmaschine eine Seitenwand bezüglich der Fahrrichtung der Bodenverdichtungsmaschine neben dieser befindet. Die Seitenwanddetektionsvorrichtung ist mit anderen Worten zur Detektion des Vorhandenseins wenigstens einer Seitenwand neben der Bodenverdichtungsmaschine ausgebildet. Hierauf aufbauend ist die Steuereinheit weiter derart ausgebildet, dass sie den Fahrbetrieb der Bodenverdichtungsmaschine in einem Autonomiemodus steuert. Es kann vorgesehen sein, dass alternativ auch ein Betrieb der Bodenverdichtungsmaschine in einem Bedienermodus möglich ist. Im Bedienermodus werden Fahrvorgaben von einem Bediener über eine manuell betätigbare Eingabeeinrichtung der Steuereinheit vorgegeben und von der Steuereinheit an das/die zu steuernden Aggregat/e weitergeleitet. Im Autonomiemodus dagegen werden die Fahrvorgaben von der Steuereinheit selbst vorgegeben und an das/die zu steuernden Aggregat/e weitergeleitet. Die Bodenverdichtungsmaschine bewegt sich im Autonomiemodus somit autonom bzw. selbstständig, ohne dass aktive Befehlseingaben eines Bedieners erforderlich sind. Entscheidungen über den Fahrbetrieb werden in diesem Fall von der Steuereinheit selbst getroffen. Wichtig ist nun, dass die erfindungsgemäße Bodenverdichtungsmaschine ferner eine Freigabeeinrichtung umfasst, die derart ausgebildet ist, dass sie den Autonomiemodus freigibt oder sperrt. Die Freigabeeinrichtung, die Teil der Steuereinheit sein kann, stellt somit eine Art übergeordnete virtuelle Entscheidungsinstanz dar. Die Aufgabe der Freigabeeinrichtung liegt darin, das Vorliegen für den Betrieb der Bodenverdichtungsmaschine im Autonomiemodus definierter Mindestvoraussetzungen zu prüfen. Damit ist sichergestellt, dass der Autonomiemodus grundsätzlich nur in einem nachstehend noch näher erläuterten Umgebungsumfeld der Bodenverdichtungsmaschine möglich ist. Ganz konkret ist es hier vorgesehen, dass die Freigabeeinrichtung derart ausgebildet ist, dass eine Freigabe des Autonomiemodus durch sie nur in Betriebssituationen erfolgt, in denen die Seitenwanddetektionsvorrichtung das gleichzeitige Vorhandensein zumindest einer quer zur Vorwärtsrichtung der Bodenverdichtungsmaschine befindlichen Seitenwand detektiert. Damit ist sichergestellt, dass die Bodenverdichtungsmaschine nicht willkürlich im Autonomiemodus betreibbar ist, sondern lediglich in einem Betriebsumfeld, in dem sie sich aktuell neben zumindest einer Seitenwand befindet, idealerweise zwischen zwei einander gegenüberliegenden Seitenwänden, wie es beispielsweise in einem Graben der Fall ist.

Grundsätzlich ist es möglich, die Seitenwanddetektionsvorrichtung derart auszubilden, dass sie auf zumindest einer der beiden Seiten der Bodenverdichtungsmaschine auf das Vorhandensein einer Seitenwand prüft. Dies kann unter Umständen bereits als ausreichend zuverlässiges Prüfkriterium dahingehend herangezogen werden, dass sich die Bodenverdichtungsmaschine zur Freigabe des Autonomiemodus beispielsweise in einem Graben befindet. Bevorzugt ist es jedoch, wenn die Seitenwanddetektionsvorrichtung derart ausgebildet ist, dass sie das Vorhandensein jeweils einer Seitenwand auf beiden Seiten der Bodenverdichtungsmaschine, gleichzeitig oder alternierend, detektiert und idealerweise dann von der Steuereinheit auch das gleichzeitige Vorhandensein jeweils einer Seitenwand auf beiden Seiten der Bodenverdichtungsmaschine als zu erfüllendes Kriterium zur Freigabe des Autonomiemodus genutzt wird. Eine gleichzeitige Detektion bedeutet dabei, dass zeitgleich zu beiden Seiten der Bodenverdichtungsmaschine das Vorhandensein einer Seitenwand detektiert wird. Eine alternierende Detektion bezeichnet dagegen eine zeitlich abwechselnden Detektion des Vorhandenseins einer Seitenwand auf beiden Seiten der Bodenverdichtungsmaschine, wie es beispielsweise bei einem um eine Achse schwenkenden oder rotierenden Sensor der Fall sein könnte, wie beispielsweise 2-D-und 3D-Lidarsensoren. Auf die mögliche konkrete Ausgestaltung der Seitenwanddetektionsvorrichtung wird nachstehend noch näher eingegangen werden.

Es ist nun vorteilhaft, wenn die Seitenwanddetektionsvorrichtung wenigstens einen Abstandssensor aufweist, der derart an der Bodenverdichtungsmaschine angeordnet ist, dass er hinsichtlich seiner Blickrichtung und/oder seines Erfassungsbereiches zumindest teilweise schräg oder parallel zur Horizontalebene zur Seite der Bodenverdichtungsmaschine hin ausgerichtet ist. Hiervon umfasst ist auch ein Abstandssensor, dessen Blickrichtung und/oder Erfassungsbereich horizontal und senkrecht zur Fahrrichtung der Bodenverdichtungsmaschine verläuft. Der an der Bodenverdichtungsmaschine angeordnete Abstandssensor bezeichnet somit zunächst erst einmal eine Einrichtung, die bevorzugt derart ausgebildet ist, dass sie ausgehend von der Bodenverdichtungsmaschine selbst in eine definierte Richtung innerhalb eines definierten Bereiches den Abstand zu einem von dem Abstandssensor, d.h. ausgehend von der Bodenverdichtungsmaschine, in der definierten Richtung innerhalb des definierten Bereiches liegenden Objekts ermitteln kann. Die Richtung bezeichnet dabei sozusagen die Blick- bzw. Ermittlungsrichtung des Abstandssensors. Diese kann ausgehend von dem Abstandssensor beispielsweise im Wesentlichen linear, konkret unter anderem in Form eines Messstrahls, oder beispielsweise im Wesentlichen kegelförmig, fächerförmig etc. sein. Im Fall der Nutzung eines scannenden Abstandssensors wird hier definitionsgemäß der gescannte Bereich zu Grunde gelegt. Der definierte Bereich kann insbesondere hinsichtlich des maximalen und/oder minimalen Seitenabstandes in einen minimal zulässigen und/oder einen maximal zulässigen Abstand zu der zu detektierenden Seitenwand festgelegt sein. Dies kann einerseits durch die Messfähigkeit des genutzten Abstandssensors an sich festgelegt sein und/oder ab Werk oder durch den Bediener durch eine entsprechende Steuerungsvorgabe limitiert werden.

Um das Vorhandensein jeweils einer Seitenwand auf beiden Seiten der Bodenverdichtungsmaschine zu erfassen, bestehen nun mehrere Möglichkeiten. Einerseits kann ein Abstandssensor genutzt werden, dessen Erfassungsbereich horizontal umlaufend ausgebildet ist. In einem solchen Fall bietet es sich an, den Abstandssensor auf der Oberseite, unter Umständen in vertikaler Richtung durch eine geeignete Lagereinrichtung, wie beispielsweise einen Lagermasten, nach oben versetzt gegenüber der restlichen Bodenverdichtungsmaschine zu positionieren. Im Hinblick auf eine angestrebte Gesamtkompaktheit der Bodenverdichtungsmaschine bei gleichzeitig zuverlässiger Seitenwanddetektion ist es jedoch bevorzugt, wenn die Seitenwanddetektionsvorrichtung wenigstens zwei Abstandssensoren aufweist, deren Erfassungsbereiche zumindest teilweise jeweils in Richtung zu einer der beiden Seiten der Bodenverdichtungsmaschine ausgerichtet sind. Damit ist für jede der beiden Seiten der Bodenverdichtungsmaschine somit jeweils wenigstens ein eigener Abstandssensor vorgesehen, so dass die Detektion des Vorhandenseins einer Seitenwand auf der rechten und auf der linken Seite über zueinander getrennte Abstandssensoren erfolgt. Diese Ausführungsform bringt insbesondere den Vorteil mit sich, dass der Abstandssensor baulich nicht vertikal exponiert, sondern auf Höhe der jeweiligen Seitenwand der Bodenverdichtungsmaschine platziert werden kann.

Für einen störungsfreien Ablauf des Betriebs der Bodenverdichtungsmaschine im Autonomiemodus ist es vorteilhaft, wenn die Seitenwanddetektionsvorrichtung möglichst umfassende Informationen über das Vorhandensein der Seitenwand/Seitenwände gewinnen kann. In einer erfindungsgemäß bevorzugten Weiterbildung ist es daher auch vorgesehen, dass die Seitenwanddetektionsvorrichtung auf wenigstens einer Seite der Bodenverdichtungsmaschine wenigstens zwei Abstandssensoren aufweist, die relativ zueinander derart angeordnet sind, dass ihre Erfassungsbereiche in eine Fahrtrichtung der Bodenverdichtungsmaschine gesehen zumindest teilweise hintereinander verlaufen. Baulich kann dies beispielsweise durch entsprechende Ausrichtung der Erfassungsbereiche der wenigstens zwei Abstandssensoren und/oder deren Positionierung in Fahrrichtung hintereinander erreicht werden. Ergänzend oder alternativ kann es auch vorgesehen sein, dass die wenigstens zwei Abstandssensoren derart relativ zueinander angeordnet sind, dass ihre Erfassungsbereiche in Vertikalrichtung der Bodenverdichtungsmaschine gesehen zumindest teilweise übereinander verlaufen. Dazu können abermals die Erfassungsbereiche der wenigstens zwei Abstandssensoren entsprechend ausgerichtet werden und/oder diese in Vertikalrichtung gesehen übereinander an der Bodenverdichtungsmaschine positioniert werden.

Für den Fall, dass die Bodenverdichtungsmaschine bezüglich ihres Erfassungsbereiches, insbesondere in Richtung zur Seite der Bodenverdichtungsmaschine, mehrere Abstandssensoren aufweist, können diese grundsätzlich auf dem gleichen Funktionsprinzip beruhend und sogar auch baugleich ausgebildet sein. Es kann allerdings auch vorteilhaft sein, wenn die wenigstens zwei Abstandssensoren in zueinander verschiedener Weise eine Abstandsmessung durchführen, in diesem Fall also verschiedene Funktionsprinzipien und/oder beispielweise Messwellenlängenbereiche (z.B. Ultraschall und Infrarot) und damit auch verschiedene Aufgaben miteinander kombiniert werden, insbesondere sogar zumindest gleiche Richtungen und/oder einander wenigstens teilweise überlappende Raumbereiche erfassend. Dies kann das potentielle Einsatzspektrum der erfindungsgemäßen Bodenverdichtungsmaschine insoweit erhöhen, als dass einige Abstandssensoren anfälliger für bestimmte Umgebungsbedingungen, wie beispielsweise Helligkeitsbedingungen, eine mögliche Staubbelastung der Luft etc., sein können, was durch Kombination mit anders arbeitenden Abstandssensoren im Idealfall nahezu kompensiert werden kann. Ganz konkret kann es dazu beispielsweise vorgesehen sein, dass ein Ultraschallsensor mit einem vergleichsweise großkeuligen Erfassungsbereich einen vergleichsweise großen, sich insbesondere auch in Vertikalrichtung erstreckenden, Bereich erfasst und gleichzeitig ein einen zumindest teilweise überlappenden Bereich erfassender 2-D-LRF-Sensor mit beispielsweise horizontaler Ausrichtung vorgesehen ist, der beispielsweise eine vergleichsweise exakte Wandmodellierung und damit beispielsweise Detektion von Wandunterbrechungen ermöglicht.

Hinsichtlich der konkreten Ausgestaltung des oder der verwendeten Abstandssensoren kann auf ein breites Spektrum zurückgegriffen werden. Beispielsweise ist es grundsätzlich möglich, hier auf einen mechanisch bzw. taktil wirkenden Abstandssensor, beispielsweise auf einen gegenüber der Bodenverdichtungsmaschine einlenkbaren Abstandsmessarm oder Ähnliches zurückzugreifen. Das Prinzip basiert hier darauf, dass der mechanische Abstandssensor ein Seitenwandkontaktelement aufweist, welches relativbewegbar zur übrigen Bodenverdichtungsmaschine an dieser gelagert ist und im Fahrbetrieb an der Seitenwand entlanggleitet. Die Seitenwand übt in diesem Falle somit einen Verlagerungsdruck auf das Seitenwandkontaktelement relativ zur übrigen Bodenverdichtungsmaschine aus und/oder löst eine Verlagerungsbewegung des Seitenwandkontaktelementes gegenüber der übrigen Bodenverdichtungsmaschine aus. Dieser Verlagerungsdruck und/oder diese Verlagerungsbewegung ist dann beispielsweise über einen Positionssensor, Wegsensor/Wegaufnehmen etc. ermittelbar. Dies kann von der Seitenwanddetektionsvorrichtung als Bestätigung des Vorhandenseins einer Seitenwand interpretiert werden. Bevorzugt ist jedoch der Rückgriff auf einen Abstandssensor, der zur berührungslosen Ermittlung eines Abstandes zu einer Seitenwand ausgebildet ist. Diese Sensoren ermitteln den Abstand zwischen Sensor und Messobjekt, im vorliegenden Fall der Seitenwand, kontaktfrei bzw. ohne physischen Kontakt. Dies können vorliegend insbesondere Laser-Sensoren, Ultraschallsensoren, Radar-Sensoren, Lidar-Sensoren oder auch eine oder mehrere Kameras, beispielsweise eine Stereovisionkamera oder 3D-Kamera, mit einer geeigneten Bildverarbeitungssoftware, die Nutzung strukturierten Lichts etc., zur berührungslosen Abstandsermittlung sein. Insbesondere kann die Steuereinheit auch eine Einrichtung zur Auswertung von Bilddaten erfassen und auf diese Weise beispielsweise das über eine Kamera aufgenommene Bild einer Grabenwand anhand von Farb- und/oder Kontrast- und/oder Strukturinformationen identifizieren. Derartige für eine Grabenwand charakteristische Informationen können abhängig vom Bodenmaterial, der Feuchte, der Zusammensetzung des Bodenmaterials etc. sein und zur tatsächlichen rechnerischen Identifikation einer Grabenwand aus einem aufgenommenen Bild von der Steuereinheit herangezogen werden.

Die Aufgabe der vorstehend beschriebenen Seitenwanddetektionsvorrichtung liegt im Wesentlichen darin, sicherzustellen, dass die Bodenverdichtungsmaschine im Autonomiemodus nahe zu wenigstens einer Seitenwand und idealerweise zwischen zwei in Fahrrichtung verlaufenden Seitenwänden positioniert ist. Für den tatsächlichen Fahrbetrieb der Bodenverdichtungsmaschine im Autonomiemodus ist es allerdings vorteilhaft, wenn ergänzend wenigstens ein Sensor vorhanden ist, der zur Erfassung eines in Fahrrichtung vor und/oder hinter der Bodenverdichtungsmaschine liegenden Bereiches ausgebildet ist, insbesondere eines Bereiches im Fahrweg der Bodenverdichtungsmaschine. Dieser Sensor ist somit Teil einer Fahrwegsdetektionsvorrichtung bzw. Hinderniserfassungsvorrichtung, deren Aufgabe in der Erfassung und Auswertung des Fahrwegs der Bodenverdichtungsmaschine und der Erkennung im Fahrweg befindlicher potentieller Hindernisse liegt, um beispielsweise eine Kollision der Bodenverdichtungsmaschine mit einem Hindernis zu vermeiden. Dies kann beispielsweise eine im Graben befindliche Person sein etc. Hinsichtlich der konkreten Ausgestaltung des Sensors kann grundsätzlich auf die vorstehenden Ausführungen zur Seitenwanddetektionsvorrichtung zurückgegriffen werden. So haben sich hier insbesondere auch geeignete Abstandssensoren und/oder Kamerasysteme bewährt. Neben der Möglichkeit zur vorstehend bereits beschriebenen vertikal exponierten Anordnung eines geeigneten Sensors bietet es sich hier an, den verwendeten wenigstens einen Sensor mit seinem Erfassungsbereich wenigstens teilweise in Fahrrichtung nach vorn oder nach hinten auszurichten und insbesondere an der Vorderseite und/oder der Rückseite der Bodenverdichtungsmaschine zu platzieren. Bevorzugt ist es, wenn der jeweils verwendete Sensor mit seinem Erfassungsbereich derart ausgerichtet ist, dass er zumindest einen Teil des im Fahrweg vor der Bodenverdichtungsmaschine liegenden Bodens erfasst. Ergänzend oder alternativ ist es vorteilhaft, wenn der wenigstens eine in Fahrrichtung ausgerichtete Sensor einen kleineren Öffnungswinkel als der wenigstens eine zur rechten oder linken Seite gerichtete Sensor aufweist.

Es kann vorgesehen sein, dass der wenigstens eine Sensor der Hinderniserfassungsvorrichtung und der wenigstens eine Sensor der Seitenwanddetektionsvorrichtung ein gemeinsamer Sensor ist oder zwei oder mehrere separate Sensoren, wobei diese bevorzugt derart positioniert werden, dass ihre Erfassungsbereiche einander überlappend angeordnet sind. Dies bietet den Vorteil, dass Aussagen zum Fahrweg und/oder zur Seitenwand redundant geprüft und damit zuverlässiger getroffen werden können. Die Erfassungsbereiche der jeweiligen Sensoren können sogar derart relativ zueinander ausgerichtet werden, dass insgesamt ein die Bodenverdichtungsmaschine, insbesondere auf Höhe der Bodenverdichtungsmaschine, umlaufender Erfassungsbereich erhalten wird. Ergänzend oder alternativ kann hier zudem, insbesondere bei Rückgriff auf eine oder mehrere Kameras, mithilfe einer geeigneten Software ein virtueller Blick aus der Vogelperspektive ("Birdview") erzeugt werden.

Wie zum erfindungsgemäßen Verfahren bereits angeführt, liegt eine bevorzugte Weiterbildung der Erfindung darin, dass die Bodenverdichtungsmaschine derart ausgebildet ist, dass sie im Autonomiemodus selbstständig externe und/oder virtuelle Markierungen erkennt, auswertet und entsprechend von der Steuereinheit gesteuert wird. Vorrichtungsmäßig ist es daher bevorzugt, wenn die Bodenverdichtungsmaschine eine Einrichtung zur, idealerweise berührungslosen, Erfassung wenigstens einer externen und/oder virtuellen Markierung umfasst. Hinsichtlich der möglichen konkreten Ausgestaltung der externen und/oder virtuellen Markierung wird auf die vorstehenden Ausführungen zum erfindungsgemäßen Verfahren Bezug genommen. Eine besonders geeignete Erfassungseinrichtung kann beispielsweise eine Kamera, ein RFID-Scanner, ein optischer Scanner etc. sein.

Teil der erfindungsgemäßen Bodenverdichtungsmaschine kann ferner eine Anzeigeeinrichtung zur Anzeige wenigstens eines oder mehrerer der nachfolgenden Betriebsparameter, insbesondere als Teile einer Fernbedienung und/oder Leitstelle, sein:
- Autonomiemodus ist angeschaltet und/oder ausgeschaltet; (gleiches gilt für den Bedienermodus)
- Autonomiemodus ist aktiv und/oder inaktiv;
- Autonomiemodus ist verfügbar und/oder nicht verfügbar;
- das Vorhandensein einer Seitenwand wird aktuell erkannt und/oder nicht erkannt;
- wenigstens ein aktuell ermittelter Abstand zu einer von der Seitenwanddetektionsvorrichtung detektierten Seitenwand (beide Seiten etc.);
- ein in Fahrrichtung vor und/oder hinter der Bodenverdichtungsmaschine bestehendes Hindernis wird erkannt und/oder nicht erkannt;
- es besteht eine aktive und/oder inaktive Signalverbindung zu einer Fernbedienung.
Für den Fall, dass die Anzeigeeinrichtung direkt an der Bodenverdichtungsmaschine angeordnet ist und sich mit dieser zusammen fortbewegt, kann beispielsweise auf entsprechende Anzeigeleuchten/- ampeln etc. zurückgegriffen werden. Neben einer optischen Anzeige ist insbesondere auch eine akustische Signalisierung, beispielsweise mittels einer Sirene und/oder Hupe, möglich. Im Fall einer Fernbedienung und/oder eines Leitstandes kommuniziert die Bodenverdichtungsmaschine über eine geeignete, bevorzugt kabellose, Signalübertragungsverbindung bevorzugt dauerhaft oder zumindest intervallartig mit der Fernbedienung und übermittelt an diese die entsprechenden vorstehenden Informationen. Dies kann ergänzend oder alternativ auch auf Anforderung durch einen Bediener erfolgen. Insbesondere für den Fall "Fernbedienung" kann es auch vorgesehen sein, dass der Autonomiemodus dann abgebrochen wird, wenn keine bestehende Signalübertragungsverbindung zwischen der Bodenverdichtungsmaschine und der Fernbedienung (oder zumindest in eine der beiden Richtungen) mehr besteht. Zur konkreten Ausgestaltung kann dazu beispielsweise auf das aus der DE102010014902A1 bekannte System zurückgegriffen werden mit der vorliegend weitergehenden Modifikation, dass die Bodenverdichtungsmaschine bei unterbrochener Signalverbindung zwischen der Fernbedienung und der Bodenverdichtungsmaschine zumindest gestoppt oder von der Steuereinheit zwangsweise der Abbruch des Autonomiemodus durchgeführt wird. Letzteres hat zur Folge, dass die Wiederaufnahme einer Signalverbindung zwischen Fernbedienung und Bodenverdichtungsmaschine nicht zur Fortsetzung des Fahrbetriebs der Bodenverdichtungsmaschine im Autonomiemodus führt, sondern dieser erst wieder erneut vom Bediener über die Fernbedienung aus dem Bedienermodus heraus initiiert werden muss. Es ist aber auch möglich, die Steuereinheit derart auszubilden, dass eine vorhandene Signalverbindung zwischen der Fernbedienung und der Bodenverdichtungsmaschine nur für den Bedienermodus erforderlich ist und dann, wenn die Bodenverdichtungsmaschine im Autonomiemodus betrieben wird, eine im Wesentlichen stehende Signalübertragungsverbindung von der Fernbedienung zur Bodenverdichtungsmaschine nicht erforderlich ist.

Es können ferner eine oder mehrere Einrichtungen zur Personenerkennung und/oder Anzeige, dass eine Person erkannt worden ist, an der Bodenverdichtungsmaschine vorgesehen sein.

Bei der erfindungsgemäßen Bodenverdichtungsmaschine handelt es sich bevorzugt um eine Grabenwalze oder eine Rüttelplatte, besonders bevorzugt mit jeweils einer Fernbedienung. Für die Grabenwalze ist es besonders bevorzugt, wenn diese knickgelenkt ausgebildet ist und entsprechend einen über ein Knickgelenk miteinander verbundenen Vorderrahmen und Hinterrahmen aufweist. Es ist dann weiter vorteilhaft, wenn die Seitenwanddetektionsvorrichtung derart ausgebildet ist, dass zumindest zu einer Seite der Grabenwalze in jeweils am Vorderwagen und am Hinterwagen ein Abstandssensor zur Detektion des Vorhandenseins einer Seitenwand vorgesehen ist. Für die Rüttelplatte ist es dagegen vorteilhaft, dass diese auf jeder Seite, d.h. auf der rechten und der linken Seite sowie auf der Vorderseite und auf der Rückseite jeweils einen Abstandssensor aufweist. Es kann allerdings vorteilhaft sein, wenn zur Abstandsermittlung zur bezüglich der Fahrrichtung rechten und linken Seite wenigstens zwei Sensoren vorgesehen sind.

Ein weiterer Aspekt der Erfindung liegt schließlich in einem System aus einer erfindungsgemäßen Bodenverdichtungsmaschine und einer mobilen Fernbedienung, wobei die Bodenverdichtungsmaschine über die mobile Fernbedienung manuell fernsteuerbar ist. Der wesentliche Aspekt dieses Erfindungsgedankens liegt darin, dass die Bodenverdichtungsmaschine bevorzugt derart ausgebildet ist, dass sie zumindest im Autonomiemodus Informationen an die Fernbedienung übermittelt, wie vorstehend beschrieben. Entsprechend wird hierzu auf die vorgenannten Ausführungen Bezug genommen.

Die erfindungsgemäße Bodenverdichtungsmaschine und das System aus einer erfindungsgemäßen Bodenverdichtungsmaschine und einer Fernbedienung sind schließlich besonders bevorzugt zur Durchführung des erfindungsgemäßen Verfahrens mit seinen bevorzugten Weiterbildungen ausgebildet.

Nachstehend wird die Erfindung anhand der in den Figuren dargestellten Ausführungsbeispiele näher erläutert. Es zeigen schematisch:
- Figur 1A:: Seitenansicht auf eine Bodenverdichtungsmaschine vom Typ Grabenwalze;
- Figur 1 B:: Frontalansicht auf die Grabenwalze aus Fig. 1A;
- Figur 2A:: Seitenansicht auf eine Bodenverdichtungsmaschine vom Typ Rüttelplatte;
- Figur 2B:: Frontalansicht auf die Rüttelplatte aus Figur 2A;
- Figur 3:: Schematische Draufsicht auf eine Bodenverdichtungsmaschine mit verschiedenen Anordnungsalternativen von Sensoren;
- Fig. 4A:: Schematische Draufsicht auf eine Bodenverdichtungsmaschine mit verschiedenen Anordnungsalternativen von Erfassungsbereichen von Sensoren;
- Fig. 4B:: Schematische Draufsicht auf eine Bodenverdichtungsmaschine mit weiteren verschiedenen Anordnungsalternativen von Erfassungsbereichen von Sensoren;
- Figur 5:: Frontalansicht auf eine Bodenverdichtungsmaschine innerhalb eines Grabens;
- Figur 6:: Frontalansicht auf eine Bodenverdichtungsmaschine innerhalb eines Grabens;
- Figur 7A:: Draufsicht auf einen Bewegungsablauf einer Bodenverdichtungsmaschine in einem Graben;
- Figur 7B:: Seitenansicht auf den Bewegungsablauf aus Figur 7A entlang der Linie I-I;
- Figur 7C:: Querschnittsansicht durch den Graben aus Fig. 7A entlang der Linie II-II;
- Figuren 8A bis 8C:: Verschiedene Bewegungsschemata;
- Figur 9:: Draufsicht auf eine Fernbedienung;
- Figur 10:: Ablaufdiagramm des Betriebs einer Bodenverdichtungsmaschine im Bedienermodus;
- Figur 11:: Ablaufdiagramm des Betriebs einer Bodenverdichtungsmaschine im Autonomiemodus; und
- Figur 12:: Ablaufdiagramm einer Kompensationsfunktion.

baugleiche und/oder funktionsgleiche Bauteile können in den Figuren mit ein und demselben Bezugszeichen bezeichnet sein. Nicht jedes sich in den Figuren wiederholende Bauteil oder jeder sich in den Figuren wiederholende Verfahrensschritt ist jedoch notwendigerweise in jeder Figur separat bezeichnet.

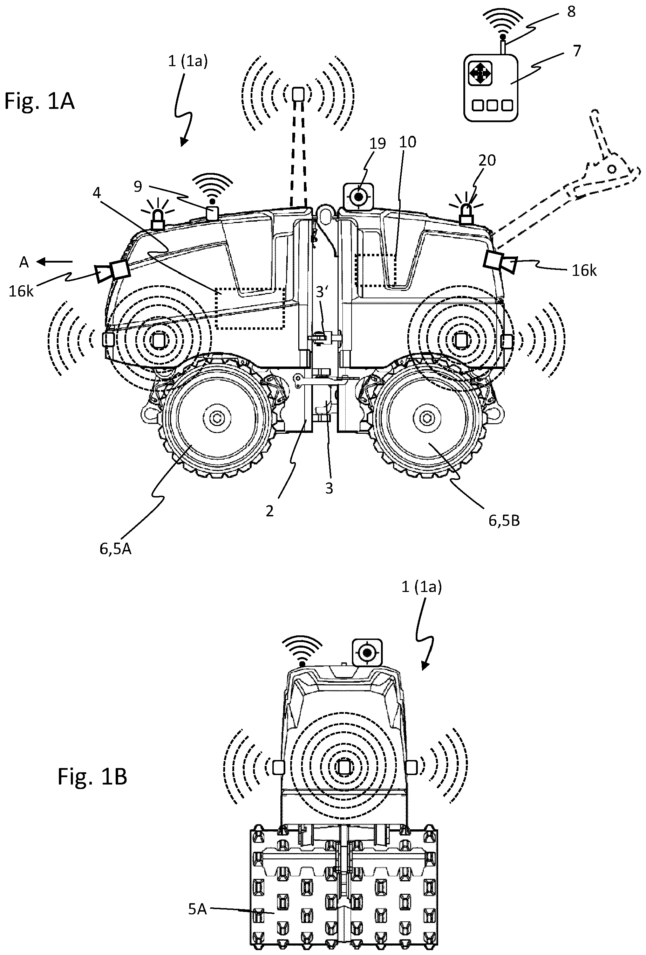

Die Figuren 1A und 1B zeigen eine Bodenverdichtungsmaschine 1 vom Typ Grabenwalze 1A. Wesentliche Elemente der Bodenverdichtungsmaschine 1 sind in diesem Fall ein Maschinenrahmen 2 mit beispielsweise einem Vorderrahmen 2A und einem Hinterrahmen 2B, die über ein Knickgelenk 3 miteinander verbunden sein können. Die Bodenverdichtungsmaschine 1 umfasst ein Primärantriebsaggregat 4, beispielsweise einen Verbrennungsmotor oder Elektromotor, über das die für den Fahrbetrieb der Bodenverdichtungsmaschine 1 erforderliche Antriebsenergie zur Verfügung gestellt wird. Die Bodenverdichtung erfolgt mittels der auf dem Bodenuntergrund abrollenden Verdichtungsbandagen 5, die entsprechend die Bodenkontaktelemente 6 darstellen. Zum Fahrantrieb der Verdichtungsbandagen 5 können ein oder mehrere Fahrantriebsmotoren, insbesondere Elektrooder Hydraulikmotoren vorgesehen sein. Zur manuellen Bedienung der Bodenverdichtungsmaschine 1 kann eine Einrichtung zur manuellen Eingabe von Steuerungsbefehlen an der Bodenverdichtungsmaschine 1 direkt (wie in Figur 1A durch die in Phantomlinien angeordnete Lenkdeichsel angedeutet) oder eine Fernbedienung 7 vorgesehen sein. In diesem Fall umfasst die Fernbedienung 7 wenigstens einen Sender 8 und die Bodenverdichtungsmaschine 1 einen Empfänger 9.

Die Bodenverdichtungsmaschine 1 umfasst ferner eine Steuereinheit 10, die den Betrieb unter anderem des Primärantriebsaggregat 4 des Fahrantriebs, insbesondere des wenigstens einen Fahrantriebsmotor, sowie im vorliegenden Ausführungsbeispiel einen Lenkaktor 3' des Knickgelenks 3 steuert. Es ist auch jedoch auch eine Ausbildung der Grabenwalze ohne Knicklenkung und Lenkaktor mit einem durchgehenden Starrahmen möglich. In diesem Fall erfolgt die Lenkung über die Koordination der Fahrbewegung der vorderen und hinteren Bandagenpaare ("Panzerlenkung"). Ferner empfängt die Steuereinheit 10 die über die Fernbedienung 7 und/oder eine an der Bodenverdichtungsmaschine 1 direkt angeordnete manuell betätigte Eingabeeinrichtung eingegebenen Bedienbefehle und setzt diese in entsprechende Steuerbefehle bzw. Fahrsteuersignale innerhalb der Bodenverdichtungsmaschine 1 um.

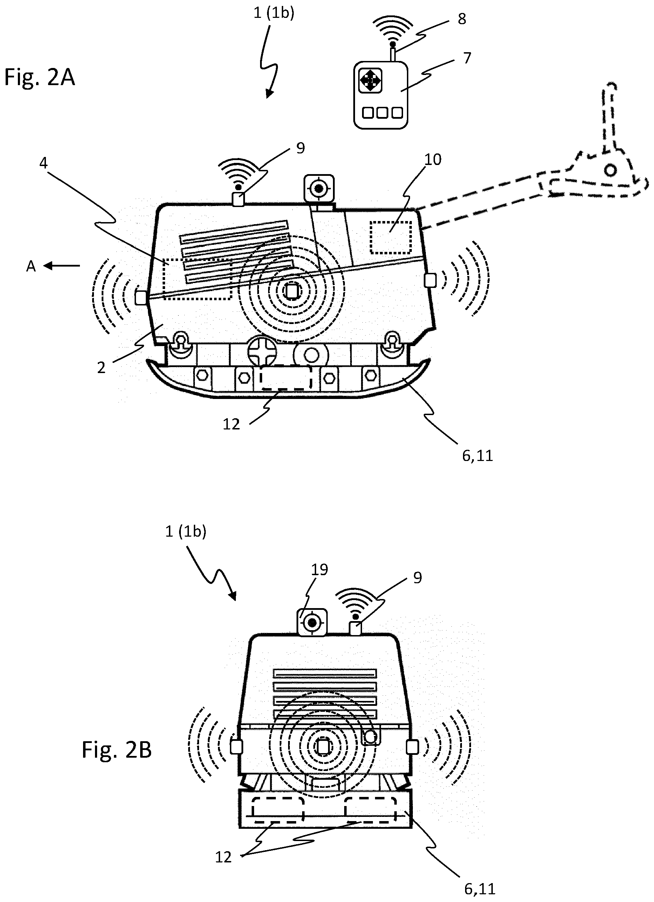

Die Figuren 2A und 2B zeigen eine Bodenverdichtungsmaschine 1 vom Typ Rüttelplatte 1B. Im Wesentlichen wird zur Beschreibung der einzelnen Elemente auf die entsprechenden Ausführungen zu den Figuren 1A und 1B Bezug genommen. Im Unterschied zu der Grabenwalze 1A weist die Rüttelplatte 1B als Bodenkontaktelement 6 eine Vibrationsplatte 11 auf. Die Fortbewegung der Rüttelplatte 1B wird somit durch einen über einen oder mehrere Unwuchterreger 12 in an sich bekannter Weise erreicht.

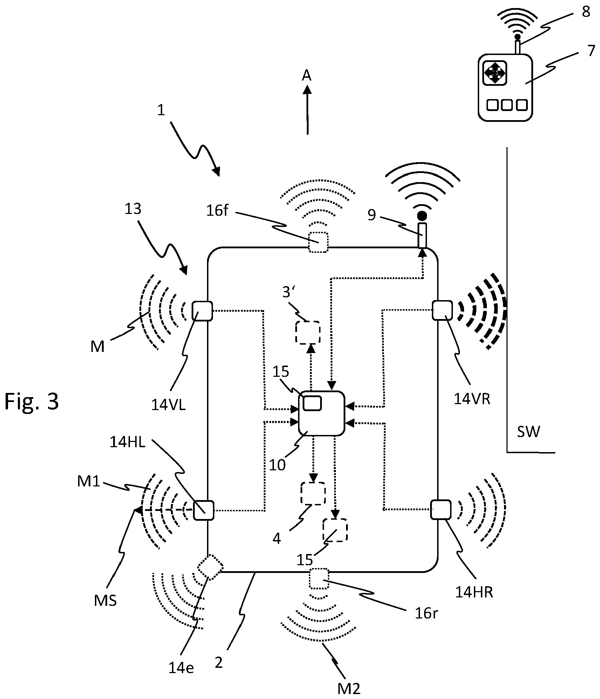

Für den Betrieb der Bodenverdichtungsmaschine 1 ist ein Bedienermodus und ein Autonomiemodus vorgesehen. Im Bedienermodus erfolgt die Steuerung des Arbeitsbetriebes, insbesondere des Fahr-, Lenk- und/oder Erregerbetriebs, über die manuelle Eingabe entsprechender Betriebsvorgaben, beispielsweise über eine an der Bodenverdichtungsmaschine 1 angeordnete manuell betätigter Eingabeeinrichtung oder eine Fernbedienung durch einen Bediener. Ein Betrieb der Bodenverdichtungsmaschine 1 im Autonomiemodus ist dagegen nur unter bestimmten Voraussetzungen möglich. Dies kann insbesondere das Erfordernis der Detektion des Vorhandenseins wenigstens einer Seitenwand neben der Bodenverdichtungsmaschine 1 umfassen, wie nachstehend noch näher beispielhaft erläutert. Aus diesem Grund ist Teil der Bodenverdichtungsmaschine 1 ferner eine Seitenwanddetektionsvorrichtung 13, deren prinzipieller Aufbau zunächst beispielhaft anhand von Figur 3 näher erläutert wird. Im Autonomiemodus erzeugt die Bodenverdichtungsmaschine 1 bzw. die Steuereinheit 10 Betriebsvorgaben selbst bzw. trifft selbst Entscheidungen hinsichtlich Fahr- und/oder Lenkbefehlen. Sie bewegt sich somit in diesem Modus autonom bzw. selbsttätig und nicht auf Grundlage einzelner manuell getätigter Fahr- und/oder Lenkvorgaben.

Schematisch gibt Figur 3 eine Draufsicht auf die Bodenverdichtungsmaschine 1 wieder. Die Seitenwanddetektionsvorrichtung 13 umfasst wenigstens eine Einrichtung, die zur Erfassung einer gegenüber dem Bodenuntergrund, auf dem die Bodenverdichtungsmaschine 1 aufsteht, aufragenden Seitenwand SW in Fahrrichtung A gesehen neben der Bodenverdichtungsmaschine 1 ausgebildet ist. Die Aufgabe und Funktion der Seitenwanddetektionsvorrichtung 3 liegt funktional gesehen somit darin, insbesondere zur Freigabe des Autonomiemodus und/oder im Fahrbetrieb im Autonomiemodus, zu prüfen, ob sich aktuell neben der Bodenverdichtungsmaschine 1 eine Seitenwand SW befindet. "Neben" bezeichnet dabei einen in Vertikalrichtung oberhalb der Aufstandfläche der Bodenverdichtungsmaschine und in der Horizontalebene senkrecht zur Fahrrichtung befindlichen Raum, insbesondere zumindest teilweise auf Höhe der Bodenverdichtungsmaschine. Die Fahrrichtung A bezeichnet die aktuelle Fahrrichtung der Bodenverdichtungsmaschine 1, wobei hier eine Vorwärtsfahrrichtung und eine entgegengesetzte Rückwärtsrichtung mit umfasst sind. Diese können im Wesentlichen frei an der jeweiligen Bodenverdichtungsmaschine 1 definiert werden. In den Figuren ist exemplarisch die Vorwärtsrichtung als Fahrrichtung A angegeben. Die Seitenwand/-wände SW, auf die es vorliegend ankommt, befindet/-en sich somit in der Horizontalebene senkrecht nach rechts und/oder nach links relativ zu Vorwärtsfahrrichtung A. Zur Detektion wenigstens einer neben der Maschine befindlichen Seitenwand können ein oder mehrere geeignete Sensoren 14 an der Bodenverdichtungsmaschine 1 vorgesehen sein. Im vorliegenden Ausführungsbeispiel gemäß der Figur 3 umfasst die Seitenwanddetektionsvorrichtung 13 insgesamt die vier Einzelsensoren 14VL (vorne links), 14HL (hinten links), 14VR (vorne rechts) und 14HR (hinten rechts). Die Anzahl der Sensoren pro Seite ist dabei im Umfang der Erfindung variabel. So kann beispielsweise auch bereits ein Sensor auf jeder Seite ausreichend sein. Der oder die Sensoren 14 übermitteln ihre Messwerte an eine Freigabeeinrichtung 15, bei der es sich baulich wie funktional um ein zur Steuereinheit 10 separates Modul oder, wie im vorliegenden Ausführungsbeispiel, um einen in die Steuereinheit 10 integriertes Element handeln kann. Die Freigabeeinrichtung 15 prüft, ob ein oder mehrere der Sensoren 14 das Vorhandensein einer Seitenwand detektieren. Jeder Sensor umfasst dazu einen Messbereich M1. Der Messbereich bezeichnet denjenigen Raum, innerhalb dessen der jeweilige Sensor eine Abstandsermittlung vornehmen kann. Dieser Raum weist beispielsweise üblicherweise einen Maximal- und/oder einen Minimalabstand zum jeweiligen Sensor auf. In Fig. 3 sind aus Übersichtlichkeitsgründen beispielhaft nur die einzelnen Messbereiche der Sensoren 14VL und 14HL bezeichnet. Üblicherweise und unabhängig von den vorliegenden Ausführungsbeispielen wird vorab für jeden Sensor ein Messbereich definiert werden (beispielsweise per Software), innerhalb dessen er eine Abstandsermittlung vornehmen soll. Dieser Messbereich ist vorzugsweise kleiner als der theoretisch maximal mögliche Messbereich des jeweiligen Sensors.

Eine tatsächliche Detektion einer Seitenwand SW ist in der Figur 3 mit dem Sensor 14VR näher veranschaulicht. Sensoren, die aktuell das Vorhandensein einer Seitenwand (oder eines Objektes) innerhalb ihres Messbereiches M erfassen, sind in dieser und den nachstehenden Figuren dickgedruckt hervorgehoben. Dies ist in Figur 3 auf der rechten Seite mit der beispielhaften Seitenwand SW veranschaulicht. Der Sensor 14VR trifft auf die Seitenwand SW und übermittelt dies entsprechend an die Freigabeeinrichtung der 15 Steuereinheit 10. Die übrigen Sensoren 14HR, 14VL und 14HL hingegen treffen im Bereich ihrer Messreichweite dagegen in Fig. 3 aktuell auf keine Seitenwand. Die Freigabeeinrichtung 15 kann nun in diesem Fall derart ausgebildet sein, dass sie die Freigabe des Autonomiemodus blockiert, da in Bezug auf den auf der einen Seite maximal möglichen Seitenerfassungsbereich nur ein Teil der zu dieser Seite detektierenden Sensoren eine Seitenwand SW detektiert. Möchte der Bediener in diesem Fall die Bodenverdichtungsmaschine 1 in den Autonomiemodus versetzen, wird dies von der Freigabeeinrichtung 15 entsprechend blockiert. Die Freigabeeinrichtung 15 ist in diesem Fall somit derart ausgebildet, dass zur Freigabe des Autonomiemodus sämtliche der auf einer Seite der Maschine detektierenden Sensoren 14 gleichzeitig das Vorhandensein einer Seitenwand SW detektieren müssen. Es ist jedoch auch möglich, dass die Freigabeeinrichtung 15 den Autonomiemodus bereits in dem in Figur 3 gezeigten Fall freigibt. Dann ist die Freigabeeinrichtung 15 zur Freigabe des Autonomiemodus somit derart ausgebildet, dass wenigstens einer der auf der Seite detektierenden Sensoren das Vorhandensein einer Seitenwand SW aktuell detektiert. In Weiterbildung dieses Grundansatzes ist es auch möglich, dass zur Freigabe des Autonomiemodus die gleichzeitige Detektion jeweils einer Seitenwand auf beiden Seiten der Bodenverdichtungsmaschine von jeweils mindestens einem, vorzugsweise mehreren, Sensor oder die Detektion des Vorhandenseins einer Seitenwand aller Sensoren 14 zur Freigabe des Autonomiemodus erforderlich ist. Sind mehr als zwei Sensoren zur Seitenwanddetektion auf einer Seite der Bodenverdichtungsmaschine vorhanden, ist es auch möglich, dass die Freigabeeinrichtung 15 den Autonomiemodus erst dann freigibt, wenn gleichzeitig wenigstens zwei (oder mehr) aber nicht alle auf dieser Seite vorgesehenen Sensoren die Präsenz einer Seitenwand neben der Bodenverdichtungsmaschine detektieren.

Unabhängig vom konkreten Ausführungsbeispiel ist es somit bevorzugt, wenn die Freigabeeinrichtung 15 eine hierarchisch den (weiteren) Steuerfunktionen der Steuereinheit 10 übergeordnete Instanz ist, die in Abhängigkeit vom über die Seitenwanddetektionsvorrichtung 13 erfassten Ergebnis (d.h. abhängig davon, ob aktuell das Vorhandensein wenigstens einer Seitenwand neben der Bodenverdichtungsmaschine bestätigt wird oder nicht) den Autonomiemodus freigibt oder sperrt.

Die Steuereinheit 10 steuert das Primärantriebsaggregat 4 und weitere Elemente 3, insbesondere Arbeits- und Steuereinrichtungen, wie beispielsweise den Betrieb eines oder mehrerer Unwuchterreger und/oder des Lenkfaktors 3' (wenn vorhanden). Die Freigabeeinrichtung 15 kann ferner in Verbindung mit der manuell betätigten Eingabeeinrichtung stehen, sei es, wie in Figur 3 gezeigt, über eine Kabelverbindung oder kabellos über den Empfänger 9 mit einer Fernbedienung 7, oder zu einer direkt an der Bodenverdichtungsmaschine 1 angeordneten Eingabeeinrichtung. Der Empfänger 9 kann zudem auch als Sende- und Empfangseinheit ausgebildet sein, so dass die Freigabeeinrichtung 15 und/oder die Steuereinheit 10 Daten an die Fernbedienung übermitteln können. Auch eine Datenübermittlung an eine Anzeigeeinrichtung 15 ist möglich. Diese kann an der Bodenverdichtungsmaschine 1 und/oder an der Fernbedienung 7 angeordnet sein.

Die Bodenverdichtungsmaschine 1 kann ergänzend zu dem wenigstens einen Sensor 14 der Seitenwanddetektionsvorrichtung 13 ferner einen oder mehrere Hindernissensoren 16 aufweisen, die wenigstens teilweise mit ihrem jeweiligen Erfassungsbereich M2 in und entgegen der Fahrrichtung A ausgerichtet sind. Der Erfassungsbereich M2 dieses wenigstens einen Hindernissensors 16 (in Fig. 3 Hindernissensor 16f nach vorn und 16r nach hinten) umfasst somit einen ausgehend von der Bodenverdichtungsmaschine 1 in oder entgegen der Fahrrichtung A der Maschine vor oder hinter der Maschine liegenden Raumbereich. Optimal ist es, wenn der Erfassungsbereich M2 insbesondere dieser Sensoren in oder entgegen der Fahrrichtung von der Bodenverdichtungsmaschine 1 ausgehend zumindest auch teilweise in Vertikalrichtung nach unten gerichtet zum Boden abfallend verläuft. Mithilfe des wenigstens einen Hindernissensors 16 kann somit die Erfassung von im Fahrweg A der Bodenverdichtungsmaschine 1 gegenüber der aktuellen Aufstandfläche der Bodenverdichtungsmaschine in Vertikalrichtung nach unten und/oder nach oben verlaufender Hindernisse erfolgen, wie beispielsweise ein im Fahrweg liegendes Objekt, eine Person, eine Grube etc. Neben einem Schutz von in der Nähe der Maschine befindlichen Personen kann mithilfe des Hindernissensors 16 insbesondere auch beispielsweise das Ende eines Grabens anhand der im Fahrweg vor der Maschine liegenden Grabenwand ermittelt werden und, wie nachstehend noch näher beschrieben, die im Autonomiemodus befindliche Maschine gestoppt oder auch reversiert werden.

Es ist auch möglich, den oder die Sensoren 14, 16 derart anzuordnen, dass er/sie mit seinem/ihrem Erfassungsbereich M1/M2 sowohl in Richtung Seitenwand SW bzw. zur Seite der Bodenverdichtungsmaschine 1 als auch in oder entgegen der Fahrrichtung A ausgerichtet ist/sind, wie in Fig. 3 exemplarisch mit dem auf einer Ecke der Maschine 1 platzierten Sensor 14e angegeben. Es versteht sich, dass eine derartige Positionierung an mehreren und insbesondere allen Übergangsbereichen zwischen den bezüglich der Fahrrichtung A Seitenbereichen und dem Front- oder Heckbereich der Maschine 1 vorgesehen sein kann. Je nach Erfassungsbereich kann ein solcher Sensor sowohl als Hindernissensor der Hinderniserfassungsvorrichung 17 als auch als Sensor der Seitenwanddetektionsvorrichtung 13 wirken.

Hinsichtlich der Ausgestaltung des Erfassungsbereiches M des oder der Sensoren 14 der Seitenwanddetektionsvorrichtung 13 und der Hinderniserfassungsvorrichtung 17 mit den Hindernissensoren 16 und deren Relativausrichtung zueinander bestehen ebenfalls verschiedene alternative Möglichkeiten. Grundsätzlich ist es möglich, die Sensoren derart anzuordnen, dass ihre einzelnen Erfassungsbereiche im Wesentlichen überlappungsfrei zueinander sind, wie beispielsweise in der Fig. 3 angedeutet. Dies kann insbesondere dann der Fall sein, wenn der Erfassungsbereich des jeweiligen Sensors nicht kegel-, fächer- oder kugelförmig ist, sondern im Wesentlichen strahlenförmig, wie beispielhaft in Fig. 3 für den Sensor 14HL mit dem Messtrahl MS angedeutet.

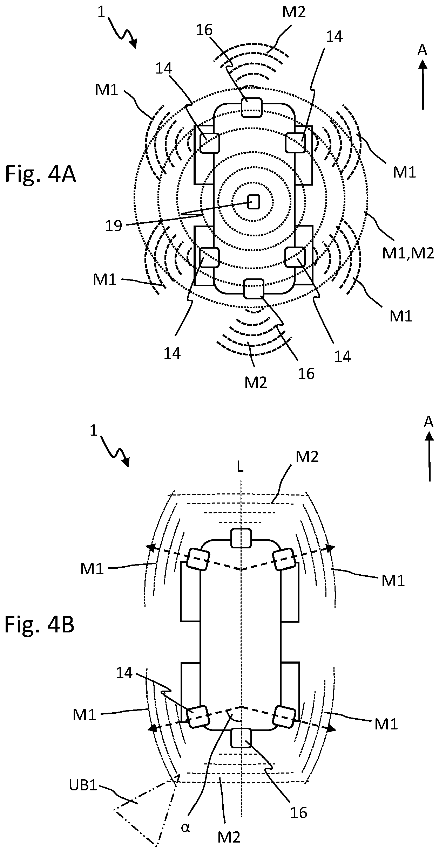

Es kann jedoch auch vorteilhaft sein, wenn die Messbereiche der jeweiligen Sensoren zumindest teilweise einander überlappend verlaufen. Dies ist in den Figuren 4A und 4B beispielhaft näher veranschaulicht. In Figur 4A umfasst die Bodenverdichtungsmaschine beispielsweise die Sensoren 14 und 16, wie vorstehend in Fig. 3 näher beschrieben. Jeder der Sensoren 14 der Seitenwanddetektionsvorrichtung 13 weist einen Erfassungsbereich M1 auf (diese können untereinander auch variieren). Die Erfassungsbereiche der Hindernissensoren 16 sind mit M2 bezeichnet. Die Erfassungsbereiche M1, M2 können beispielsweise, wie in Fig. 4A gezeigt, kegelförmig sein. Ergänzend oder alternativ kann wenigstens ein in Bezug auf die Horizontalausdehnung der Maschine 1 innerhalb der Maschinenaußenkanten, insbesondere in Bezug auf die Maschinenaußenkante in der Horizontaleben im Wesentlichen zentral angeordneter, Sensor 14z vorhanden sein, dessen Erfassungsbereich mit "M1,M2" bezeichnet ist. Eine solche Anordnung kann beispielsweise durch Positionierung dieses Sensors 14z auf der Oberseite der Maschinenaußenhaut oder an einem in Vertikalrichtung aufragenden Mast erfolgen. Ein solcher Sensor 14z kann scannend und/oder um einer vertikale Achse mit seinem Erfassungsbereich rotieren ausgebildet sein. Der Sensor 14z ist nun bevorzugt derart angeordnet, dass sein Erfassungsbereich M1,M2 gleichzeitig zur Seitenwanderfassung als auch zur Hinderniserkennung genutzt werden kann. Dies kann beispielsweise ein 3D-Lidar-Sensor sein. Im vorliegenden Ausführungsbeispiel ist der Sensor 14z jergänzend zu den Sensoren 14 und/oder 16 vorgesehen. Dazu kann es optimal sein, wenn der Erfassungsbereich M1,M2 des Sensors 14z wenigstens teilweise mit einem oder mehreren oder sämtlichen Erfassungsbereichen M1, M2 der Seitenwanddetektionsvorrichtung 13 und/oder der Hinderniserfassungsvorrichtung 17 überlappt. Mit anderen Worten sind die Sensoren 14z und 14 und/oder 16 dann derart angeordnet, dass mit den Erfassungsbereichen M1 (Sensoren 14) und M2 (Sensoren 16) und M1,M2 (Sensor 14z) wenigstens teilweise gleiche Raumabschnitte erfasst bzw. abgedeckt werden. Dies kann in vielerlei Hinsicht vorteilhaft sein. Einerseits wird hierdurch eine Redundanz geschaffen, die die Betriebssicherheit der Bodenverdichtungsmaschine 1 insbesondere im Autonomiemodus erhöht. Andererseits kann dadurch eine zuverlässigere und präzisere Erfassung und Detektion einer oder mehrerer Seitenwände und/oder von Hindernissen erfolgen, da damit für ein und denselben Raumbereich über zwei Sensoren auf zwei verschiedene Blickwinkel zurückgegriffen werden kann.

Der Sensor 14z könnte auch autark bzw. für sich sowohl zur Hindernisüberwachung als auch zur Seitenwanderkennung genutzt werden und somit, im Extremfall exklusiv, gleichzeitig den Sensor für die Seitenwanddetektionsvorrichtung 13 und die Hinderniserfassungsvorrichtung 17 bilden. Es kann auch vorgesehen sein, dass mehrere derartige Sensoren 14z zur Seitenwanderkennung und/oder zur Hinderniserkennung genutzt werden. Insbesondere für eine Grabenwalze kann es dabei optimal sein, wenn ein solcher Sensor im Bereich der in Fahrrichtung vorderen Maschinenhälfte und eine weiterer solcher Sensor im Bereich der hinteren Maschinenhälfte positioniert ist. Insbesondere für eine knickgelenkte Grabenwalze ist es somit bevorzugt, wenn ein solcher Sensor 14z am Vorderwagen und ein weiterer solcher Sensor 14z am Hinterwagen angeordnet ist.

Fig. 4B veranschaulicht ein weiteres mögliches Beispiel einander wenigstens teilweise überlappender Sensorbereiche. Dabei kann Fig. 4B entnommen werden, dass die Sensoren 14 der Seitenwanddetektionsvorrichtung 13 hier in der Horizontalebene nicht senkrecht zur Fahrrichtung A sondern bezüglich ihres jeweiligen Erfassungsbereiches M1 in und entgegen der Fahrrichtung A um den Winkel α geneigt angeordnet sein können. Dieser Winkel ist in der Horizontalebene definiert durch die Fahrrichtung A und die vom jeweiligen Sensor 14 abgehende Mittelachse des jeweiligen Erfassungsbereiches M1 (in Fig. 4B jeweils mit gestrichelten Pfeilen angegeben). Die Verkippung in der Horizontalebene erfolgt beispielsweise konkret derart, dass die Mittelachse in der Horizontalebene jeweils zum dem jeweiligen Sensor in Längsrichtung der Bodenverdichtungsmaschine gesehen näher liegenden Maschinenende geneigt ist. Einander auf einer Seite der Maschine 1 benachbarte Sensoren 14 können im Wesentlichen zueinander überlappungsfreie oder auch einander überlappende Erfassungsbereiche M1 aufweisen. Durch diese Anordnung kann aber insbesondere auch die Überlappung der Erfassungsbereiche wenigstens eines Sensors 14 der Seitenwanddetektionsvorrichtung 13 und wenigstens eines Sensors 16 der Hinderniserfassungsvorrichtung erhalten werden. Ein solcher Überlappungsbereich UB1 ist in Fig. 4B exemplarisch für einen bezüglich der Fahrrichtung A hinten links liegende Bereich mit strichpunktierter Umrandung hervorgehoben. Es versteht sich, dass dies lediglich der schematischen Veranschaulichung dieses Anordnungsprinzips dient und nicht dahingehend zu verstehen ist, dass der oder die Erfassungsbereiche der Sensoren 14/16 beispielsweise notwendigerweise abrupt enden. Durch die Neigung der Erfassungsbereiche M1 der Sensoren 14 gelingt es vorliegend, beispielsweise insbesondere die Eckbereiche der Maschinenumgebung optimal zu erfassen, was beispielsweise für eine exakte Seitenwanderkennung besonders vorteilhaft sein kann. Optimal kann es dabei sein, wenn sämtliche vier Eckbereiche (bezogen auf eine horizontale Ebene) erfasst werden. Durch die im vorliegenden Ausführungsbeispiel bevorzugte gegenüber der in Fahrrichtung A verlaufenden Maschinenlängsachse L spiegelsymmetrische Anordnung der Sensoren der Seitenwanddetektionsvorrichtung 13 und der Hinderniserfassungsvorrichtung 17 gelingt dies beispielsweise mit einer Anordnung, wie in Fig. 4B angegeben.

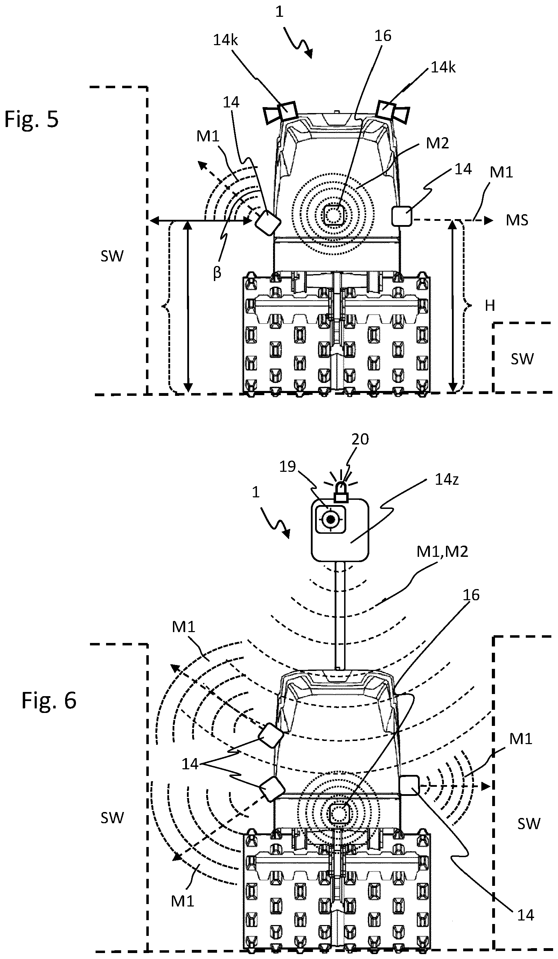

Die Figuren 5 und 6 veranschaulichen nun weitere mögliche Anordnungsdetails in Bezug auf eine vertikal verlaufende Bezugsebene. In beiden Ansichten verläuft die Fahrrichtung A definitionsgemäß aus der Bildebene heraus auf den Betrachter zu. Auch wenn in den Figuren eine Grabenwalze als Beispiel einer Bodenverdichtungsmaschine 1 angegeben ist, gelten insbesondere auch die nachstehenden Angaben in gleicher Weise für eine als Rüttelplatte ausgebildete Bodenverdichtungsmaschine.

Fig. 5 veranschaulicht zunächst zwei mögliche Anordnungen des/der Senoren 14 in Bezug auf die Ausrichtung des/der Erfassungsbereiches/e in der Vertikalebene. Rechts ist beispielsweise ein horizontal verlaufender Messtrahl MS angegeben. Dieser verläuft mit einem Vertikalabstand H zum Bodenuntergrund. Aufgrund dieser Anordnung setzt die detektierbare Seitenwand SW somit eine im Wesentlichen H entsprechende Mindesthöhe voraus. Ist die Seitenwand SW niedriger als H, kann sie nicht erkannt werden. Dies ist in Fig. 5 mit der Seitenwand SW auf der rechten Seite gezeigt. Diese Seitenwand hat eine Höhe vom Bodenuntergrund aus, die kleiner als H ist. In diesem Fall würde diese Variante der Seitenwanddetektionsvorrichtung 13 somit auch nicht das Vorhandensein einer Seitenwand SW detektieren und entsprechend (für sich) eine Freigabe des Autonomiemodus ermöglichen. Detektierbare Seitenwände SW müssen in diesem Fall somit eine der Höhe H entsprechende Mindesthöhe (vom Boden aus gesehen) aufweisen.

Auf der linken Seite ist dagegen ein Sensor 14 der Seitenwanddetektionsvorrichtung 13 gezeigt, der ein im Wesentlichen kegelförmigen Erfassungsbereich aufweist. Die Achse (gestrichelter Pfeil in M1) des Erfassungskegels ist vom Sensor 14 ausgehend in Vertikalrichtung nach oben angestellt (gegenüber der Horizontalen im Winkel β). Dieses Anwinkeln kann beispielsweise derart erfolgen, dass die Unterkante des Erfassungsbereiches M1 oder die Oberkante des Erfassungsbereiches M1 im Wesentlichen horizontal verläuft. Auf diese Weise kann einerseits erneut eine "Mindesthöhe" der detektierbaren Seitenwand SW konstruktiv festgelegt werden oder aber gezielt eine "Blickrichtung" des jeweiligen Sensors nach oben und/oder nach unten erreicht werden. Dies kann ja nach Positionierung des jeweiligen Sensors 14 an der Maschine vorteilhaft sein. Selbstverständlich kann eine entsprechende Ausrichtung auch nach unten bzw. schräg zum Boden gerichtet erfolgen.

Fig. 6 veranschaulicht weitere Alternativen hinsichtlich der Ausrichtungen der Sensoren der Seitenwanddetektionsvorrichtung 13. Der Sensor 14 auf der rechten Seite ist beispielsweise derart an der Maschinenseite positioniert, dass sein Erfassungsbereich M1 mit seiner Längsmittelachse im Wesentlichen horizontal verläuft. Auf der linken Seite ist dagegen ein Sensorpaar mit zwei in Vertikalrichtung übereinander angeordneten Sensoren 14 dargestellt. Es können auch mehr als zwei Sensoren in Vertikalrichtung übereinander positioniert werden. Die übereinander angeordneten Sensoren 14 können ferner bezüglich der Ausrichtung ihrer einzelnen Erfassungsbereiche M1 ebenfalls einander überlappend oder überlappungsfrei zueinander positioniert sein. Darüber hinaus können sie in Vertikalrichtung zueinander in einander entgegengesetzte Richtung schräg ausgerichtet sein, wie in Fig. 6 gezeigt. Der in Vertikalrichtung obere Sensor 14 ist schräg nach oben und der in Vertikalrichtung untere Sensor 14 ist schräg nach unten ausgerichtet.

Fig. 6 veranschaulicht ferner eine mögliche Ausrichtungsoption für den zentralen Sensor 14z, der beispielsweise ergänzend oder alternativ zu einem oder mehreren der Sensoren 14 und 16 vorgesehen sein kann. Der Sensor 14z kann beispielsweise auf der Oberseite der Maschine oder sogar gegenüber der übrigen Maschine in Vertikalrichtung nach oben mithilfe einer Beabstandungsvorrichtung 18 versetzt positioniert sein. Die Beabstandungsvorrichtung 18, beispielsweise ein Lagermast, kann demontierbar oder zwischen einer platzsparenden Lager- und einer Betriebsposition verstellbar sein. Der Sensor 14z ist bezüglich seines Erfassungsbereiches M1,M2 derart ausgerichtet, dass er zumindest teilweise von ihm ausgehend den in Vertikalrichtung nach unten liegenden Raumbereich vor und/oder neben der Maschine 1 erfasst.

Ergänzend oder alternativ kann die Bodenverdichtungsmaschine auch einen GPS-Empfänger 19 umfassen, beispielsweise an oder innerhalb der Maschinenverkleidung (Fig. 1A bis 2B) oder an der Beabstandungsvorrichtung 18 (Fig. 6). Damit ist eine Positionsbestimmung der Maschine 1 möglich, die beispielsweise zu Steuerungs- und/oder Ortungszwecken genutzt werden kann.

Hinsichtlich der vorstehend angegebenen Ausführungsvarianten, insbesondere in Bezug auf die Ausrichtung eines oder mehrerer Sensoren, wird an dieser Stelle vorsorglich festgehalten, dass über die gegebenen Ausführungsbeispiele hinaus eine Vielzahl von weiteren Anordnungsvarianten möglich und von der Erfindung mit umfasst sind. Ein wesentlicher Aspekt, insbesondere bei der Anordnung der Sensoren 14 der Seitenwanddetektionsvorrichtung 13, besteht darin, dass das Vorhandensein einer Seitenwand neben der Bodenverdichtungsmaschine 1 möglich ist. Ferner können die einzelnen Ausrichtungsoptionen in der Vertikalebene und/oder in der Horizontalebene untereinander kombiniert oder auf sämtliche der vorhandenen Sensoren der Seitenwanddetektionsvorrichtung 13 und/oder der Hinderniserfassungsvorrichtung 17 angewendet werden.

Um die Maschine im Arbeitsumfeld unter Umständen besser erkennen und/oder orten zu können, kann eine Anzeigeeinrichtung, beispielsweise in Form einer optischen (insbesondere Signalleuchte) und/oder akustischen (insbesondere Signalhorn) Signaleinrichtung 20 vorgesehen sein, wie beispielsweise in den Figuren 1A und 6 angegeben.

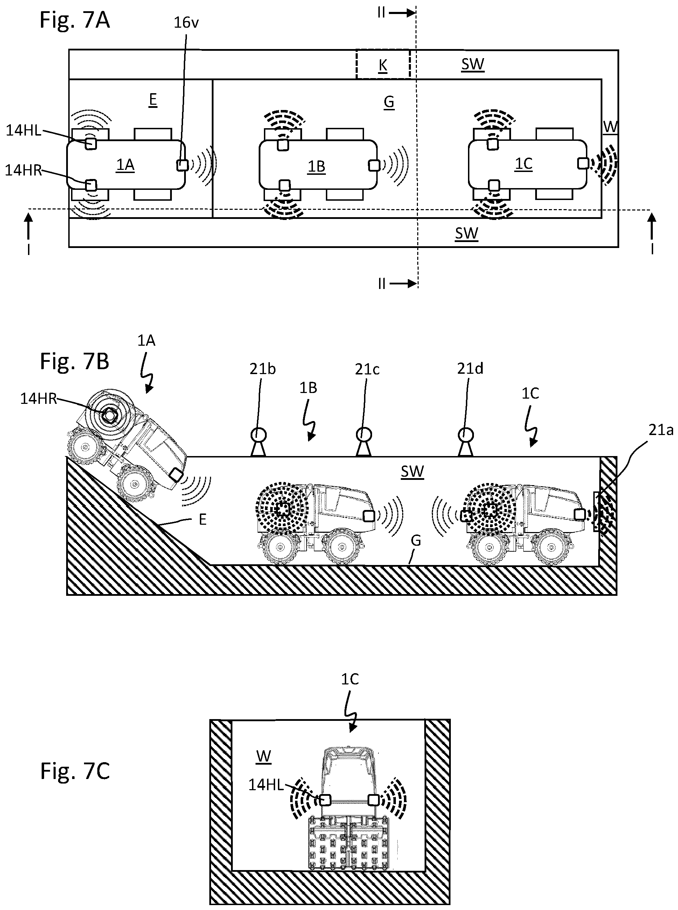

Die Figuren 7A bis 7C veranschaulichen nun einen möglichen Betriebsablauf. Fig. 7A ist dabei ein Draufsicht auf einen Graben G mit einer Einfahrrampe E sowie Seitenwänden SW und einer Endwand W. Fig. 7B ist eine vertikale Schnittansicht entlang der Linie I-I in Fig. 7A und Fig. 7C ist eine vertikale Schnittansicht entlang der Linie II-II in Fig. 7A. Die Bodenverdichtungsmaschine 1 ist in drei Betriebssituationen beispielhaft gezeigt.

Die in den Figuren 7A bis 7C lediglich beispielhaft gezeigten Sensoren 14 der Seitenwanddetektionsvorrichtung und 16 der Hinderniserfassungsvorrichtung 17 sind in den Figuren mit dünner Linie, wenn sie gerade keine Seitenwand bzw. kein im Fahrweg liegendes Hindernis erfassen, und mit dicker Linie, wenn sie gerade eine Seitenwand bzw. ein im Fahrweg liegendes Hindernis erfassen, angegeben. Ferner ist in diesen Figuren nur aus Übersichtlichkeitsgründen lediglich ein in Fahrrichtung A gerichteter Hinderniserfassungssensor 16 und auf jeder Seite jeweils nur ein Sensor 14 der Seitenwanddetektionsvorrichtung 13 angegeben. Ist versteht sich, dass die einzelnen Sensoren hinsichtlich Art, Positionierung und Ausrichtung variiert und/oder kombiniert werden können, wie beispielsweise in den vorhergehenden Figuren veranschaulicht.

In der Position 1A fährt die Bodenverdichtungsmaschine 1A gerade in den Graben über die Rampe E hinein. Die Bodenverdichtungsmaschine 1 befindet sich in dieser Situation im Bedienermodus. Eine Aktivierung des Autonomiemodus wird von der Freigabeeinrichtung 15 blockiert, da die Sensoren 14 keine Seitenwand SW neben der Bodenverdichtungsmaschine erfassen. In dieser Betriebsphase ist daher eine Steuerung der Bodenverdichtungsmaschine 1 ausschließlich im Bedien-Betriebsmodus möglich. Gleichzeitig erfasst die Hinderniserfassungsvorrichtung 17 über den Sensor 16 kein im Fahrweg A der Bodenverdichtungsmaschine 1 liegendes Hindernis. Die Bodenverdichtungsmaschine 1 wird sich nach Eingabe entsprechender Fahrbefehle durch den Bediener somit in Fahrrichtung A fortbewegen und im vorliegenden Fall weiter in den Graben einfahren, bis sie beispielsweise die Position 1B erreicht.

Position 1B zeigt nun eine Betriebssituation, in der die Seitenwanddetektionsvorrichtung 13 über die Sensoren 14 (konkret 14HL und 14HR, also gleichzeitig beidseitig) das Vorhandensein von Seitenwänden SW auf beiden Seiten der Bodenverdichtungsmaschine detektiert. Dies führt dazu, dass die Freigabeeinrichtung 15 einen Betrieb im Autonomiemodus freigibt. Der Bediener kann nun diesen Betriebsmodus aktivieren und die Bodenverdichtungsmaschine 1 würde sich autonom in Fahrrichtung A im Graben fortbewegen, ohne dass dazu Betriebseingaben eines Bedieners erforderlich sind. Dies setzt voraus, dass die Hinderniserfassungsvorrichtung 17 kein in Fahrrichtung A liegendes Hindernis im Fahrweg der Bodenverdichtungsmaschine detektiert. Im Idealfall kann der Autonomiemodus derart ausgelegt sein, dass sich die Bodenverdichtungsmaschine 1 vollständig eigenständig bzw. autonom im Graben in Fahrrichtung A fortbewegt und selber Fahrrichtungs-, Fahrgeschwindigkeits- und Lenkrichtungsentscheidungen trifft. Dabei ist keinerlei kontinuierliche oder diskontinuierliche Rückmeldung an einen Bediener, beispielsweise über ein sogenanntes "Heartbeat-Signal" und/oder Sichtkontakt zwischen einer Fernbedienung und der Maschine erforderlich, wenn aber auch durchaus möglich.

Wird bei Position 1B der Autonomiemodus aktiviert, bewegt sich die Bodenverdichtungsmaschine innerhalb des Grabens autonom in Fahrrichtung A weiter bis zur Position 1C. Dabei kann es vorgesehen sein, dass die Seitenwanddetektionsvorrichtung regelmäßig das Vorhandensein der Seitenwände SW prüft. Eine Fortsetzung des Autonomiemodus kann dann beispielsweise nur für den Fall vorgesehen sein, dass im Wesentlichen kontinuierlich die Präsenz einer oder beider Seitenwände SW detektiert wird. Kann die Seitenwanddetektionsvorrichtung in einer Betriebssituation dies nicht bestätigen, kann es vorgesehen sein, dass zumindest der Fahrbetrieb der Bodenverdichtungsmaschine gestoppt wird. Alternativ ist es aber beispielsweise auch möglich, dass die Freigabeeinrichtung kurzfristig auftretende ein- und/oder beidseitige Unterbrechungen der Detektion des Vorhandenseins einer Seitenwand SW zulässt, wie sie beispielsweise auftreten können, wenn eine seitliche Kanalabzweigung vorhanden ist, wie in Fig. 7A mit dem Kanalabgang A angegeben. Die Kriterien, zu denen eine derartige übergangsweise Fortsetzung des Autonomiemodus trotz Verlustes einer positiven Seitenwanddetektion möglich ist, können variieren. Dies kann beispielsweise zeit- und/oder wegabhängig erfolgen. Ergänzend oder alternativ kann eine Mindestvoraussetzung beispielsweise darin bestehen, dass in diesem Moment dann zumindest auf der gegenüberliegenden Seite das Vorhandensein einer Seitenwand detektiert wird und/oder ein weiterer zur selben Maschinenseite erfassender Sensor, der beispielsweise in Fahrrichtung weiter vorn, weiter hinter, tiefer oder höher angeordnet ist und/oder einen anderen Erfassungsbereich aufweist, das Vorhandenseine einer Seitenwand SW auf dieser Seite (aber in Fahr- und/oder Höhenrichtung an anderer Stelle) detektiert.

Zwischen den Positionen 1B bis 1C erfasst die Hinderniserfassungsvorrichtung 17 kein im Fahrweg A der Bodenverdichtungsmaschine 1 liegendes Hindernis. In Position 1C selbst schließlich ragt jedoch die Grabenendwand E so nah vor der Bodenverdichtungsmaschine auf, dass diese von der Hinderniserfassungsvorrichtung 17 als ein im Fahrweg liegendes Hindernis erfasst wird. Um eine Kollision mit der Grabenwand (oder einem anderen Hindernis) zu vermeiden, stoppt die Steuereinheit 10 die Vorwärtsbewegung der Bodenverdichtungsmaschine 1 bzw. die Fortsetzung der Fahrbewegung in dieser Richtung selbsttätig. Es kann nun vorgesehen sein, dass damit auch der Autonomiemodus beendet wird und die Bodenverdichtungsmaschine 1 damit auf eine manuelle Eingabe wartet, da sie dann wieder im Bedienermodus ist. Alternativ kann es aber auch vorgesehen sein, dass mit der Erkennung der Grabenendwand im Autonomiemodus die Steuereinheit 10 einen Reversierbefehl ausgibt und damit eine Aufnahme des Fahrbetriebs der Bodenverdichtungsmaschine in Gegenrichtung (also in Richtung Position 1B) einleitet.

Es bestehen verschiedene Möglichkeiten, das Fahr- und Arbeitsverhalten der Maschine innerhalb des Grabens unabhängig von individuellen manuellen Eingaben zu beeinflussen. Dies kann beispielsweise durch außerhalb der Maschine und von dieser erfassbare Markierungseinrichtungen 24 erfolgen. Derartige Markierungen können innerhalb des Grabens, außerhalb des Grabens, insbesondere am Grabenrand, oder auch virtuell, beispielsweise unter Rückgriff auf GPS und/oder ein lokales Positionsbestimmungssystem, gesetzt werden.

Die Fig. 7B gibt hierzu mit dem Markierungselement 21a beispielhaft die Möglichkeit an, innerhalb des Grabens, beispielsweise am Ende des Grabens, einen von der Maschine erfassbaren Indikator zu platzieren, der für die Maschine 1 das Ende des Grabens indiziert. Dies kann beispielsweise ein RFID-Transponder, ein optoelektronisch lesbarer Code, eine an die Wand oder den Boden farbig aufgesprühte Markierung oder ähnliches sein. Offensichtlich umfasst die Bodenverdichtungsmaschine 1 dann eine entsprechende Einrichtung zur Erkennung und Dekodierung des externen Markierungselementes, wie beispielsweise einen Scanner, eine Sende- und Empfangseinheit, eine Videokamera etc. Es können aber nicht nur Wegstreckeninformationen, wie beispielsweise "Ende der Arbeitsstrecke", über derartige Markierungen in von der Bodenverdichtungsmaschine 1 erkennbarer und interpretierbarer Form zur Verfügung gestellt werden, sondern ergänzend oder alternativ auch Fahr- und Arbeitsinformationen. Konkret kann mithilfe des Markierungselementes 21a auch eine Reversiermarke gesetzt werden, so dass die Maschine bei einer Erfassung und Identifikation des Markierungselementes 21a bei eine Annäherungsbewegung nicht nur selbsttätig stoppt, sondern anschließend selbsttätig reversiert, den Fahrbetrieb erneut aufnimmt und sich in Gegenrichtung wieder von dem Markierungselement 21a entfernt. Offensichtlich kann dies irgendwo innerhalb des Grabens erfolgen und muss nicht notwendigerweise an einer Grabenendwand geschehen. Ergänzend oder alternativ können solche Markierungen auch zur Festlegung einer Fahrstrecke oder eines zulässigen Bewegungsareals eingesetzt werden, wie in der Fig. 7B mit den Markierungselementen 21b, 21c und 21d beispielhaft angegeben. Dort sind die Markierungselemente entlang der Fahrstrecke angeordnet und bilden in ihrer Gesamtheit eine Art virtuellen Leitdraht. Dabei kann es beispielsweise vorgesehen sein, dass die Bodenverdichtungsmaschine 1 zur Fortsetzung der Fahrbewegung einen aktuellen Kontakt zu wenigstens einem (oder mehreren) der Markierungselemente 21 aufweist. Es ist aber auch möglich, dass hier weg- und/oder zeitabhängig übergangsweise Unterbrechungen in der Detektion eines der Markierungselemente 21b, 21c und 21d ohne Unterbrechung des Fahrbetriebes toleriert werden.

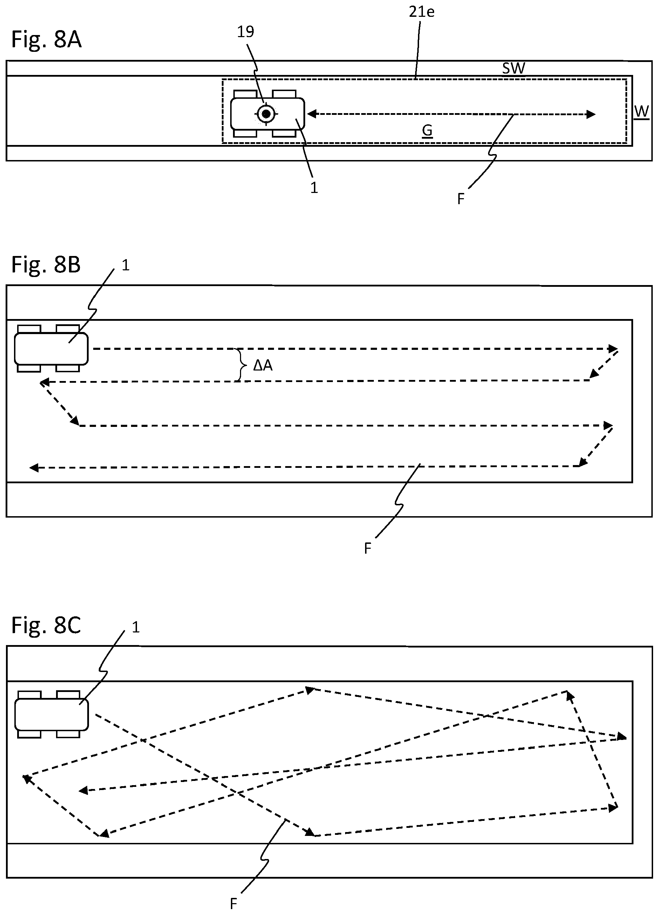

Weiter ergänzend oder alternativ können beispielsweise auch rein virtuell gesetzte Markierungen genutzt werden. Dazu ist es bevorzugt, wenn hierzu ergänzend eine Möglichkeit besteht, die Position der Maschine im Gelände, sei es relativ zu einem Bezugspunkt oder absolut in konkreten Positionsdaten, beispielsweise unter Nutzung von GPS, zu nutzen. In Fig. 8A ist zur weiteren Veranschaulichung ein virtueller Zaun 21e angegeben. Die mit einem GPS-Empfänger 19 ausgestattete Maschine 1 ermittelt und überwacht im Arbeitsbetrieb im Auto-Bedienmodus ständig die eigene Position und prüft, ob sie sich innerhalb des von 21e umgrenzten Bereiches befindet bzw. ihre Fahrspur F derart steuert, dass sie diesen Bereich nicht verlässt. Es versteht sich, dass hier auch andere sogenannte "Geo-Fencing"-Möglichkeiten Anwendung finden können.

Die Figuren 8A, 8B und 8C veranschaulichen ferner verschiedene Bewegungsmodi, die die Bodenverdichtungsmaschine 1 im Autonomiemodus zur Festlegung der eigenen Fahrspur F zugrunde legen kann. Die Bodenverdichtungsmaschine 1 ist dazu jeweils im Startpunkt gezeigt. Die Fahrspur F gibt dann die aus dieser Startposition im Autonomiebetriebsmodus von der Bodenverdichtungsmaschine 1 abgefahrene Spur wieder.

Fig. 8A zeigt dabei den einfachsten Fall. Demnach fährt die Bodenverdichtungsmaschine 1 zumindest im Wesentlichen ein und dieselbe Wegstrecke im Reversierbetrieb ab.

Alternativ hierzu ist es auch möglich, wie beispielsweise in Fig. 8B gezeigt, dass die Bodenverdichtungsmaschine 1 mit jedem Fahrtrichtungswechsel einen Spurversatz um einen horizontalen und quer zur Hauptfahrrichtung verlaufenden Versatzabstand ΔA durchführt. Aus ihrer Startposition bewegt sich die Bodenverdichtungsmaschine 1 zunächst im Wesentlichen parallel zur Grabenwand, bis sie rechts an das Ende des Grabens gelangt. Dort kehrt sie ihre Fahrrichtung um (beispielsweise aufgrund einer Erkennung der Grabenendwand und/oder einer Wendemarke) und lenkt auf eine um den Abstand ΔA quer zur Fahrrichtung A versetzte parallele Rückfahrspur. Dieser Vorgang kann, wie in Fig. 8B angegeben, mehrfach wiederholt werden.

In Fig. 8C ist dagegen ein aufgezeichneter Fahrweg F gezeigt, wie er bei einer chaotischen Fahrwegsplanung auftreten kann. Hier bewegt sich die Bodenverdichtungsmaschine 1 geradlinig bis sie auf ein Hindernis im Fahrweg trifft. Die Bodenverdichtungsmaschine 1 lenkt dann in eine Richtung und setzt ihren Fahrweg erneut geradlinig fort, bis sie erneut auf ein Hindernis, wie beispielsweise eine Grabenwand trifft. Es versteht sich, dass hier verschiedene Weiterbildungen möglich sind. Beispielsweise kann hier die Art der chaotischen Fahrwegsplanung variieren. Ergänzend oder alternativ kann es auch vorgesehen sein, dass in diesem Modus zunächst eine Kartierung des zu verdichtenden Areals erfolgt und die Bodenverdichtungsmaschine 1 dann, wenn das Areal vollständig kartiert ist, dieses Areal systematisch abfährt, wie beispielsweise in Fig. 8B angegeben.

Der Betrieb der Bodenverdichtungsmaschine im Autonomiemodus kann ferner auch anhand eines Plans, konkret eines Verdichtungsplans erfolgen. Dieser kann in Abhängigkeit von einer Anzahl geplanter Überfahrten und/oder einer erwünschten Bodensteifigkeit erfolgen. Das planmäßige Abfahren des zu verdichtenden Bodenareals kann dabei ein systematisches und/oder choatisches Abfahren umfassen. Insbesondere bei einem systematischen Abfahren der zu verdichtenden Bodenfläche kann der Walzplan beispielsweise derart von der Steuereinheit der Bodenverdichtungsmaschine festgelegt werden, dass Fahrspuren nebeneinander und/oder teilweise überlappend, parallel zueinander verlaufend abgefahren werden. Es kann ergänzend oder alternativ auf vorgesehen sein, dass das zu verdichtende Bodenareal zur Festlegung des Bewegungsplans der Bodenverdichtungsmaschine, insbesondere von extern, vorgegeben wird oder aber die Bodenverdichtungsmaschine, beispielsweise durch ein chaotisches Bewegungsmuster in der Anfangsphase, das zu verdichtende Bodenareal zunächst selbst ermittelt und, sobald eine innerhalb beispielsweise durch Seitenwände festgelegter Grenzen ein geschlossenes Bodenareal ermittelt wurde, diese dann von der Bodenverdichtungsmaschine anhand eines selbst festgelegten, in der Regel optimierten, Bewegungsplans abgefahren wird. Diese Weiterbildung betrifft das erfindungsgemäße Verfahren sowie die Ausbildung der erfindungsgemäßen Bodenverdichtungsmaschine unabhängig von konkreten Ausführungsbeispielen.

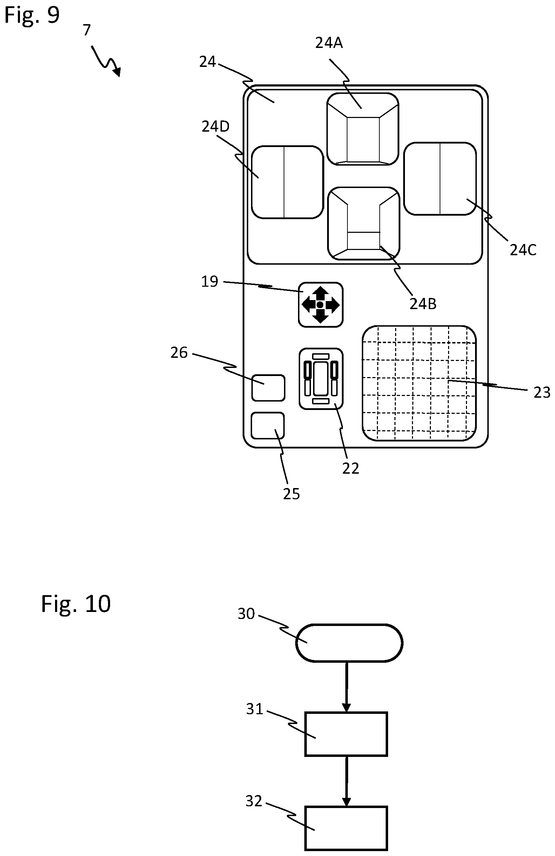

Fig. 9 veranschaulicht vorteilhafte Weiterbildungen einer Fernbedienung 7, die besonders geeignet ist, mit einer Bodenverdichtungsmaschine 1 der vorstehend beschriebenen Art verwendet zu werden. Die Besonderheiten der Fernbedienung 7 betreffen dabei insbesondere Möglichkeiten, einem Bediener Informationen bei im Autonomiemodus befindlicher Bodenverdichtungsmaschine 1 zukommen zu lassen.

Wesentliche Elemente der Fernbedienung 7 sind zunächst Eingabeelemente, über die die Bodenverdichtungsmaschine im Bedienermodus bedient werden kann. Dazu können entsprechende Eingabeelemente 22 vorgesehen sein, die die Eingabe von beispielsweise Fahr- und Lenkeingaben ermöglichen. Ferner können weitere, für Bodenverdichtungsmaschinen 1 der vorliegenden Art übliche Eingabeelemente vorhanden sein, wie beispielsweise ein Not-Aus-Schalter, ein Startschalter etc. Die Fernbedienung kann ferner eine kabelgebundene Signalübertragungsverbindung aufweisen oder aber, bevorzugt, zu einer kabellosen Signalübertragung zwischen der Bodenverdichtungsmaschine und der Fernbedienung ausgebildet sein. Entsprechende Vorrichtungen sind an sich im Stand der Technik bekannt, beispielsweise in der DE102010014902A1 beschrieben.

Die Besonderheiten der vorliegenden Fernbedienung liegen darin, dass sie auch der Möglichkeit Rechnung trägt, die Bodenverdichtungsmaschine im Autonomiemodus zu betreiben. Wie vorstehend bereits erwähnt, ist es bevorzugt eine Grundvoraussetzung zur Freigabe eines Betriebs der Bodenverdichtungsmaschine 1 im Autonomiemodus, dass das Vorhandensein wenigstens einer Seitenwand neben der Bodenverdichtungsmaschine 1, beispielsweise mit einer oder mehreren der vorstehend beschriebenen Möglichkeiten, erfolgt. Ist dies der Fall, könnte der Autonomiemodus aktiviert werden. Die Fernbedienung kann somit beispielsweise eine Anzeige aufweisen, die anzeigt, dass der Autonomiemodus aktiviert werden könnte. Ergänzend oder alternativ kann beispielsweise auch eine Anzeige vorgesehen sein, die dem Bediener rückmeldet, welche Bereiche der Seitenwanddetektionsvorrichtung 13 und/oder der Hinderniserfassungsvorrichtung 17 gerade eine Seitenwand und/oder ein Hindernis erfassen oder nicht. In Fig. 9 ist hierzu eine Detektionsanzeige 22 vorgesehen, die im vorliegenden Fall piktogrammartig diese Informationen anzeigt. Weiter ergänzend oder alternativ kann die Fernbedienung auch eine Positionsanzeige 23 aufweisen, die die aktuelle Position der Bodenverdichtungsmaschine 1 relativ zur Fernbedienung 7, in einer hinterlegten Karte (beispielsweise online verfügbar über entsprechende Internetdienste) und/oder in Bezug auf ein lokales Referenzsystem darstellt. Dies kann insbesondere bei vergleichsweise weiten Wegstrecken vorteilhaft sein, wenn die Bodenverdichtungsmaschine, insbesondere bei Grabenfahrt, schnell aus dem Blickfeld des Bedieners herausfährt. Eine weitere vorteilhafte Möglichkeit besteht ergänzend oder alternativ darin, Kameraaufnahmen, sei es intervallartig oder in Echtzeit, von einer oder mehreren an der Bodenverdichtungsmaschine 1 angeordneten Kameras 14k (Fig. 5) als Teil der Seitenwanddetektionsvorrichtung 13 und 16k (Fig. 1A) als Teil der Hinderniserfassungsvorrichtung 17 auf der Fernbedienung in einer entsprechenden Anzeige 24 anzuzeigen. Dies kann eine Kameraansicht nach vorn (24A), nach hinten (24B), nach rechts (24C) und nach links (24D) umfassen. Es kann auch auf eine oder mehrere per Software zusammengesetzte Ansichten zurückgegriffen werden, beispielsweise zur Bereitstellung einer sogenannten "Birdview"-Perspektive. Die angezeigten Aufnahmen können ferner in der oder den Anzeigen mit weiteren Informationen, insbesondere Auswertungsergebnissen von Sensoren, überblendet werden, beispielsweise mit erkannten Seitenwandgrenzen, einer Projektion des aktuellen Fahrweges, identifizierten Objekten, beispielsweise Markierungen 21, etc. Selbstverständlich kann die Fernbedienung 7 auch akustisch und/oder taktil wahrnehmbare Einrichtungen, beispielsweise zur Signalisierung von Gefahrensituation etc., umfassen.

Weiter alternativ kann die Fernbedienung auch eine "Ruf-Funktion" 25 aufweisen. Mit Betätigung dieses Elementes wird beispielsweise eine Hupton an der Bodenverdichtungsmaschine 1 ausgelöst und/oder ein anderes Signal, um die Bodenverdichtungsmaschine 1 schneller im Gelände orten zu können.

Schließlich kann ein Eingabeelement 26 vorgesehen sein, mit dem der Autonomiemodus aktiviert und/oder deaktiviert werden kann. Dies kann ergänzend oder alternativ auch mit einer dahingehenden Anzeige erweitert werden, die angibt, ob die Bodenverdichtungsmaschine gerade im Autonomiemodus oder im Bedienerbetriebsmodus betrieben wird. Weiter ergänzend oder alternativ kann schließlich auch eine Anzeige vorgesehen sein, die angibt, ob die Fernbedienung 7 gerade in Signalverbindung zu der Bodenverdichtungsmaschine 1 steht oder nicht.

Fig. 10 veranschaulicht beispielhaft den Ablauf eines erfindungsgemäßen Verfahrens, wenn der Bedienermodus aktiviert ist. Dieses im Stand der Technik an sich bekannte Verfahren zeichnet sich dadurch aus, dass insbesondere Fahr- und Lenkvorgaben durch den Bediener manuell vorgegeben werden. Ein solches Verfahren zeichnet sich im Wesentlichen nach dem Start 30 der Maschine dadurch aus, dass im Schritt 31 ein Fahr- und/oder Lenkbefehl manuell eingegeben wird, der von der Steuereinheit der Maschine im Schritt 32 in einer entsprechende Steuervorgabe innerhalb der Bodenverdichtungsmaschine umgesetzt wird. Hier können auch übergeordnete Überwachungssysteme, wie beispielsweise die Überwachung einer bestehenden Signalverbindung zwischen der Bodenverdichtungsmaschine und der Fernbedienung und/oder eine Überwachung auf im Fahrweg der der Bodenverdichtungsmaschine liegende Hindernisse, vorgesehen sein. Die Reaktion der Maschinensteuerung auf derartige Ereignisse ist dann in der Regel das Anhalten und/oder Abschalten der Maschine.

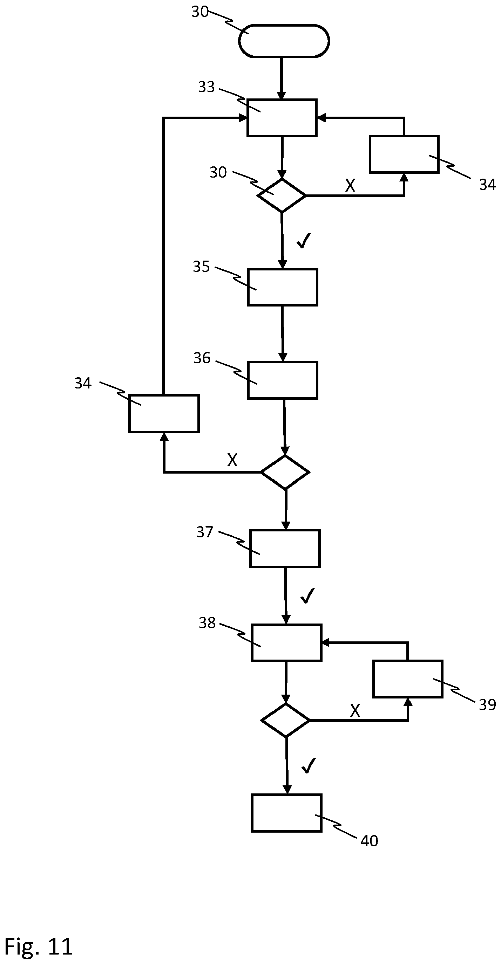

Fig. 11 stellt dagegen ein mögliches Betriebsverfahren der Bodenverdichtungsmaschine im Autonomiemodus vor. Nach dem Start 30 der Bodenverdichtungsmaschine 1 kann es vorgesehen sein, dass die Seitenwanddetektionsvorrichtung im Schritt 33 prüft, ob sie zu einer oder zu beiden Seiten mit einem oder mehreren der zur Seitenwanderkennung vorgesehenen Sensoren das Vorhandensein einer Seitenwand neben der Bodenverdichtungsmaschine erkennt. Dieser Schritt 33 kann mit jedem Start der Bodenverdichtungsmaschine 1 selbsttätig erfolgen oder beispielsweise erst auf Anforderung des Bedieners durch eine entsprechende Bedieneingabe angefordert erfolgen. Wird keine Seitenwand von der Seitenwanddetektionsvorrichtung erkannt, kann im Schritt 34 vorgesehen sein, dass zyklisch eine Neuprüfung erfolgt. Alternativ kann hier beispielsweise auch auf die nächste Anforderung durch den Bediener gewartet werden. Wird dagegen das Vorhandensein einer Seitenwand auf einer oder, je nach Ausführungsform, beiden Seiten der Bodenverdichtungsmaschine von einem oder mehreren Sensoren, insbesondere gleichzeitig, bestätigt, kann im Schritt 35 das Freigeben des Autonomiemodus durch die Freigabeeinrichtung, die auch Teil der Maschinensteuerung an sich sein kann, erfolgen. Dies kann ergänzend auch signalisiert werden, beispielsweise akustisch und/oder optisch an der Bodenverdichtungsmaschine 1 selbst und/oder an einer Fernbedienung. In einem Zwischenschritt hierzu kann es zudem vorgesehen sein, dass die Bodenverdichtungsmaschine nicht nur die Möglichkeit zum Autonomiebetrieb anzeigt, sondern auch die anstehende Fahrrichtung (sei es nun durch manuelle Vorgabe oder durch Festlegung durch die Maschine selbst) und/oder die Seite/n, auf der/denen das Vorhandensein eine Seitenwand detektiert wird.

Im Schritt 35 kann es nun vorgesehen sein, dass der Bediener den Autonomiemodus aktiviert. Es erfolgt dann eine erneute Prüfung auf das Vorhandensein einer Seitenwand gemäß den vorstehenden Vorgaben im Schritt 36. Wird das Vorhandensein wenigstens einer Seitenwand (bevorzugt jeweils einer Seitenwand auf beiden Seiten der Maschine) von der Seitenwanddetektionsvorrichtung erkannt, wechselt die Bodenverdichtungsmaschine im Schritt 37 in einen zum Autonomiebetrieb bereiten Autonomiemodus und kann dann beispielsweise den Fahr- und Arbeitsbetrieb im Autonomiemodus aufnehmen. Wird dagegen keine Seitenwand (mehr) erkannt oder zumindest nicht in dem Umfang erkannt, wie im konkreten Einzelfall vorgegeben, kann es vorgesehen sein, dass dies entsprechend, vorzugsweise akustisch und/oder optisch, dem Bediener gegenüber signalisiert wird. Es kann dann erneut eine Neuprüfung gemäß Schritt 34 vorgesehen sein. Das Prüfen auf ein Vorhandensein der Seitenwand kann sich zyklisch wiederholend im Hintergrund ablaufen.

Im laufenden Arbeitsbetrieb im Autonomiemodus gemäß Schritt 38 erfolgt ein kontinuierliches Überprüfen, sei es intervallartig oder ununterbrochen, auf das Vorhandensein einer oder mehrerer Seitenwände. Gleichzeitig kann insbesondere in dieser Betriebsphase auch das Überprüfen auf zumindest im aktuellen Fahrweg der Bodenverdichtungsmaschine liegende Hindernisse erfolgen (wie grundsätzlich auch im Rahmen der vorhergehenden Schritte). Werden hier keine Hindernisse und/oder keine Unterbrechungen in der Seitenwanddetektion festgestellt, erfolgt im Schritt 39 die Aufrechterhaltung des Autonomiemodus und die Einleitung eines erneuten Überprüfungsschrittes 38. Dies wird in einer Schleife solange fortgeführt, bis beispielsweise ein Hindernis und/oder der Verlust einer Seitenwanddetektion auftreten. Es kann dann im Schritt 40 beispielsweise vorgesehen sein, dass ein Maschinenstopp (mit oder ohne Motorabschaltung) eingeleitet wird und/oder eine entsprechende Signalisierung an den Bediener erfolgt und/oder die Bodenverdichtungsmaschine reversiert etc.

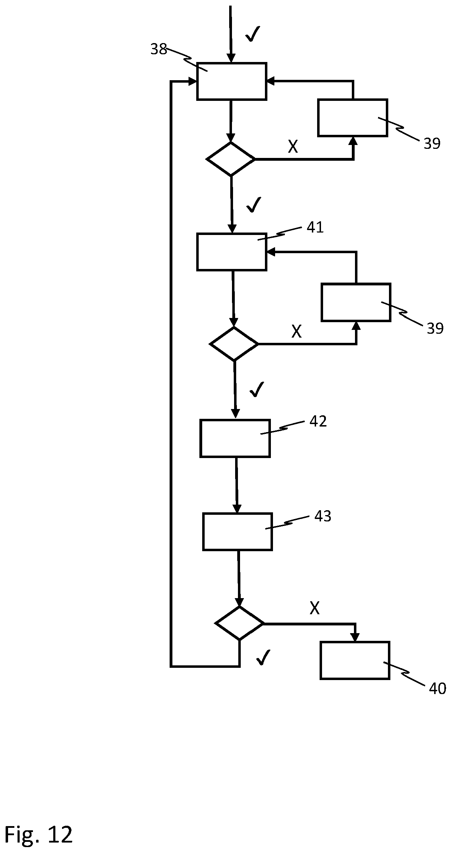

Fig. 12 veranschaulicht den Verfahrensablauf einer Kompensationsfunktion, beispielsweise für den Fall, dass das Vorhandensein einer Seitenwand von einem Sensor der Seitenwanddetektionsvorrichtung nicht mehr detektiert wird. Es können nun verschiedene Fallkonstellationen auftreten, zu denen in dieser Situation dennoch die Fortsetzung des Autonomiemodus gewünscht ist. Dies kann beispielsweise dann der Fall sein, wenn sich die Bodenverdichtungsmaschine innerhalb eines Grabens befindet und eine Grabenabzweigung passiert, nach der sich der Graben aber weiter fortsetzt. Das Verfahren kann an den Schritt 38 aus Fig. 11 anknüpfen, wie in Fig. 12 beispielhaft angegeben. Wird im Schritt 38 festgestellt, dass einer der Sensoren der Seitenwanddetektionsvorrichtung keine Seitenwand mehr detektiert, kann es im Schritt 41 vorgesehen sein, dass beispielsweise überprüft wird, ob ein anderer Sensor zur selben Seite der Bodenverdichtungsmaschine aktuell noch das Vorhandensein einer Seitenwand erfasst. Wenn ja, kann die Fortsetzung des Autonomiemodus gemäß Schritt 42 vorgesehen sein. Hierbei ist es dann allerdings bevorzugt, dass diese Fortsetzung zeit- und/oder wegabhängig begrenzt ist. Dies bedeutet, dass mit dem Verlust der Detektion einer Seitenwand wenigstens eines Sensors im Schritt 38 und der Überprüfung gemäß Schritt 41 nach Schritt 42 praktisch zeitgleich im Schritt 43 ein Weg- und/oder Zeitcountdown eines Überbrückungsfensters gestartet wird, der die Fortsetzung des Autonomiemodus ausnahmsweise gestattet, obwohl aufgrund des Detektionsverlustes des Vorhandenseins einer Seitenwand durch den wenigstens einen Sensor die Startvoraussetzungen des Autonomiemodus nicht erfüllt sind. Wesentlich ist daher auch, dass diese Kompensationsfunktion insbesondere für den laufenden Arbeitsbetrieb im Autonomiemodus vorgesehen ist und nicht zum Start des Autonomiemodus vorgesehen ist. Erfolgt innerhalb des Countdowns die erneute Detektion des Vorhandenseins einer Seitenwand, wird der Autonomiemodus im Regelbetrieb fortgesetzt, beispielsweise gemäß Schritt 38. Erfolgt dagegen innerhalb des Countdowns keiner erneute Detektion des Vorhandenseins einer Seitenwand, kann beispielsweise ein Maschinenstopp gemäß Schritt 40 initiiert werden.

## Patentansprüche

1. Verfahren zum Steuern des Fahrbetriebs einer selbstfahrenden Bodenverdichtungsmaschine (1) mithilfe einer Steuereinheit (10), die Fahrsteuersignale an ein Fahrantriebssystem der Bodenverdichtungsmaschine (1) vorgibt,
umfassend
den Betrieb der Bodenverdichtungsmaschine (1) in einem Autonomiemodus, in dem die Steuereinheit (10) Fahrvorgaben selbst erzeugt und diese in Form von Fahrsteuersignalen an das Fahrantriebssystem der Bodenverdichtungsmaschine (1) übermittelt,
wobei ein Betrieb der Bodenverdichtungsmaschine (1) im Autonomiemodus von der Steuereinheit (10) nur freigegeben wird, solange eine Seitenwanddetektionsvorrichtung (13) der Bodenverdichtungsmaschine (1) das Vorhandensein einer gegenüber der Aufstandfläche der Bodenverdichtungsmaschine (1) aufragenden Seitenwand (SW), insbesondere in einem Bereich in Horizontalrichtung quer zu einer Fahrrichtung (A) der Bodenverdichtungsmaschine (1), erfasst,
**dadurch gekennzeichnet,**
**dass** beim Fahrbetrieb im Autonomiemodus beim sprunghaften Verlust der Erfassung des Vorhandenseins einer Seitenwand (SW) durch die Seitenwanddetektionsvorrichtung (13) die Steuereinheit (10) zeit- und/oder wegabhängig den Fahrbetrieb im Autonomiemodus fortsetzt.

2. Verfahren gemäß Anspruch 1,
**dadurch gekennzeichnet,**
**dass** alternativ der Betrieb der Bodenverdichtungsmaschine (1) in einem Bedienermodus erfolgt, in dem von einem Bediener über eine manuell betätigbare Eingabeeinrichtung (7) vorgegebene Fahrvorgaben an die Steuereinheit (10) übermittelt und von dieser in Form von Fahrsteuersignalen an das Fahrantriebssystem der Bodenverdichtungsmaschine (1) übermittelt werden.

3. Verfahren gemäß einem der vorhergehenden Ansprüche,
**dadurch gekennzeichnet,**
**dass** das Freigeben des Autonomiemodus nur dann erfolgt, wenn die Seitenwanddetektionsvorrichtung (13) in einem Bereich in Horizontalrichtung quer zu einer Fahrrichtung (A) der Bodenverdichtungsmaschine (1) das Vorhandensein jeweils einer von der Aufstandfläche der Bodenverdichtungsmaschine (1) aufragenden Seitenwand (SW), insbesondere gleichzeitig, auf beiden Seiten der Bodenverdichtungsmaschine (1) erfasst.

4. Verfahren gemäß einem der vorhergehenden Ansprüche,
**dadurch gekennzeichnet,**
**dass** das Erfassen der Seitenwände (SW) auf beiden Seiten der Bodenverdichtungsmaschine (1) alternierend oder gleichzeitig erfolgt.

5. Verfahren gemäß einem der vorhergehenden Ansprüche,
**dadurch gekennzeichnet,**
**dass** bei im Autonomiemodus befindlicher Bodenverdichtungsmaschine (1) ein Stoppen des Fahrbetriebs durch die Steuereinheit (10) erfolgt, wenn die Seitenwanddetektionsvorrichtung (13) das Vorhandensein der von der Aufstandfläche der Bodenverdichtungsmaschine (1) aufragenden Seitenwand (SW) nicht mehr detektiert.

6. Verfahren gemäß einem der vorhergehenden Ansprüche,
**dadurch gekennzeichnet,**
**dass** beim Fahrbetrieb im Autonomiemodus beim sprunghaften Verlust der Erfassung des Vorhandenseins einer Seitenwand (SW) durch die Seitenwanddetektionsvorrichtung (13) die Steuereinheit (10) den Fahrbetrieb im Autonomiemodus auch dann fortsetzt, wenn (und solange) an anderer Stelle (davor/dahinter; andere Seite) durch die Seitenwanddetektionsvorrichtung (13) das Vorhandensein einer Seitenwand (SW) detektiert wird.

7. Verfahren gemäß einem der vorhergehenden Ansprüche,
**dadurch gekennzeichnet,**
**dass** das Stoppen des Fahrbetriebs im Autonomiemodus dann erfolgt, wenn die Seitenwanddetektionsvorrichtung (13) wenigstens eines der folgenden Szenarien detektiert:
- die vertikale Höhe der detektierten Seitenwand (SW) unterschreitet einen vorgegebenen Grenzwert (insbesondere vom Boden aus); und/oder
- der horizontale Abstand der detektierten Seitenwand (SW) in Horizontalrichtung quer zu einer Vorwärtsfahrrichtung der Bodenverdichtungsmaschine (1) überschreitet einen vorgegebenen Grenzwert; und/oder
- der horizontale Abstand der detektierten Seitenwand (SW) in Horizontalrichtung quer zu einer Vorwärtsfahrrichtung der Bodenverdichtungsmaschine (1) unterschreitet einen vorgegebenen Grenzwert.
und/oder
**dass** das Freigeben des Fahrbetriebs im Autonomiemodus dann erfolgt, wenn die Seitenwanddetektionsvorrichtung (13) wenigstens eines der folgenden Szenarien detektiert:
- die vertikale Höhe der detektierten Seitenwand (SW) überschreitet einen vorgegebenen Grenzwert (insbesondere vom Boden aus); und/oder
- der horizontale Abstand der detektierten Seitenwand (SW) in Horizontalrichtung quer zu einer Vorwärtsfahrrichtung der Bodenverdichtungsmaschine (1) unterschreitet einen vorgegebenen Grenzwert.

8. Verfahren gemäß einem der vorhergehenden Ansprüche,
**dadurch gekennzeichnet,**
**dass** ein Detektieren von in und/oder entgegen der aktuellen Fahrrichtung (A) der Bodenverdichtungsmaschine (1) liegenden Hindernissen mithilfe einer Hinderniserkennungsvorrichtung (17) erfolgt, wobei der Steuereinheit (10) den Fahrbetrieb im Autonomiemodus insbesondere dann stoppt, wenn von der Hinderniserkennungsvorrichtung (17) ein in und/oder entgegen der Fahrrichtung (A) bestehendes Hindernis erkannt wird.

9. Verfahren gemäß einem der vorhergehenden Ansprüche,
**dadurch gekennzeichnet,**
**dass** bei im Autonomiemodus sich in einer Fahrrichtung (A) bewegender Bodenverdichtungsmaschine (1) von der Steuereinheit (10) ein Reversierbefehl, durch den die Fahrrichtung (A) in die entgegengesetzte Fahrrichtung (A) umgeschaltet wird, dann erzeugt wird, wenn:
- ein in Fahrrichtung (A) liegendes Hindernis detektiert wird;
- das Ende einer vorgegebenen Fahrstrecke erreicht worden ist;
- ein von der Bodenverdichtungsmaschine (1) mittels einer Detektionseinrichtung (14k, 16k) detektierbares externes Markierungselement (21a, 21b, 21c, 21d, 21e) erkannt wird;
- die Detektion eines von der Bodenverdichtungsmaschine (1) mittels einer Detektionseinrichtung (14k, 16k) detektierbaren externen Markierungselementes (21b, 21c, 21d, 21e) unterbrochen wird;
- eine Eingabe über die von einem Bediener manuell betätigbare Eingabeeinrichtung (7) erfolgt.

10. Verfahren gemäß einem der vorhergehenden Ansprüche,
**dadurch gekennzeichnet,**
**dass** die Steuereinheit (10) eine Anzeigeeinrichtung (15) derart steuert, dass
a) angezeigt wird, ob Freigabevoraussetzungen für den Betrieb im Autonomiemodus erfüllt werden und/oder
b) angezeigt wird, dass Freigabevoraussetzungen für den Betrieb im Autonomiemodus nicht mehr erfüllt werden und/oder
c) angezeigt wird, ob die Bodenverdichtungsmaschine (1) gerade im Autonomiemodus betrieben wird und/oder
d) angezeigt wird, ob eine aktive Signalübertragungsverbindung zu einer Fernbedienung (7) besteht und/oder nicht mehr besteht;
e) weitere Betriebsparameter angezeigt werden, wie insbesondere Erreger an/aus, Füllstand eines Tanks etc.
f) die aktuelle Position der Bodenverdichtungsmaschine (1) angezeigt wird.

11. Selbstfahrende Bodenverdichtungsmaschine (1), umfassend
- eine Antriebseinheit (4), über die die für einen Fahrbetrieb der Bodenverdichtungsmaschine (1) erforderliche Antriebsenergie bereitgestellt wird,
- eine Bodenkontaktvorrichtung (6) , über die eine Verdichtung des Bodenuntergrundes erfolgt,
- eine Steuereinheit (10), die den Fahrbetrieb der Bodenverdichtungsmaschine (1) steuert,
dass sie eine Seitenwanddetektionsvorrichtung (13) aufweist, die derart ausgebildet ist, dass sie in einem Bereich in Horizontalrichtung quer zu einer Vorwärtsfahrrichtung der Bodenverdichtungsmaschine (1) das Vorhandensein einer gegenüber der Aufstandfläche der Bodenverdichtungsmaschine (1) in Vertikalrichtung aufragenden Seitenwand (SW) erfasst,
und dass die Steuereinheit (10) derart ausgebildet ist, dass sie den Fahrbetrieb der Bodenverdichtungsmaschine (1) in einem Autonomiemodus steuert, wobei im Autonomiemodus Fahrvorgaben von der Steuereinheit (10) vorgegeben werden,
wobei ferner eine Freigabeeinrichtung vorhanden ist, die den Autonomiemodus freigibt oder sperrt, die derart ausgebildet ist, dass eine Freigabe des Autonomiemodus nur in Betriebssituationen erfolgt, in denen die Seitenwanddetektionsvorrichtung (13) das gleichzeitige Vorhandensein einer quer zur Vorwärtsrichtung der Bodenverdichtungsmaschine (1) befindlichen Seitenwand (SW) detektiert
**dadurch gekennzeichnet,**
**dass** die Steuereinheit (10) dazu ausgebildet ist, beim Fahrbetrieb im Autonomiemodus beim sprunghaften Verlust der Erfassung des Vorhandenseins einer Seitenwand (SW) durch die Seitenwanddetektionsvorrichtung (13) zeit- und/oder wegabhängig den Fahrbetrieb im Autonomiemodus fortzusetzen.

12. Bodenverdichtungsmaschine (1) gemäß Anspruch 11,
**dadurch gekennzeichnet,**
**dass** die Bodenverdichtungsmaschine alternativ zum Autonomiemodus in einem Bedienermodus betreibbar ist, in dem Fahrvorgaben von einem Bediener über eine manuell betätigbare Eingabeeinrichtung der Steuereinheit (10) vorgegeben werden.

13. Bodenverdichtungsmaschine (1) gemäß einem der Ansprüche 11 oder 12,
**dadurch gekennzeichnet,**
**dass** die Seitenwanddetektionsvorrichtung (13) derart ausgebildet ist, dass
- sie das Vorhandensein jeweils einer Seitenwand (SW) auf beiden Seiten der Bodenverdichtungsmaschine (1) detektiert und/oder
- sie wenigstens zwei Abstandssensoren (14) aufweist, deren Erfassungsbereiche zumindest teilweise jeweils in Richtung zu einer der beiden Seiten der Bodenverdichtungsmaschine (1) ausgerichtet sind und/oder
- sie auf wenigstens einer Seite der Bodenverdichtungsmaschine (1) wenigstens einen Abstandssensor (14) aufweist, über den der Abstand der Bodenverdichtungsmaschine (1) zu einer neben der Bodenverdichtungsmaschine (1) aufragenden Seitenwand (SW) ermittelbar ist und/oder
- sie auf beiden Seiten der Bodenverdichtungsmaschine (1) jeweils wenigstens einen Abstandssensor (14) aufweist, über die jeweils der Abstand der Bodenverdichtungsmaschine (1) zu neben der Bodenverdichtungsmaschine (1) auf einer der beiden Seiten aufragenden Seitenwänden ermittelbar ist und/oder
- sie auf wenigstens einer Seite der Bodenverdichtungsmaschine (1) wenigstens zwei Abstandssensoren (14) aufweist, die relativ zueinander derart angeordnet sind, dass ihre Erfassungsbereiche in eine Fahrtrichtung der Bodenverdichtungsmaschine (1) gesehen zumindest teilweise hintereinander verlaufen und/oder
- sie wenigstens zwei mit ihren Erfassungsbereichen zu einer Seite der Bodenverdichtungsmaschine (1) ausgerichtete Abstandssensoren (14) aufweist, wobei die Abstandssensoren derart ausgerichtet sind, dass ihre Erfassungsbereiche in Vertikalrichtung der Bodenverdichtungsmaschine (1) gesehen zumindest teilweise übereinander verlaufen und/oder
- sie auf wenigstens einer Seite der Bodenverdichtungsmaschine (1) wenigstens zwei Abstandssensoren (14) aufweist, wobei die beiden Abstandssensoren (14) in zueinander verschiedener Weise eine Abstandsmessung durchführen.

14. Bodenverdichtungsmaschine (1) gemäß einem der Ansprüche 11 bis 13,
**dadurch gekennzeichnet,**
**dass** wenn die Seitenwanddetektionsvorrichtung (13) wenigstens einen Abstandssensor (14) aufweist, der derart an der Bodenverdichtungsmaschine (1) angeordnet ist, dass er hinsichtlich seiner Blickrichtung und/oder seines Erfassungsbereiches zumindest teilweise schräg oder parallel zur Horizontalebene zur Seite der Bodenverdichtungsmaschine (1) hin ausgerichtet ist

15. Bodenverdichtungsmaschine (1) gemäß einem der Ansprüche 11 bis 14,
**dadurch gekennzeichnet,**
**dass** wenigstens ein Sensor (16) vorhanden ist, der zur Erfassung eines in Fahrrichtung (A) vor und/oder hinter der Bodenverdichtungsmaschine (1) liegenden Bereiches ausgebildet ist, insbesondere im Fahrweg (F) der Bodenverdichtungsmaschine (1).

16. Bodenverdichtungsmaschine (1) gemäß einem der Ansprüche 11 bis 15,
**dadurch gekennzeichnet,**
**dass** eine Einrichtung (14k, 16k) zur Erfassung wenigstens einer externen und/oder virtuellen Markierung vorhanden ist.

17. Bodenverdichtungsmaschine (1) gemäß einem der Ansprüche 11 bis 16,
**dadurch gekennzeichnet,**
**dass** eine Anzeigeeinrichtung zur Anzeige wenigstens einer der folgenden Betriebsparameter vorhanden ist:
- Autonomiemodus ist angeschaltet und/oder ausgeschaltet; (gleiches gilt für den Bedienermodus)
- Autonomiemodus ist aktiv und/oder inaktiv;
- das Vorhandensein einer Seitenwand (SW) wird aktuell erkannt und/oder nicht erkannt;
- ein in Fahrrichtung (A) vor und/oder hinter der Bodenverdichtungsmaschine (1) bestehendes Hindernis wird erkannt und/oder nicht erkannt;
- es besteht eine aktive und/oder inaktive Signalverbindung zu einer Fernbedienung (7).

18. Bodenverdichtungsmaschine (1) gemäß einem der Ansprüche 11 bis 17 und manuell betätigbare Eingabeeinrichtung, insbesondere Fernbedienung (7),
**dadurch gekennzeichnet,**
**dass** die manuell betätigbare Eingabeeinrichtung eine Anzeigeeinrichtung zur Anzeige wenigstens eines der folgenden Betriebsparameter aufweist:
- Autonomiemodus ist angeschaltet und/oder ausgeschaltet;
- Autonomiemodus ist aktiv und/oder inaktiv;
- das Vorhandensein einer Seitenwand (SW) wird aktuell erkannt und/oder nicht erkannt;
- wenigstens ein aktuell ermittelter Abstand zu einer von der Seitenwanddetektionsvorrichtung (13) detektierten Seitenwand (SW) (beide Seiten etc.);
- ein in Fahrrichtung (A) vor und/oder hinter der Bodenverdichtungsmaschine (1) bestehendes Hindernis wird erkannt und/oder nicht erkannt;
- es besteht eine aktive und/oder inaktive Signalverbindung zu einer Fernbedienung (7).

19. Bodenverdichtungsmaschine (1) gemäß einem der Ansprüche 11 bis 18,
**dadurch gekennzeichnet,**
**dass** die Bodenverdichtungsmaschine (1) eine Grabenwalze oder eine Rüttelplatte ist.

20. Bodenverdichtungsmaschine (1) gemäß einem der Ansprüche 11 bis 19,
**dadurch gekennzeichnet,**
**dass** sie zur Durchführung eines Verfahrens gemäß einem der Ansprüche 1 bis 10 ausgebildet ist.

## Claims

1. A method for controlling the traveling operation of a self-propelled ground compaction machine (1) with the aid of a control unit (10) which provides travel control signals to a travel drive system of the ground compaction machine (1),
comprising
operation of the ground compaction machine (1) in an autonomous mode, in which the control unit (10) generates travel specifications itself and transmits them in the form of travel control signals to the travel drive system of the ground compaction machine (1),
wherein operation of the ground compaction machine (1) in the autonomous mode is only enabled by the control unit (10) as long as a sidewall detection device (13) of the ground compaction machine (1) detects the presence of a sidewall (SW) projecting relative to the contact surface of the ground compaction machine (1), in particular in an area in the horizontal direction transverse to a direction (A) of travel of the ground compaction machine (1), **characterized in that**
during traveling operation in autonomous mode, in the event of an abrupt loss of detection of the presence of a sidewall (SW) by the sidewall detection device (13), the control unit (10) continues traveling operation in autonomous mode in a time- and/or distance-dependent manner.

2. The method according to claim 1,
**characterized in that**
the ground compaction machine (1) is alternatively operated in an operator mode in which travel specifications specified by an operator via a manually operable input device (7) are transmitted to the control unit (10) and are transmitted by the latter in the form of travel control signals to the travel drive system of the ground compaction machine (1).

3. The method according to any one of the preceding claims,
**characterized in that**
the autonomous mode is enabled only when the sidewall detection device (13) detects, in an area horizontally transverse to a forward travel direction (A) of the ground compaction machine (1), the presence of a respective sidewall (SW) projecting from the contact surface of the ground compaction machine (1), in particular simultaneously, on both sides of the ground compaction machine (1).

4. The method according to any one of the preceding claims,
**characterized in that**
detecting of the sidewalls (SW) on both sides of the ground compaction machine (1) is performed alternately or simultaneously.

5. The method according to any one of the preceding claims,
**characterized in that**
when the ground compaction machine (1) is in the autonomous mode, the control unit (10) stops traveling operation when the sidewall detection device (13) no longer detects the presence of the sidewall (SW) projecting from the contact surface of the ground compaction machine (1).

6. The method according to any one of the preceding claims,
**characterized in that**
during traveling operation in the autonomous mode, in the event of an abrupt loss of detection of the presence of a sidewall (SW) by the sidewall detection device (13), the control unit (10) also continues traveling operation in autonomous mode if (and as long as) the presence of a sidewall (SW) is detected at another location (in front of/behind; other side) by the sidewall detection device (13).

7. The method according to any one of the preceding claims,
**characterized in that**
traveling operation in the autonomous mode is stopped when the sidewall detection device (13) detects at least one of the following scenarios:
- the vertical height of the detected sidewall (SW) falls below a predetermined threshold (in particular from the ground); and/or
- the horizontal distance of the detected sidewall (SW) in horizontal direction transverse to a forward direction of travel of the ground compaction machine (1) exceeds a predetermined threshold; and/or
- the horizontal distance of the detected sidewall (SW) in horizontal direction transverse to a forward direction of travel of the ground compaction machine (1) falls below a predetermined threshold
and/or
traveling operation in the autonomous mode is enabled when the sidewall detection device (13) detects at least one of the following scenarios:
- the vertical height of the detected sidewall (SW) exceeds a predetermined threshold (in particular from the ground); and/or
- the horizontal distance of the detected sidewall (SW) in horizontal direction transverse to a forward direction of travel of the ground compaction machine (1) falls below a predetermined threshold.

8. The method according to any one of the preceding claims,
**characterized in that**
obstacles lying in and/or against the current direction (A) of travel of the ground compacting machine (1) are detected with the aid of an obstacle recognition device (17), wherein the control unit (10) stops the traveling operation in the autonomous mode in particular if an obstacle existing in and/or against the direction of travel (A) is detected by the obstacle recognition device (17).

9. The method according to any one of the preceding claims,
**characterized in that**
with the ground compacting machine (1) moving in a direction of travel (A) in the autonomous mode, a reversing command, by means of which the direction of travel (A) is switched to the opposite direction of travel (A), is generated by the control unit (10) when:
- an obstacle lying in the direction of travel (A) is detected;
- the end of a specified route has been reached;
- an external marking element (21a, 21b, 21c, 21d, 21e) detectable by the ground compacting machine (1) by means of a detection device (14k, 16k) is detected;
- the detection of an external marking element (21b, 21c, 21d, 21e) detectable by the ground compacting machine (1) by means of a detection device (14k, 16k) is interrupted;
- an input is made via the input device (7) manually operated by an operator.

10. The method according to any one of the preceding claims,
**characterized in that**
the control unit (10) controls an indicating device (15) such that
a) it is indicated whether enabling requirements for operation in autonomous mode are fulfilled and/or
b) it is indicated that enabling requirements for operation in autonomous mode are no longer met and/or
c) it is indicated whether the ground compaction machine (1) is currently being operated in autonomous mode and/or
d) it is indicated whether an active signal transmission connection to a remote control (7) exists and/or no longer exists;
e) further operating parameters are indicated, such as in particular exciter on/off, filling level of a tank, etc.
f) the current position of the ground compaction machine (1) is indicated.

11. A self-propelled ground compaction machine (1), comprising
- a drive unit (4), via which the drive energy required for traveling operation of the ground compaction machine (1) is provided,
- a ground-contacting device (6), via which compaction of the ground takes place,
- a control unit (10), which controls the traveling operation of the ground compaction machine (1),
it has a sidewall detection device (13) which is configured such that it detects, in an area in horizontal direction transverse to a forward direction of travel of the ground compaction machine (1), the presence of a sidewall (SW) projecting vertically relative to the contact surface of the ground compaction machine (1),
and that the control unit (10) is configured such that it controls the traveling operation of the ground compacting machine (1) in an autonomous mode, wherein in the autonomous mode travel specifications are specified by the control unit (10),
wherein further an enabling device is provided which enables or blocks the autonomous mode, which is configured such that the autonomous mode is only enabled in operating situations in which the sidewall detection device (13) detects the simultaneous presence of a sidewall (SW) located transversely to the forward direction of the ground compaction machine (1)
**characterized in that**
during traveling operation in autonomous mode, in the event of an abrupt loss of detection of the presence of a sidewall (SW) by the sidewall detection device (13), the control unit (10) is configured to continue traveling operation in autonomous mode in a time- and/or distance-dependent manner.

12. The ground compaction machine (1) according to claim 11,
**characterized in that**
as an alternative to the autonomous mode, the ground compaction machine can be operated in an operator mode in which travel specifications are specified by an operator via a manually operable input device of the control unit (10).

13. The ground compaction machine (1) according to any one of claims 11 or 12,
**characterized in that** the sidewall detection device (13) is configured such that
- it detects the presence of a sidewall (SW) on each of the two sides of the ground compaction machine (1) and/or
- it has at least two distance sensors (14), the detection ranges of which are each oriented at least partially in the direction of one of the two sides of the ground compaction machine (1) and/or
- - it has at least one distance sensor (14) on at least one side of the ground compaction machine (1), via which the distance of the ground compaction machine (1) from a sidewall projecting next to the ground compaction machine (1) can be determined and/or
- it has on both sides at least one distance sensor (14) on at least one side of the ground compaction machine (1), via which the distance of the ground compaction machine (1) from a sidewall projecting on at least one side next to the ground compaction machine (1) can be determined and/or
- it has on at least one side of the ground compacting machine (1) at least two distance sensors (14) which are arranged relative to one another in such a way that their detection ranges seen in a direction of travel of the ground compacting machine (1), and/or partially one behind the other and/or
- it has at least two distance sensors (14) with their detection areas aligned to one side of the ground compacting machine (1), wherein the distance sensors are aligned in such a way that their detection ranges sensors are aligned in such a way that their detection areas, as seen in the vertical direction of the ground compaction machine (1) run at least partially one above the other and/or
- on at least one side of the ground compacting machine (1) it has at least two distance sensors (14), wherein the two distance sensors (14) carry out a distance measurement in different manner from one another.

14. The ground compaction machine (1) according to any one of claims 11 to 13,
**characterized in that**
the sidewall detection device (13) has at least one distance sensor (14) which is arranged on the ground compaction machine (1) such that, with regard to its viewing direction and/or its detection range, it is at least partially oriented obliquely or parallel to the horizontal plane toward the side of the ground compaction machine (1).

15. The ground compaction machine (1) according to any one of claims 11 to 14,
**characterized in that**
at least one sensor (16) is provided which is designed to detect an area lying in front of and/or behind the ground compacting machine (1) in the direction of travel (A), in particular in the travel path (F) of the ground compacting machine (1).

16. The ground compaction machine (1) according to any one of claims 11 to 15,
**characterized in that**
a device (14k, 16k) is provided for the detection of at least one external and/or virtual marking is present.

17. The ground compaction machine (1) according to any one of claims 11 to 16,
**characterized in that**
a display device is provided for displaying at least one of the following operating parameters is present:
- autonomy mode is on and/or off; (the same applies to operator mode).
- autonomy mode is active and/or inactive;
- the presence of a sidewall (SW) is currently detected and/or not detected;
- an obstacle in front of and/or behind the ground compaction machine (1) in the direction of travel (A) is detected and/or not detected; and
- there is an active and/or inactive signal connection to a remote control (7).

18. The ground compaction machine (1) according to any one of claims 11 to 17 and manually operable input device, in particular remote control (7),
**characterized in that**
the manually operable input device comprises a display device for displaying at least one of the following operating parameters:
- autonomy mode is on and/or off;
- autonomy mode is active and/or inactive;
- the presence of a sidewall (SW) is currently detected and/or not detected;
- at least one currently determined distance to a side wall detected by the side wall detection device (13) detected side wall (SW) (both sides etc.);
- an obstacle in front of and/or behind the ground compaction machine (1) in the direction of travel (A) is detected and/or not detected;
- there is an active and/or inactive signal connection to a remote control (7).

19. The ground compaction machine (1) according to any one of claims 11 to 18,
**characterized in that**
the ground compaction machine (1) is a trench roller or a vibratory plate.

20. The ground compaction machine (1) according to any one of claims 11 to 19,
**characterized in that**
it is configured to carry out a method according to one of claims 1 to 10 .

## Revendications

1. Procédé pour le commande du fonctionnement de déplacement d'une machine de compactage du sol autonome (1) à l'aide d'une unité de commande (10), qui fournit des signaux de commande de déplacement à un système d'entraînement en déplacement de la machine de compactage du sol (1),
comprenant
le fonctionnement de la machine de compactage du sol (1) dans un mode d'autonomie, dans lequel l'unité de commande (10) génère elle-même des consignes de déplacement et les transmet sous la forme de signaux de commande de déplacement au système d'entraînement en déplacement de la machine de compactage du sol (1),
dans lequel un fonctionnement de la machine de compactage du sol (1) en mode d'autonomie n'est validé par l'unité de commande (10) que tant qu'un dispositif de détection de paroi latérale (13) de la machine de compactage du sol (1) détecte la présente d'une paroi latérale (SW) en saillie par rapport à la surface d'appui de la machine de compactage du sol (1), en particulier dans une zone dans la direction horizontale transversale à une direction de déplacement (A) de la machine de compactage du sol (1), **caractérisé en ce**
**que** lors du fonctionnement de déplacement en mode d'autonomie, en cas de perte brusque de la détection de la présence d'une paroi latérale (SW) par le dispositif de détection de paroi latérale (13), l'unité de commande (10) poursuit le fonctionnement de déplacement en mode d'autonomie en fonction du temps et/ou de la distance.

2. Procédé selon la revendication 1,
**caractérisé en ce**
**que** de manière alternative le fonctionnement de la machine de compactage du sol (1) est effectué dans un mode d'opérateur, dans lequel des consignes de déplacement prédéfinies par un opérateur par l'intermédiaire d'un dispositif d'entrée (7) pouvant être actionné manuellement sont transmises à l'unité de commande (10) et sont transmises par celle-ci sous la forme de signaux de commande de déplacement au système d'entraînement en déplacement de la machine de compactage du sol (1).

3. Procédé selon l'une des revendications précédentes,
**caractérisé en ce**
**que** la validation du mode d'autonomie n'a lieu que lorsque le dispositif de détection de paroi latérale (13) détecte, dans une zone dans la direction horizontale transversale à une direction de déplacement (A) de la machine de compactage du sol (1), la présence respectivement d'une paroi latérale (SW) en saillie depuis la surface d'appui de la machine de compactage du sol (1), en particulier de manière concomitante, des deux côtés de la machine de compactage du sol (1).

4. Procédé selon l'une des revendications précédentes,
**caractérisé en ce**
**que** la détection des parois latérales (SW) est effectuée sur les deux côtés de la machine de compactage du sol (1) de manière alternée ou concomitante.

5. Procédé selon l'une des revendications précédentes,
**caractérisé en ce**
**que** lorsque la machine de compactage du sol (1) se trouve en mode d'autonomie, un arrêt du fonctionnement de déplacement est effectué par l'unité de commande (10), lorsque le dispositif de détection de paroi latérale (13) ne détecte plus la présente de la paroi latérale (SW) en saillie depuis la surface d'appui de la machine de compactage du sol (1).

6. Procédé selon l'une des revendications précédentes,
**caractérisé en ce**
**que** lors du fonctionnement de déplacement en mode d'autonomie, en cas de perte brusque de la détection de la présente d'une paroi latérale (SW) par le dispositif de détection de paroi latérale (13), l'unité de commande (10) poursuit le fonctionnement de déplacement en mode d'autonomie même si (et tant que) la présente d'une paroi latérale (SW) est détectée au niveau d'un autre endroit (devant/derrière ; autre côté) par le dispositif de détection de paroi latérale (13).

7. Procédé selon l'une des revendications précédentes,
**caractérisé en ce**
**que** l'arrêt du fonctionnement de déplacement en mode d'autonomie est effectué lorsque le dispositif de détection de paroi latérale (13) détecte au moins l'un des scénarios suivants :
- la hauteur verticale de la paroi latérale (SW) détectée passe en dessous d'une valeur limite prédéfinie (en particulier depuis le sol) ; et/ou
- la distance horizontale de la paroi latérale (SW) détectée dans la direction horizontale transversale à une direction de déplacement vers l'avant de la machine de compactage du sol (1) passe au-dessus d'une valeur limite prédéfinie ; et/ou
- la distance horizontale de la paroi latérale (SW) détectée dans la direction horizontale transversale à une direction de déplacement vers l'avant de la machine de compactage du sol (1) passe en dessous d'une valeur limite prédéfinie.
**et/ou**
**que** la validation du fonctionnement de déplacement en mode d'autonomie est effectué lorsque le dispositif de détection de paroi latérale (13) détecte au moins l'un des scénarios suivants :
- la hauteur verticale de la paroi latérale (SW) détectée passe au-dessus d'une valeur limite prédéfinie (en particulier depuis le sol) ; et/ou
- la distance horizontale de la paroi latérale (SW) détectée dans la direction horizontale transversale à une direction de déplacement vers l'avant de la machine de compactage du sol (1) passe en dessous d'une valeur limite prédéfinie.

8. Procédé selon l'une des revendications précédentes,
**caractérisé en ce**
**qu**'une détection d'obstacles se trouvant dans la direction de déplacement (A) actuelle de la machine de compactage du sol (1) et/ou à l'opposé de celle-ci s'effectue à l'aide d'un dispositif de reconnaissance d'obstacles (17), dans lequel l'unité de commande (10) arrête le fonctionnement de déplacement en mode d'autonome en particulier lorsqu'un obstacle existant dans la direction de déplacement (A) et/ou à l'opposé de celle-ci est reconnu par le dispositif de reconnaissance d'obstacles (17).

9. Procédé selon l'une des revendications précédentes,
**caractérisé en ce**
**que** lorsque le machine de compactage du sol (1) se déplace en mode d'autonomie dans une direction de déplacement (A), l'unité de commande (10) génère un ordre d'inversion, par lequel la direction de déplacement (A) est commutée dans la direction de déplacement opposée (A), lorsque :
- un obstacle se trouvant dans la direction de déplacement (A) est détecté ;
- la fin d'un tronçon de déplacement prédéfini a été atteinte ;
- un élément de marquage externe (21a, 21b, 21c, 21d, 21e) pouvant être détecté par la machine de compactage du sol (1) au moyen d'un dispositif de détection (14k, 16k) est reconnu ;
- la détection de l'élément de marquage externe (21b, 21c, 21d, 21e) pouvant être détecté par la machine de compactage du sol (1) au moyen d'un dispositif de détection (14k, 16k) est interrompue ;
- une entrée est effectuée par l'intermédiaire du dispositif d'entrée (7) pouvant être actionné manuellement par un opérateur.

10. Procédé selon l'une des revendications précédentes,
**caractérisé en ce**
**que** l'unité de commande (10) commande un dispositif d'affichage (15) de manière à
a) afficher, si des conditions de validation pour le fonctionnement en mode d'autonomie sont remplies et/ou
b) afficher, que des conditions de validation pour le fonctionnement en mode d'autonomie ne sont plus remplies et/ou
c) afficher, si la machine de compactage du sol (1) fonctionne actuellement en mode d'autonomie et/ou
d) afficher, si une liaison de transmission de signal active existe et/ou n'existe plus avec une commande à distance (7) ;
e) afficher d'autres paramètres de fonctionnement, comme en particulier excitateur allumé/éteint, niveau de remplissage d'un réservoir etc.
f) afficher la position actuelle de la machine de compactage du sol (1).

11. Machine de compactage du sol autonome (1), comprenant
- une unité d'entraînement (4), par l'intermédiaire de laquelle l'énergie d'entraînement nécessaire pour un fonctionnement de déplacement de la machine de compactage du sol (1) est prévue,
- un dispositif de contact avec le sol (6), par l'intermédiaire duquel un compactage du sous-sol est effectué,
- une unité de commande (10), qui commande le fonctionnement de déplacement de la machine de compactage du sol (1),
qu'elle présente un dispositif de détection de paroi latérale (13), qui est conçu pour détecter, dans une zone dans la direction horizontale transversale à une direction de déplacement vers l'avant de la machine de compactage du sol (1), la présence d'une paroi latérale (SW) en saillie par rapport à la surface d'appui de la machine de compactage du sol (1) dans la direction verticale,
et que l'unité de commande (10) est conçue de telle sorte qu'elle commande le fonctionnement de déplacement de la machine de compactage du sol (1) dans un mode d'autonomie, dans laquelle en mode d'autonomie, des consignes de déplacement sont indiquées par l'unité de commande (10),
dans laquelle en outre un dispositif de validation est présent, qui valide ou bloque le mode d'autonomie, qui est conçu de telle sorte qu'une validation du mode d'autonomie n'est effectuée que dans des situations de fonctionnement, dans lesquelles le dispositif de détection de paroi latérale (13) détecte la présence concomitante d'une paroi latérale (SW) se trouvant transversale à la direction d'avance de la machine de compactage du sol (1)
**caractérisée en ce**
**que** l'unité de commande (10) est conçue, lors du fonctionnement de déplacement en mode d'autonomie, en cas de perte brusque de la détection de la présence d'une paroi latérale (SW) par le dispositif de détection de paroi latérale (13), pour poursuivre le fonctionnement de déplacement en mode d'autonomie en fonction du temps et/ou de la distance.

12. Machine de compactage du sol (1) selon la revendication 11,
**caractérisée en ce**
**que** la machine de compactage du sol peut fonctionner de manière alternative dans un mode d'opérateur, dans lequel les consignes de déplacement sont prédéfinies par un opérateur par l'intermédiaire d'un dispositif d'entrée pouvant être actionné manuellement de l'unité de commande (10).

13. Machine de compactage du sol (1) selon l'une des revendications 11 ou 12,
**caractérisée en ce**
**que** le dispositif de détection de paroi latérale (13) est conçu de telle sorte
- **qu'**il détecte la présence respectivement d'une paroi latérale (SW) des deux côtés de la machine de compactage du sol (1) et/ou
- **qu'**il présente au moins deux capteurs de distance (14), dont les zones de détection sont au moins partiellement orientées respectivement dans la direction d'un des deux côtés de la machine de compactage du sol (1) et/ou
- qu'il présente sur au moins un côté de la machine de compactage du sol (1) au moins un capteur de distance (14), par l'intermédiaire duquel la distance de la machine de compactage du sol (1) à une paroi latérale (SW) en saillie à côté de la machine de compactage du sol (1) peut être déterminée et/ou
- **qu'**il présente sur les deux côtés de la machine de compactage du sol (1) respectivement au moins un capteur de distance (14), par l'intermédiaire desquels la distance de la machine de compactage du sol (1) à des parois latérales en saillie à côté de la machine de compactage du sol (1) sur l'un des deux côtés peut être déterminée et/ou
- qu'il présente sur au moins un côté de la machine de compactage du sol (1) au moins deux capteurs de distance (14), qui sont disposés l'un par rapport à l'autre de telle sorte que leurs zones de détection vues dans une direction de déplacement de la machine de compactage du sol (1) s'étendent au moins partiellement l'une derrière l'autre et/ou
- **qu'**il présente au moins deux capteurs de distance (14) avec leurs zones de détection orientées vers un côté de la machine de compactage du sol (1), dans laquelle les capteurs de distance sont orientés l'un par rapport à l'autre de telle sorte que leurs zones de détection vues dans la direction verticale de la machine de compactage du sol (1) s'étendent au moins partiellement l'une sur l'autre et/ou
- qu'il présente sur au moins un côté de la machine de compactage du sol (1) au moins deux capteurs de distance (14), dans laquelle les deux capteurs de distance (14) réalisent une mesure de distance de manière différente l'un par rapport à l'autre.

14. Machine de compactage du sol (1) selon l'une des revendications 11 à 13,
**caractérisée en ce**
**que** lorsque le dispositif de détection de paroi latérale (13) présente au moins un capteur de distance (14), qui est disposé sur la machine de compactage du sol (1) de manière à être orienté par rapport à sa direction de visée et/ou sa zone de détection au moins partiellement en biais ou parallèlement au plan horizontal vers le côté de la machine de compactage du sol (1)

15. Machine de compactage du sol (1) selon l'une des revendications 11 à 14,
**caractérisée en ce**
**qu**'au moins un capteur (16) est présent, qui est conçu pour la détection d'une zone de trouvant dans la direction de déplacement (A) devant et/ou derrière la machine de compactage du sol (1), en particulier dans le trajet de déplacement (F) de la machine de compactage du sol (1).

16. Machine de compactage du sol (1) selon l'une des revendications 11 à 15,
**caractérisée en ce**
**qu**'un dispositif (14k, 16k) pour la détection d'au moins un marquage externe et/ou virtuel est présent.

17. Machine de compactage du sol (1) selon l'une des revendications 11 à 16,
**caractérisée en ce**
**qu**'un dispositif d'affichage pour l'affichage d'au moins l'un des paramètres suivants est présent :
- le mode d'autonomie est allumé et/ou éteint ; (il en va de même pour le mode d'opérateur)
- le mode d'autonomie est actif et/ou inactif ;
- la présente d'une paroi latérale (SW) est actuellement reconnue et/ou non reconnue ;
- un obstacle existant dans la direction de déplacement (A) devant etlou derrière la machine de compactage du sol (1) a été reconnu et/ou non reconnu ;
- il existe une liaison de signal active et/ou inactive avec une commande à distance (7).

18. Machine de compactage du sol (1) selon l'une des revendications 11 à 17 et dispositif d'entrée pouvant être actionné manuellement, en particulier commande à distance (7),
**caractérisée en ce**
**que** le dispositif d'entrée pouvant être actionné manuellement présente un dispositif d'affichage pour l'affichage d'au moins l'un des paramètres de fonctionnement suivants :
- le mode d'autonomie est allumé et/ou éteint ;
- le mode d'autonomie est actif et/ou inactif ;
- la présente d'une paroi latérale (SW) est actuellement reconnue et/ou non reconnue ;
- au moins une distance actuellement déterminée vers une paroi latérale (SW) détectée par le dispositif de détection de paroi latérale (13) (deux côtés etc.) ;
- un obstacle existant dans la direction de déplacement (A) devant et/ou derrière la machine de compactage du sol (1) a été reconnu et/ou non reconnu ;
- il existe une liaison de signal active et/ou inactive avec une commande à distance (7).

19. Machine de compactage du sol (1) selon l'une des revendications 11 à 18,
**caractérisée en ce**
**que** la machine de compactage du sol (1) un rouleau de tranchée ou une plaque vibrante.

20. Machine de compactage du sol (1) selon l'une des revendications 11 à 19,
**caractérisée en ce**
**qu**'elle est conçue pour la réalisation d'un procédé selon l'une des revendications 1 à 10.
